(19) Europäisches Patentamt
European Patent Office
Office européen des brevets

(11) Veröffentlichungsnummer: **0 492 236 B1**

(12) **EUROPÄISCHE PATENTSCHRIFT**

(45) Veröffentlichungstag der Patentschrift: **02.08.95**

(51) Int. Cl.$^{6}$: **C09B 62/78**, D06P 1/38

(21) Anmeldenummer: **91121040.9**

(22) Anmeldetag: **09.12.91**

(54) **Reaktivfarbstoffe mit einem Anker auf Alkenyl- oder Alkinylsulfonylbasis.**

(30) Priorität: **24.12.90 DE 4041729**
**24.12.90 DE 4041764**

(43) Veröffentlichungstag der Anmeldung:
**01.07.92 Patentblatt 92/27**

(45) Bekanntmachung des Hinweises auf die Patenterteilung:
**02.08.95 Patentblatt 95/31**

(84) Benannte Vertragsstaaten:
**CH DE FR GB IT LI**

(56) Entgegenhaltungen:
**US-A- 4 885 360**

(73) Patentinhaber: **BASF Aktiengesellschaft**
**Carl-Bosch-Strasse 38**
**D-67063 Ludwigshafen (DE)**

(72) Erfinder: **Marschner, Claus, Dr.**
**Franz-Boegler-Weg 3**
**W-6720 Speyer (DE)**
Erfinder: **Niedenbrueck, Matthias, Dr.**
**Altholzweg 25**
**W-6700 Ludwigshafen (DE)**
Erfinder: **Siegel, Bernd, Dr.**
**Faberstrasse 39**
**W-6700 Ludwigshafen (DE)**
Erfinder: **Patsch, Manfred, Dr.**
**Fritz-Wendel-Strasse 4**
**W-6706 Wachenheim (DE)**
Erfinder: **Pandl, Klaus, Dr.**
**Kettlerstrasse 19**
**W-6700 Ludwigshafen (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 492 236 B1

## Beschreibung

Die vorliegende Erfindung betrifft Reaktivfarbstoffe der Formel I

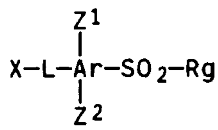 (I),

in der

Rg die Bedeutung eines Restes der Formel

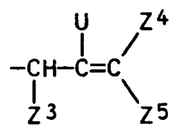 oder 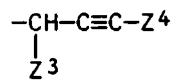

besitzt und

Ar den Rest eines Benzol- oder Naphthalinringes,

$Z^1$ und $Z^2$ gleich oder verschieden sind und unabhängig voneinander jeweils Wasserstoff, gegebenenfalls durch Amino oder $C_1$-$C_4$-Alkanoylamino substituiertes $C_1$-$C_4$-Alkyl, gegebenenfalls substituiertes Phenyl, $C_1$-$C_4$-Alkoxy, Carboxyl, $C_1$-$C_4$-Alkoxycarbonyl, Cyano, Halogen oder Hydroxysulfonyl,

$Z^3$, $Z^4$ und $Z^5$ gleich oder verschieden sind und unabhängig voneinander jeweils Wasserstoff, gegebenenfalls durch Hydroxy oder $C_1$-$C_4$-Alkoxy substituiertes $C_1$-$C_4$-Alkyl oder gegebenenfalls substituiertes Phenyl,

U eine unter alkalischen Reaktionsbedingungen abspaltbare Gruppe,

X im Fall a) den Rest eines Chromophors, der gegebenenfalls weitere reaktive Gruppen aufweist und der sich von einem gegebenenfalls metallisierten Mono- oder Disazofarbstoff, einem Triphendioxazin, einem Anthrachinon, einem metallisierten Formazan oder einem metallisierten Phthalocyanin ableitet, oder
im Fall b) den Rest einer Kupplungskomponente, an den gegebenenfalls zusätzlich der Rest einer Diazokomponente über eine Azobrücke gebunden ist und der gegebenenfalls zusätzliche reaktive Gruppen aufweist, und

L im Fall a) ein Brückenglied der Formel

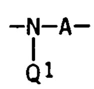 oder 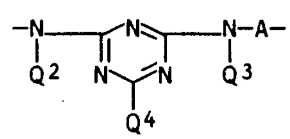 ,

worin $Q^1$ für Wasserstoff oder $C_1$-$C_4$-Alkyl, $Q^2$ und $Q^3$ gleich oder verschieden sind und unabhängig voneinander jeweils für Wasserstoff oder $C_1$-$C_4$-Alkyl, $Q^4$ für eine Austrittsgruppe und A für eine chemische Bindung oder $C_1$-$C_4$-Alkylen stehen, oder
im Fall b) eine Azobrücke bedeuten

sowie ein Verfahren zum Färben oder Bedrucken von Hydroxygruppen oder Stickstoff enthaltenden Substraten mittels der neuen Farbstoffe.

Aufgabe der vorliegenden Erfindung war es, neue Reaktivfarbstoffe mit vorteilhaften anwendungstechnischen Eigenschaften bereitzustellen. Die neuen Farbstoffe sollten sich insbesondere für das Auszieh- und Kaltverweilverfahren eignen und sollten sich vor allem durch hohe Ausgiebigkeit, hohe Naßechtheiten und brillante Färbungen auszeichnen. Außerdem sollten die nicht auf der Faser fixierten Anteile leicht auswaschbar sein.

Demgemäß wurden die Reaktivfarbstoffe der obengenannten Formel I gefunden.

Alle in der obengenannten Formel I auftretenden Alkyl- und Alkylenreste können sowohl geradkettig als auch verzweigt sein.

U in Formel I steht für eine unter alkalischen Reaktionsbedingungen abspaltbare Gruppe. Solche Gruppen sind z.B. Chlor, Brom, $C_1$-$C_4$-Alkylsulfonyl, Phenylsulfonyl, $OSO_3H$, $SSO_3H$, $OP(O)(OH)_2$, $C_1$-$C_4$-Alkylsulfonyloxy, gegebenenfalls substituiertes Phenylsulfonyloxy, $C_1$-$C_4$-Alkanoyloxy, $C_1$-$C_4$-Dialkylamino oder ein Rest der Formel

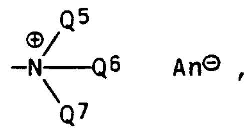 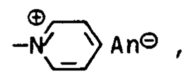 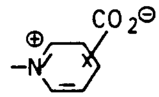 oder 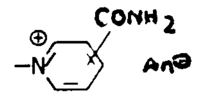

wobei $Q^5$, $Q^6$ und $Q^7$ gleich oder verschieden sind und unabhängig voneinander jeweils die Bedeutung von $C_1$-$C_4$-Alkyl oder Benzyl und $An^{\ominus}$ jeweils die Bedeutung eines Anions besitzen. Als Anion $An^{\ominus}$ kann dabei z.B. Fluorid, Chlorid, Bromid, Iodid, Mono-, Di- oder Trichloracetat, Methylsulfonat, Phenylsulfonat oder 2- oder 4-Methylphenylsulfonat in Betracht kommen.

$Q^4$ in Formel I steht für eine Austrittsgruppe. Solche Austrittsgruppen sind beispielsweise Fluor, Chlor, Brom oder ein Rest der Formel

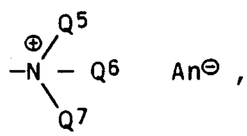

worin $Q^5$, $Q^6$, $Q^7$ und $An^{\ominus}$ jeweils die obengenannte Bedeutung besitzen. Vorzugsweise bedeutet $Q^4$ Fluor, Chlor oder Brom.

Reste $Z^1$, $Z^2$, $Z^3$, $Z^4$, $Z^5$, $Q^1$, $Q^2$, $Q^3$, $Q^5$, $Q^6$ und $Q^7$ stehen beispielsweise für Methyl, Ethyl, Propyl, Isopropyl, Butyl, Isobutyl oder sec-Butyl.

Reste $Z^1$, $Z^2$, $Z^3$, $Z^4$ und $Z^5$ sind weiterhin, z.B. Phenyl, 2- oder 4-Methylphenyl, 2,4-Dimethylphenyl, 2- oder 4-chlorphenyl, 2,4-Dichlorphenyl, 2- oder 4-Methoxyphenyl oder 2,4-Dimethoxyphenyl.

Reste $Z^1$ und $Z^2$ sind weiterhin, z.B. Fluor, Chlor, Brom, Methoxy, Ethoxy, Propoxy, Isopropoxy, Butoxy, Isobutoxy, sec-Butoxy, Aminomethyl, 2-Aminoethyl, 2- oder 3-Aminopropyl, 2- oder 4-Aminobutyl, Formylaminomethyl, Acetylaminomethyl, Propionylaminomethyl, 2-Formylaminoethyl, 2-Acetylaminomethyl, 2-Propionylaminoethyl, 2- oder 3-Formylaminopropyl, 2- oder 3-Acetylaminopropyl, 2- oder 3-Propionylaminopropyl, 2- oder 4-Formylaminobutyl, 2- oder 4-Acetylaminobutyl, 2- oder 4-Propionylaminobutyl, Methoxycarbonyl, Ethoxycarbonyl, Propoxycarbonyl, Isopropoxycarbonyl oder Butoxycarbonyl.

Reste $Z^3$, $Z^4$ und $Z^5$ sind weiterhin z.B. Hydroxymethyl, 2-Hydroxyethyl, 2- oder 3-Hydroxypropyl, 2- oder 4-Hydroxybutyl, Methoxymethyl, Ethoxymethyl, 2-Methoxyethyl, 2-Ethoxyethyl, 2- oder 3-Methoxypropyl, 2- oder 3-Ethoxypropyl, 2- oder 4-Methoxybutyl oder 2- oder 4-Ethoxybutyl.

Reste A sind z.B. Methylen, Ethylen, 1,2- oder 1,3-Propylen oder 1,2-, 1,3-, 1,4- oder 2,3-Butylen.

Der faserreaktive Ankerrest der Formel II

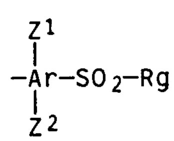 (II),

in der Ar, $Z^1$, $Z^2$ und Rg jeweils die obengenannte Bedeutung besitzen, wird im folgenden als "E" bezeichnet.

Bevorzugt sind Reaktivfarbstoffe der Formel Ia

X-L-$E^1$ (Ia),

in der X und L jeweils die obengenannte Bedeutung besitzen und $E^1$ für einen Rest der Formel IIa

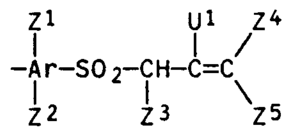 (IIa)

steht, in der

$U^1$ Halogen bedeutet und Ar, $Z^1$, $Z^2$, $Z^3$, $Z^4$ und $Z^5$ jeweils die obengenannte Bedeutung besitzen.

Bevorzugt sind weiterhin Reaktivfarbstoffe der Formel Ia

$X$-$L$-$E^1$ (Ia),

in der X und L jeweils die obengenannte Bedeutung besitzen und $E^1$ für einen Rest der Formel IIb

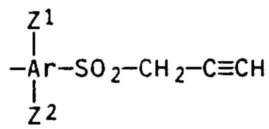 (IIb)

steht, in der Ar, $Z^1$ und $Z^2$ jeweils die obengenannte Bedeutung besitzen.

Hervorzuheben sind Reaktivfarbstoffe, die der Formel Ia

$X$-$L$-$E^1$ (Ia)

entsprechen, in der X und L jeweils die obengenannte Bedeutung besitzen und $E^1$ für einen Rest der Formel IIc

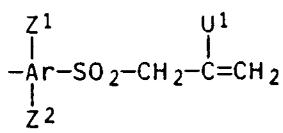 (IIc)

steht, in der $U^1$ Halogen bedeutet und Ar, $Z^1$ und $Z^2$ jeweils die obengenannte Bedeutung besitzen.

Neben dem Ankersystem E kann der Rest X noch weitere faserreaktive Reste tragen. Solche Reste leiten sich z.B. von Triazin-, Pyrimidin-, Pyridazinon- oder Alkenylsulfonylverbindungen ab.

X in Formel I stellt z.B. den Rest einer Kupplungskomponente dar, an den gegebenenfalls zusätzlich der Rest einer Diazokomponente über eine Azobrücke gebunden ist und der gegebenenfalls zusätzliche reaktive Gruppen aufweist. In diesem Fall ist der Ankerrest E über eine Azobrücke (-N = N-) an den Rest X geknüpft.

Farbstoffe dieser Klasse gehorchen der Formel IVa oder IVb

$(E\text{-}N=N\text{-})_aK$ (IVa)

$E\text{-}N=N\text{-}K\text{-}N=N\text{-}D$ (IVb),

wobei K den Rest einer Kupplungskomponente, D den Rest einer Diazokomponente und a 1 oder 2 bedeuten und E die obengenannte Bedeutung besitzt.

Wertvolle Farbstoffe dieser Klasse sind z.B. wasserlösliche Azofarbstoffe, insbesondere Monoazofarbstoffe der Formel IVa (a = 1) oder Disazofarbstoffe der Formel IVa (a = 2) oder IVb, die Hydroxysulfonyl- und/oder Carboxylgruppen aufweisen.

Wichtige Kupplungskomponenten HK leiten sich z.B. von Verbindungen aus der Benzol-, Naphthalin-, Pyrazolon-, Pyridon- oder Hydroxypyrimidinreihe ab.

Wichtige Diazokomponenten $D$-$NH_2$ leiten sich z.B. von Verbindungen aus der Anilin- oder Aminonaphthalinreihe ab.

Besonders bevorzugt sind Farbstoffe der Formel V

$E^1$-N = N-$K^1$ (V),

in der $E^1$ die obengenannte Bedeutung besitzt und $K^1$ für den Rest einer Kupplungskomponente der Benzol-, Naphthalin-, Pyrazol-, Pyridon- oder Hydroxypyrimidinreihe steht, der gegebenenfalls weitere faserreaktive Gruppen aufweist, insbesondere die Gruppe E, die Vinylsulfonylgruppe, die Gruppe der Formel U-$C_2H_4$-$SO_2$-, worin U die obengenannte Bedeutung besitzt, oder solche der Halogentriazinreihe.

Besonders wertvoll sind Farbstoffe der Formel VI

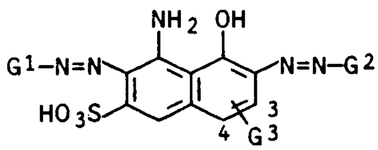

(VI),

in der einer der beiden Reste $G^1$ und $G^2$ für den Rest $E^1$, wobei dieser die obengenannte Bedeutung besitzt, und der andere für den Rest $D^1$, wobei dieser die Bedeutung eines Rest einer Diazokomponente der Anilin- oder Naphthalinreihe besitzt, der gegebenenfalls weitere faserreaktive Gruppen, insbesondere die Gruppe E, die Vinylsulfonylgruppe, die Gruppe der Formel U-$C_2H_4$-$SO_2$-, worin U die obengenannte Bedeutung besitzt, oder solche der Halogentriazinreihe, aufweist, und $G^3$ für Hydroxysulfonyl in Ringposition 3 oder 4 stehen.

X in Formel I stellt weiterhin z.B. den gegebenenfalls metallisierten Rest eines Azofarbstoffs dar. Geeignete Azofarbstoffe, von denen sich solche Reste ableiten, sind an sich bekannt und in großer Zahl beschrieben, z. B. in K. Venkataraman "The Chemistry of Synthetic Dyes", Vol. VI, Academic Press, New York, London, 1972. Die Azofarbstoffe gehorchen der Formel VII

D-N = N-K (-N = N-D)$_l$ (VII),

in der D den Rest einer Diazokomponente, K den Rest einer Kupplungskomponente und l 0 oder 1 bedeuten.

Wertvolle Farbstoffe, von denen sich der Rest X ableitet, sind z.B. wasserlösliche Azofarbstoffe, insbesondere Monoazofarbstoffe der Formel VII (l = 0), die Hydroxysulfonyl- und/oder Carboxylgruppen aufweisen können.

Bevorzugt leitet sich der Rest X ab von nichtmetallisierten Azofarbstoffen, insbesondere von solchen, die Sulfonsäure- und/oder Carboxylgruppen enthalten, wobei jene, die 1 bis 6 Sulfonsäuregruppen aufweisen, besonders hervorzuheben sind.

Wichtige Azofarbstoffe, von denen sich der Rest X ableitet, sind beispielsweise solche der Phenyl-azo-naphthalin-, Phenyl-azo-(1-phenylpyrazol-5-on)-,Phenyl-azo-benzol-, Naphthyl-azo-benzol-, Phenyl-azoaminonaphthalin-,Naphthyl-azo-naphthalin-, Naphthyl-azo-(1-phenylpyrazol-5-on)-, Phenyl-azo-pyridon-, Phenyl-azo-aminopyridin-, Naphthylazo-pyridon-, Naphthyl-azo-aminopyridin- oder Stilbyl-azo-benzolreihe.

Besonders bevorzugt sind Reaktivfarbstoffe der Formel VIII

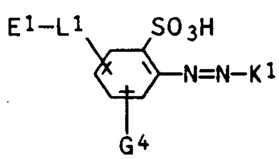

(VIII),

in der $E^1$ die obengenannte Bedeutung besitzt,
$L^1$ den Rest der Formel

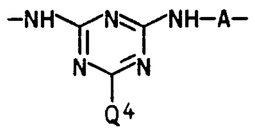

,

worin A und $Q^4$ jeweils die obengenannte Bedeutung besitzt, $G^4$ Wasserstoff, $C_1$-$C_4$-Alkyl, $C_1$-$C_4$-Alkoxy, Chlor, oder Hydroxysulfonyl, und $K^1$ den Rest einer Kupplungskomponente der Naphthalin-, Pyrazolon-, Pyridon- oder Hydroxypyrimidinreihe, der gegebenenfalls weitere faserreaktive Gruppen, insbesondere die Vinylsulfonylgruppe, die Gruppe der Formel $U$-$C_2H_4$-$SO_2$-, worin U die obengenannte Bedeutung besitzt, oder solche der Halogentriazinreihe, aufweist, bedeuten.

Weiterhin besonders bevorzugt sind Reaktivfarbstoffe der Formel IX

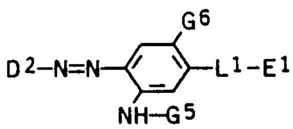

(IX),

in der $E^1$ und $L^1$ jeweils die obengenannte Bedeutung besitzen, $G^5$ für $C_1$-$C_4$-Alkanoyl, Carbamoyl, $C_1$-$C_4$-Mono- oder Dialkylcarbamoyl, Phenylcarbamoyl oder Cyclohexylcarbamoyl, $G^6$ für Wasserstoff, $C_1$-$C_4$-Alkyl, $C_1$-$C_4$-Alkoxy, Hydroxysulfonyl oder Chlor und $D^2$ für den Rest einer Diazokomponente der Anilin- oder Naphthalinreihe, der keine weitere faserreaktive Gruppe trägt, stehen.

Weiterhin besonders bevorzugt sind Reaktivfarbstoffe der Formel X

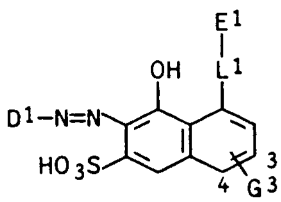

(X),

in der $D^1$, $E^1$ und $L^1$ jeweils die obengenannte Bedeutung besitzen und $G^3$ für Hydroxysulfonyl in Ringposition 3 oder 4 steht.

Weiterhin besonders bevorzugt sind Reaktivfarbstoffe der Formel XI

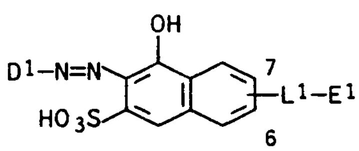

(XI),

in der $D^1$, $E^1$ und $L^1$ jeweils die obengenannte Bedeutung besitzen und die Gruppe -L-$E^1$ in Ringposition 6 oder 7 steht.

Weiterhin sind wertvolle Verbindungen solche der Formel XII

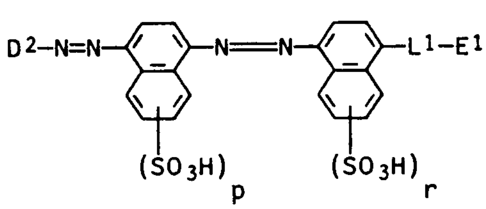

(XII),

in der $D^2$, $E^1$ und $L^1$ jeweils die obengenannte Bedeutung besitzen und p und r unabhängig voneinander jeweils für 0,1 oder 2 stehen.

Weiterhin sind wertvolle Verbindungen solche der Formel XIII

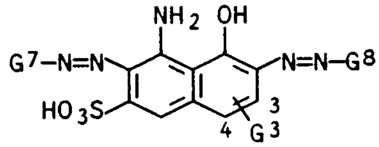

(XIII),

in der $G^3$ die obengenannte Bedeutung besitzt und einer der beiden Reste $G^7$ und $G^8$ für den Rest $D^1$, wobei dieser die obengenannte Bedeutung besitzt,
und der andere für den Rest

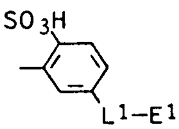

oder auch beide Reste $G^7$ und $G^8$ für den Rest

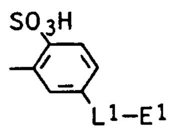

,

wobei $L^1$ und $E^1$ jeweils die obengenannte Bedeutung besitzen, stehen.

Solche aromatischen Reste $D^1$ und $D^2$ von Diazokomponenten der Anilin- oder Aminonaphthalinreihe, die keine faserreaktiven Gruppen tragen, leiten sich beispielsweise von Aminen der Formel XIV a-f

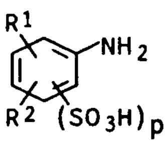

, (XIVa)

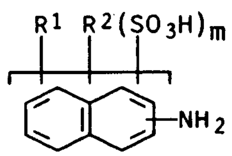

, (XIVb)

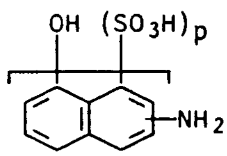

, (XIVc)

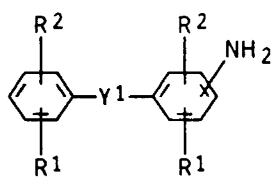

, (XIVd)

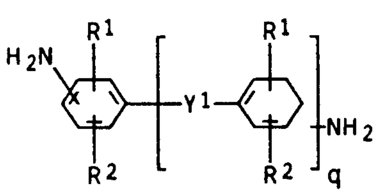

, (XIVe)

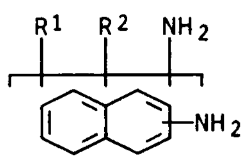

(XIVf)

ab, wobei

- m 0, 1, 2 oder 3,
- P 0, 1 oder 2,
- q 0 oder 1,
- $R^1$ Wasserstoff, Methyl, Ethyl, Methoxy, Ethoxy, Acetyl, Cyano, Carboxyl, Hydroxysulfonyl, $C_1$-$C_4$-Alkoxycarbonyl, Hydroxy, Carbamoyl, $C_1$-$C_4$-Mono- oder Dialkylcarbamoyl, Fluor, Chlor, Brom, Hydroxysulfonylmethyl oder Trifluormethyl,
- $R^2$ Wasserstoff, Methyl, Ethyl, Methoxy, Ethoxy, Cyano, Carboxyl, Hydroxysulfonyl, Acetylamino, Methylsulfonylamino, $C_1$-$C_4$-Alkoxycarbonyl,Carbamoyl, $C_1$-$C_4$-Mono- oder Dialkylcarbamoyl, Flu-

or, Chlor, Nitro, Sulfamoyl, $C_1$-$C_4$-Mono- oder Dialkylsulfamoyl, das gegebenenfalls durch Sulfato substituiert ist, $C_1$-$C_4$-Alkylsulfonyl, Phenylsulfonyl oder Phenoxy und

$Y^1$ eine direkte Bindung, Sauerstoff, Schwefel oder die Gruppe -NHCO-, NH-CO-NH, -CONH-, -CO-, $-NHSO_2-$, $-SO_2NH-$, $-SO_2-$, -CH = CH-, $-CH_2-CH_2-$, $-CH_2-$, -NH-, oder -N = H- bedeuten.

Bevorzugt sind dabei solche Komponenten, in denen $R^1$ Wasserstoff, Methyl, Methoxy, Carboxyl, Hydroxysulfonyl, Hydroxy oder Chlor, $R^2$ Wasserstoff, Methyl, Methoxy, Carboxyl, Hydroxysulfonyl, Acetylamino oder Chlor und $Y^1$ die Gruppe -CO-, $-SO_2-$, -CH = CH-, $-CH_2-CH_2-$, $-CH_2$-oder -N = N- bedeuten.

Aromatische Amine, die sich als Diazokomponenten eignen und die der Formel XIVa, XIVb, XIVc oder XIVd entsprechen, sind beispielsweise Anilin, 2-Methoxyanilin, 2-Methylanilin, 4-Chlor-2-aminoanisol, 4-Methylanilin, 4-Methoxyanilin, 2-Methoxy-5-methylanilin, 2,5-Dimethoxyanilin, 2,5-Dimethylanilin, 2,4-Dimethylanilin, 2,5-Diethoxyanilin, 2-Chloranilin, 3-Chloranilin, 4-Chloranilin, 2,5-Dichloranilin, 4-Chlor-2-nitroanilin, 4-Chlor-2-methylanilin, 3-Chlor-2-methylanilin, 4-Chlor-2-aminotoluol, 4-Phenylsulfonylanilin, 2-Ethoxy-1-naphthylamin, 1-Naphthylamin, 2-Naphthylamin, 4-Methylsulfonylanilin, 2,4-Dichloranilin-5-carbonsäure, 2-Aminobenzoesäure, 4-Aminobenzoesäure, 3-Aminobenzoesäure, 3-Chloranilin-6-carbonsäure, Anilin-2- oder -3- oder -4-sulfonsäure, Anilin-2,5-disulfonsäure, Anilin-2,4-disulfonsäure, Anilin-3,5-disulfonsäure, 2-Aminotoluol-4-sulfonsäure, 2-Aminoanisol-4-sulfonsäure, 2-Aminoanisol-5-sulfonsäure, 2-Ethoxyanilin-5-sulfonsäure, 2-Ethoxyanilin-4-sulfonsäure, 4-Hydroxysulfonyl-2-aminobenzoesäure, 2,5-Dimethoxyanilin-4-sulfonsäure, 2,4-Dimethoxyanilin-5-sulfonsäure, 2-Methoxy-5-methylanilin-4-sulfonsäure, 4-Aminoanisol-3-sulfonsäure, 4-Aminotoluol-3-sulfonsäure, 2-Aminotoluol-5-sulfonsäure, 2-Chloranilin-4-sulfonsäure, 2-Chloranilin-5-sulfonsäure, 2-Bromanilin-4-sulfonsäure, 2,6-Dichloranilin-4-sulfonsäure, 2,6-Dimethylanilin-3-, oder -4-sulfonsäure, 3-Acetylamino-6-sulfonsäure, 4-Acetylamino-2-hydroxysulfonylanilin, 1-Aminonaphthalin-4-sulfonsäure, 1-Aminonaphthalin-3-sulfonsäure, 1-Aminonaphthalin-5-sulfonsäure, 1-Aminonaphthalin-6-sulfonsäure, 1-Aminonaphthalin-7-sulfonsäure, 1-Aminonaphthalin-3,7-disulfonsäure, 1-Aminonaphthalin-3,6,8-trisulfonsäure, 1-Aminonaphthalin-4,6,8-trisulfonsäure, 2-Napththylamin-5-sulfonsäure oder -6- oder -8-sulfonsäure, 2-Aminonaphthalin-3,6,8-trisulfonsäure, 2-Aminonaphthalin-6,8-disulfonsäure, 2-Aminonaphthalin-1,6-disulfonsäure, 2-Aminonaphthalin-1-sulfonsäure, 2-Aminonaphthalin-1,5-disulfonsäure, 2-Aminonapthalin-3,6-disulfonsäure, 2-Aminonaphthalin-4,8-disulfonsäure, 2-Aminophenol-4-sulfonsäure, 2-Aminophenol-5-sulfonsäure, 3-Aminophenol-6-sulfonsäure, 1-Hydroxy-2-aminonaphthalin-5,8-oder -4,6-disulfonsäure, 4-Aminodiphenylamin, 4-Amino-4'-methoxydiphenylamin, 4-Amino-4'-methoxydiphenylamin-3-sulfonsäure, 4-(2'-Methyl-phenylazo)-2-methylanilin, 4-Aminoazobenzol, 4'-Nitrophenylazo-1-aminonaphthalin, 4-(6'-Hydroxysulfonylnaphthylazo)-1-aminonaphthalin, 4-(2',5'-Dihydroxysulfonylphenylazo)-1-aminonaphthalin, 4'-Amino-3'-methyl-3-nitrobenzophenon, 4-Aminobenzophenon, 4-(4'-Aminophenylazo)benzolsulfonsäure, 4-(4'-Amino-3'-methoxyphenylazo)-benzolsulfonsäure oder 2-Ethoxy-1-naphthylamin-6-sulfonsäure.

Aromatische Diamine, die sich als Tetrazokomponenten eignen und die der Formel XIVe oder XIVf entsprechen, sind beispielsweise 1,3-Diaminobenzol, 1,3-Diaminobenzol-4-sulfonsäure, 1,4-Diaminobenzol, 1,4-Diaminobenzol-2-sulfonsäure, 1,4-Diamino-2-methylbenzol, 1,4-Diamino-2-methoxybenzol, 1,3-Diamino-4-methylbenzol, 1,3-Diaminobenzol-5-sulfonsäure, 1,3-Diamino-5-methylbenzol, 1,6-Diaminonaphthalin-4-sulfonsäure, 2,6-Diaminonaphthalin-4,8-disulfonsäure, 3,3'-Diaminodiphenylsulfon, 4,4'-Diaminodiphenylsulfon, 4,4'-Diaminostilben-2,2'-disulfonsäure, 2,7'Diaminodiphenylsulfon, 2,7'-Diaminodiphenylsulfon-4,5-disulfonsäure, 4,4'-Diaminobenzophenon, 4,4'-Diamino-3,3'-dinitrobenzophenon, 3,3'-Diamino-4,4'-dichlorbenzophenon, 4,4'- oder 3,3'-Diaminodiphenyl, 4,4'-Diamino-3,3'-dichlordiphenyl, 4,4'-Diamino-3,3'-dimethoxy- oder -3,3'-dimethyl- oder -2,2'-dimethyl- oder -2,2'-dichlor- oder - 3,3'-diethoxydiphenyl, 4,4'-Diamino-3,3'-dimethyl-6,6'-dinitrodiphenyl, 4,4'-Diaminodiphenyl-2,2'- oder -3,3'-disulfonsäure, 4,4'-Diamino-3,3'-dimethyl- oder -3,3'-dimethoxy oder -2,2'-dimethoxydiphenyl-6,6'-disulfonsäure, 4,4'-Diamino-2,2', 5,5'-tetrachlordiphenyl, 4,4'-Diamino-3,3'-dinitrodiphenyl, 4,4'-Diamino-2,2'-dichlor-5,5'-dimethoxydiphenyl, 4,4'-Diaminodiphenyl-2,2'- oder -3,3'-dicarbonsäure, 4,4'-Diamino-3,3'-dimethyldiphenyl-5,5'-disulfonsäure, 4,4'-Diamino-2-nitrodiphenyl, 4,4'-Diamino-3-ethoxy- oder -3-hydroxysulfonyldiphenyl, 4,4'-Diamino-3,3'-dimethyldiphenyl-5-sulfonsäure, 4-4'-Diaminodiphenylmethan, 4,4'-Diamino-3,3'-dimethyldiphenylmethan, 4,4'-Diamino-2,2', 3,3'-tetramethyldiphenylmethan, 4,4'-Diaminodiphenylethan, 4,4'-Diaminostilben oder 4,4'-Diaminodiphenylmethan-3,3'-dicarbonsäure.

Solche aromatischen Reste $D^1$ von Diazokomponenten aus der Anilin- oder Aminonaphthalinreihe, die weitere faserreaktive Reste tragen können, leiten sich beispielsweise von Aminen der Formel XVa-c

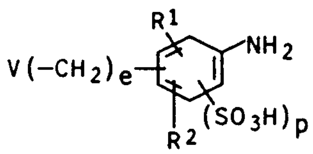, 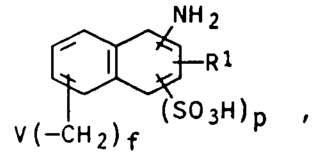, 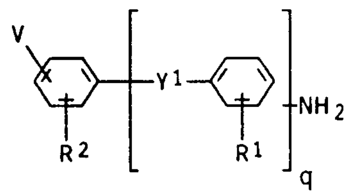

(XVa) (XVb) (XVc)

ab, in denen $R^1$, $R^2$, p, q und $Y^1$ jeweils die obengenannte Bedeutung besitzen und e und f gleich oder verschieden sind und unabhängig voneinander jeweils 0 oder 1 und V einen faserreaktiven Rest bedeuten.

Faserreaktive Reste V leiten sich beispielsweise vom Rest E oder, wie oben bereits ausgeführt, z.B. von Triazin-, Pyrimidin-, Pyridazinon- oder Alkenylsulfonylverbindungen ab.

Insbesondere gehorchen die faserreaktiven Reste V der Formel

E-L-, $-SO_2-C_2H_4-U$, $-SO_2-CH=CH_2$,

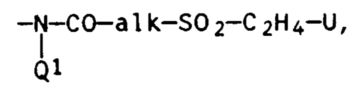

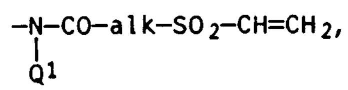 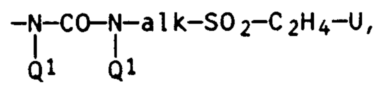

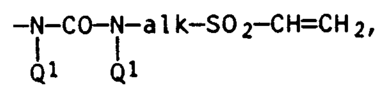 oder

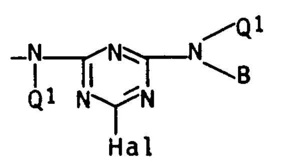,

wobei E, L, U und $Q^1$ jeweils die obengenannte Bedeutung besitzen und

- alk $C_1$-$C_4$-Alkylen,
- Hal Fluor, Chlor oder Brom und
- B $C_1$-$C_4$-Alkoxy, das gegebenenfalls durch 1 oder 2 Sauerstoffatome unterbrochen ist, oder einen Rest der Formel

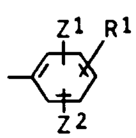, 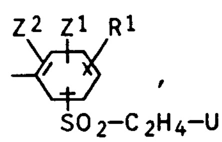, oder 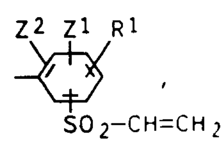,

bedeuten, worin $Z^1$, $Z^2$, $R^1$ und U jeweils die obengenannte Bedeutung besitzen.

Aromatische Amine, die den, den faserreaktiven Rest V aufweisenden, Derivaten der Formel XVa, XVb oder XVc zugrundeliegen, sind beispielsweise 1,3-Diaminobenzol, 1,3-Diaminobenzol-4-sulfonsäure, 1,3-Diaminobenzol-4,6-disulfonsäure, 1,4-Diaminobenzol, 1,4-Diaminobenzol-2-sulfonsäure, 1,4-Diaminobenzol-2,5-disulfonsäure, 1,4-Diamino-2-methylbenzol, 1,4-Diamino-2-methoxybenzol, 1,3-Diamino-4-methylbenzol, 1,4-Diaminobenzol-2,6-disulfonsäure, 1,5-Diamino-4-methylbenzol-2-sulfonsäure, 1,5-Diamino-4-methoxybenzol-2-sulfonsäure, 1,6-Diaminonapht-2-ol-4-sulfonsäure, 1,6-Diaminonaphthalin-4-sulfonsäure, 2,6-Diaminonaphthalin-4,8-disulfonsäure, 2,6-Diaminonapht-1-ol-4,8-disulfonsäure, 1,3-Diaminobenzol-5-sulfonsäure, 1,3-Diamino-5-methylbenzol, 2,6-Diaminophenol-4-sulfonsäure, 5-(Aminomethyl)-2-aminonaphthalin-1-sulfonsäure, 5-(N-Methylaminomethyl)-2-aminonaphthalin-1-sulfonsäure, 4,4'-Diaminostilben-3,3-dicarbonsäure, 4-(N-Methylaminomethyl)anilin-2-sulfonsäure oder 3-(N-Methylaminomethyl)-anilin-6-sulfonsäure.

Die Reste K der Kupplungskomponente entstammen vorzugsweise der Benzol-, Naphthalin-, Pyrazol-, Pyridin-, Pyrimidin-, Indol- oder Acylacetarylidreihe und können auch faserreaktive Gruppen tragen.

Faserreaktivegruppenfreie Kupplungskomponenten der Anilin- oder Naphthalinreihe entsprechen beispielsweise den Verbindungen der Formel XVIa-g

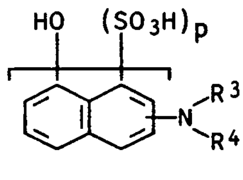
(XVI a)
,
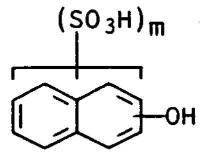
(XVI b)
,
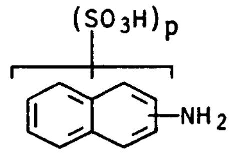
(XVI c)
,
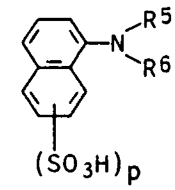
(XVI d)
,
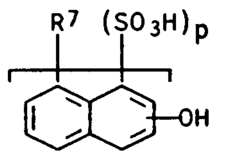
(XVI e)
,
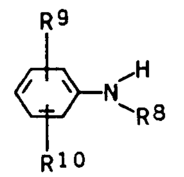
(XVI f)
,
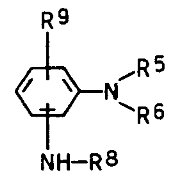
(XVI g)
,

wobei

- $R^3$ Wasserstoff oder $C_1$-$C_4$-Alkyl,
- $R^4$ Wasserstoff, $C_1$-$C_4$-Alkyl oder Phenyl, das durch $C_1$-$C_4$-Alkyl, $C_1$-$C_4$-Alkoxy, Chlor, Brom oder Hydroxysulfonyl ein- oder Zweifach substituiert sein kann,
- $R^5$ Wasserstoff oder $C_1$-$C_4$-Alkyl, das durch Hydroxy, Cyano, Carboxyl, Hydroxysulfonyl, Sulfato, Methoxycarbonyl, Ethoxycarbonyl oder Acetoxy substituiert sein kann,
- $R^6$ Wasserstoff, $C_1$-$C_4$-Alkyl, das durch Hydroxy, Cyano, Carboxyl, Hydroxysulfonyl, Sulfato, Methoxycarbonyl, Ethoxycarbonyl oder Acetoxy substituiert sein kann, Benzyl oder Phenyl, das durch $C_1$-$C_4$-Alkyl, $C_1$-$C_4$-Alkoxy, Chlor oder Hydroxysulfonyl substituiert sein kann,
- $R^7$ $C_1$-$C_6$-Alkylureido, Phenylureido, das durch Chlor, Methyl, Methoxy, Nitro, Hydroxysulfonyl oder Carboxyl substituiert sein kann, $C_1$-$C_6$-Alkanoylamino, das durch Hydroxysulfonyl oder Chlor substituiert sein kann, Cyclohexanoylamino, Benzoylamino, das durch Chlor, Methyl, Methoxy, Nitro, Hydroxylsulfonyl oder Carboxyl substituiert sein kann, oder Hydroxy,
- $R^8$ Wasserstoff, $C_1$-$C_6$-Alkyl, insbesondere $C_1$-$C_4$-Alkyl, das jeweils durch Phenyl, $C_1$-$C_4$-Alkoxy, Hydroxy, Phenoxy oder $C_1$-$C_4$-Alkanoyloxy substituiert sein kann, $C_5$-$C_7$-Cycloalkyl, Hydroxysulfonylphenyl, $C_1$-$C_4$-Alkanoyl, Carbamoyl, $C_1$-$C_4$-Mono- oder Dialkylcarbamoyl, Phenylcarbamoyl oder Cyclohexylcarbamoyl,
- $R^9$ Methoxy, Ethoxy, Chlor, Brom, Hydroxysulfonyl, Acetylamino, Amino, Ureido, Methylsulfonylamino, Ethylsulfonylamino, Dimethylaminosulfonylamino, Methylamino, Ethylamino, Dimethylamino oder Diethylamino und
- $R^{10}$ Wasserstoff, Methyl, Ethyl, Methoxy, Ethoxy, Hydroxysulfonyl, Chlor oder Brom bedeuten und
- p und m jeweils die obengenannte Bedeutung besitzen.

Im einzelnen sind beispielsweise o- oder m-Toluidin, o- oder m-Anisidin, Kresidin, 2,5-Dimethylanilin, 2,5-Dimethoxyanilin, m-Aminoacetanilid, 3-Amino-4-methoxyacetanilid, 3-Amino-4-methylacetanilid, m-Aminophenylharnstoff, N-Methylanilin, N-Methyl-m-toluidin, N-Ethylanilin, N-Ethyl-m-toluidin, N-(2-Hydroxyethyl)anilin oder N-(2-Hydroxyethyl)-m-toluidin zu nennen.

Naphtholsulfonsäuren sind beispielsweise 1-Naphthol-3-sulfonsäure, 1-Naphthol-4-sulfonsäure, 1-Naphthol-5-sulfonsäure, 1-Naphthol-8-sulfonsäure, 1-Naphthol-3,6-disulfonsäure, 1-Naphthol-3,8-disulfonsäure, 2-Naphthol-5-sulfonsäure, 2-Naphthol-6-sulfonsäure, 2-Naphthol-7-sulfonsäure, 2-Naphthol-8-sulfonsäure, 2-Naphthol-3,6-disulfonsäure, 2-Naphthol-6,8-disulfonsäure, 2-Naphthol-3,6,8-trisulfonsäure, 1,8-Dihydroxynaphthalin-3,6-disulfonsäure, 2,6-Dihydroxynaphthalin-8-sulfonsäure oder 2,8-Dihydroxynaphthalin-6-sulfonsäure.

Weiterhin sind beispielsweise 1-Naphthylamin, N-Phenyl-1-napthylamin, N-Ethyl-1-naphthylamin, N-Phenyl-2-naphthylamin, 1-Naphthol, 2-Naphthol, 1,5-Dihydroxynaphthalin, 1,6-Dihydroxynaphthalin, 1,7-Dihydroxynaphthalin oder 2,7-Dihydroxynaphthalin zu nennen.

Aminonaphthalinsulfonsäuren sind beispielsweise 1-Naphthylamin-6-sulfonsäure,1-Naphthylamin-7-sulfonsäure, 1-Naphthylamin-8-sulfonsäure, 2-Naphthylamin-3,6-disulfonsäure, 2-Naphthylamin-5,7-disulfonsäure oder 2-Naphthylamin-6,8-disulfonsäure.

Als Aminonaphtholsulfonsäuren sind z.B. 1-Amino-5-hydroxynaphthalin-7-sulfonsäure, 1-Amino-8-hydroxynaphthalin-4-sulfonsäure, 1-Amino-8-hydroxynaphthalin-2,4-disulfonsäure, 1-Amino-8-hydroxynaphthalin-3,6-disulfonsäure, 1-Amino-8-hydroxynaphthalin-4,6-disulfonsäure, 2-Amino-5-hydroxynaphthalin-7-sulfonsäure, 2-Amino-8-hydroxynaphthalin-6-sulfonsäure, 2-Amino-8-hydroxynaphthalin-3,6-disulfonsäure, 2-Amino-5-hydroxynaphthalin-1,7-disulfonsäure, 1-Acetylamino-8-hydroxy-naphthalin-3,6-disulfonsäure, 1-Benzoylamino-8-hydroxynaphthalin-3,6-di-sulfonsäure, 1-Acetylamino-8-hydroxynaphthalin-4,6-disulfonsäure, 1-Benzoylamino-8-hydroxynaphthalin-4,6-disulfonsäure, 1-Acetylamino-5-hydroxynaphthalin-7-sulfonsäure, 2-Methylamino-8-hydroxynaphthalin-6-sulfonsäure, 2-Methylamino-8-hydroxynaphthalin-6-sulfonsäure oder 2-(3'- oder 4'-Hydroxysulfonylphenyl)amino-8-hydroxynaphthalin-6-sulfonsäure zu nennen.

Von besonderer Bedeutung sind Kupplungskomponenten, die Sulfonsäuren-und/oder Carboxylgruppen aufweisen und die in ortho- oder para-Stellung zu einer Hydroxy- und/oder Aminogruppe kuppeln.

Als Beispiele für solche Kupplungskomponenten seien 2-Acetylamino-5-hydroxynaphthalin-7-sulfonsäure, 2-Acetylamino-8-hydroxynaphthalin-6-sulfonsäure, 1-Acetylamino-8-hydroxynaphthalin-3,6-disulfonsäure, 1-Benzoylamino-8-hydroxynaphthalin-3,6-disulfonsäure, 1-Acetylamino-8-hydroxynaphthalin-4,6-disulfonsäure oder 1-Benzoylamino-8-hydroxynaphthalin-4,6-disulfonsäure genannt.

Kupplungskomponenten der weiteren Reihen sind beispielsweise: Pyrazolone Aminopyrazole, 2,6-Diaminopyridine, Pyridone, Hydroxy- oder Aminopyrimidine, Indole oder Acetoacetarylide.

Faserreaktivgruppenfreie Kupplungskomponenten dieser Reihe entsprechen dabei beispielsweise der Formel XVIIa-f.

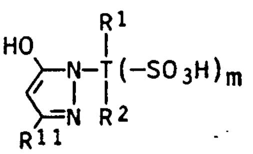 ,

(XVII a)

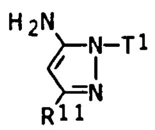 ,

(XVII b)

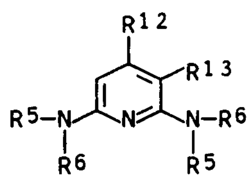 ,

(XVII c)

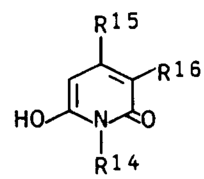 ,

(XVII d)

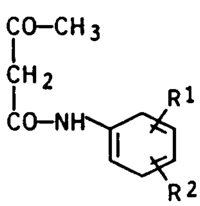 ,

(XVII e)

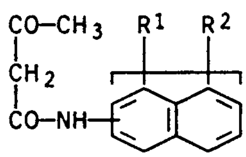 ,

(XVII f)

wobei

- T für den Rest eines Benzol- oder Naphthalinrings,
- $T^1$ für $C_1$-$C_4$-Alkyl, Cyclohexyl, Benzyl oder Phenyl, das ein- oder mehrfach durch Fluor, Chlor, Brom, Methyl, Methoxy, Nitro, Hydroxysulfonyl, Carboxyl, Acetyl, Acetylamino, Methylsulfonyl, Sulfamoyl oder Carbamoyl substituiert ist,
- $R^{11}$ für Methyl, Carboxyl, $C_1$-$C_4$-Alkoxycarbonyl oder Phenyl,
- $R^{12}$ für Wasserstoff oder $C_1$-$C_4$-Alkyl, das durch Methoxy, Ethoxy oder Cyano substituiert sein kann,
- $R^{13}$ für Wasserstoff, Methyl, Hydroxysulfonylmethyl, Hydroxysulfonyl, Cyano oder Carbamoyl,
- $R^{14}$ für Wasserstoff, $C_1$-$C_4$-Alkyl, das durch Phenyl, Hydroxysulfonylphenyl, Hydroxy, Amino, Methoxy, Ethoxy, Carboxyl, Hydroxysulfonyl, Acetylamino, Benzoylamino oder Cyano substituiert sein kann, Cyclohexyl, Phenyl, das gegebenenfalls durch Carboxyl, Hydroxysulfonyl, Benzoylamino, Acetylamino, Methyl, Methoxy, Cyano oder Chlor substituiert ist, oder Amino, das durch Phenyl, $C_1$-$C_4$-Alkyl, Acetyl oder Benzoyl substituiert ist,
- $R^{15}$ für $C_1$-$C_4$-Alkyl, Phenyl, Hydroxy, Cyano, Acetyl, Benzoyl, Carboxyl, Methoxycarbonyl, Carba-

moyl oder Hydroxysulfonylmethyl und

$R^{16}$ für Wasserstoff, Chlor, Brom, Acetylamino, Amino, Nitro, Hydroxysulfonyl, Sulfamoyl, Methylsulfonyl, Phenylsulfonyl, Carboxyl, Methoxycarbonyl, Acetyl, Benzoyl, Carbamoyl, Cyano oder Hydroxysulfonylmethyl stehen und $R^1$, $R^2$, $R^5$, $R^6$ und m jeweils die obengenannte Bedeutung besitzen.

Als Pyrazolon-Kupplungskomponenten sind beispielsweise 3-Methyl-, 3-Carboxy- oder 3-($C_1$-$C_4$-Alkoxycarbonyl)pyrazol-5-one zu nennen, die in 1-Stellung Wasserstoff, gegebenenfalls durch Methyl, Ethyl, Fluor, Chlor, Brom, Trifluormethyl, Methoxy, Ethoxy, Cyano, Phenoxy, Phenylsulfonyl, Methylsulfonyl, Hydroxysulfonyl, Acetylamino, Nitro, Hydroxyl, Carboxyl, Carbamoyl oder Sulfamoyl substituiertes Phenyl oder durch Hydroxysulfonyl substituiertes 1-, oder 2-Naphthyl tragen können. Beispielsweise sind 1-Phenyl-, 1-(2'-Chlorphenyl)-, 1-(2'-Methoxyphenyl)-, 1-(2' Methylphenyl)-, 1-(1',5'-Dichlorphenyl)-, 1-(2',6'-Dichlorphenyl)-, 1-(2'-Methyl-6'-chlorphenyl)-, 1-(2'-Methoxy-5'-methylphenyl)-, 1-(2'-Methoxy-5'-hydroxysulfonylphenyl)-, 1-(2',5'-Dichlor-4'-hydroxysulfonylphenyl)-, 1-(2',5'-Dihydroxysulfonylphenyl)-, 1-(2'-Carboxyphenyl)-, 1-(3'-Hydroxysulfonylphenyl)-, 1-(4'-Hydroxysulfonylphenyl)- oder 1-(3'-Sulfamoylphenyl)-3-carboxylpyrazol-5-on, 1-(3'- oder 4'-Hydroxysulfonylphenyl)-, 1-(2'-Chlor-4'- oder -5'-hydroxysulfonylphenyl)-, 1-(2'-Methyl-4'-hydroxysulfonylphenyl)-, 1-(2',5'-Dichlorphenyl)-, 1-(4',8'-Dihydroxysulfonyl-1-naphthyl)-, 1-(6'-Hydroxysulfonyl-1-naphthyl)-3-methylpyrazol-5-on, 1-Phenylpyrazol-5-on-3-carbonsäureethylester, Pyrazol-5-on-3-carbonsäureethylester oder Pyrazol-5-on-3-carbonsäure zu nennen.

Andere aus der Pyrazolreihe stammende Kupplungskomponenten sind beispielsweise 1-Methyl-, 1-Ethyl-, 1-Propyl-, 1-Butyl-, 1-Cyclohexyl-, 1-Benzyl- oder 1-Phenyl-5-aminopyrazol, 1-(4'-Chlorphenyl)-, 1-(4'-Methylphenyl)-5-aminopyrazol oder 1-Phenyl-3-methyl-5-aminopyrazol.

Acetoacetanilide sind vor allem Acetessiganilid oder dessen im Phenylkern durch Chlor, Methyl, Ethyl, Methoxy, Ethoxy, Acetylamino, Hydroxysulfonyl, Carboxyl, Carbamoyl oder Sulfamoyl ein- oder mehrfach substituierte Derivate.

Vom Pyridin abgeleitete Kupplungskomponenten sind beispielsweise die in der DE-A-2 260 827 beschriebenen Derivate.

Als Pyrimidinkupplungskomponenten sind Z. B. die in der DE-A-2 202 820, DE-A-2 308 663 oder DE-A-3 119 349 aufgeführten Verbindungen geeignet. Weiterhin sind Barbitursäure und deren N-Substitutionsprodukte zu nennen. Als N-Substituenten kommen dabei insbesondere $C_1$-$C_4$-Alkyl oder gegebenenfalls substituiertes Phenyl in Betracht.

Als Indolkupplungskomponenten sind beispielsweise 2-Methylindol, 2-2-Phenylindol, 2-Phenylindol-5-sulfonsäure, 1-Methyl-2-phenylindol, 1-(2'-Hydroxyethyl)-, 1-(2'-Carboxyethyl)-, 1-(2'Carbamoylethyl)-2-methyl- oder -2-phenylindol zu nennen.

Als Pyridonkupplungskomponenten sind beispielsweise 1-Ethyl-2-hydroxy-4-methyl-5-carbamoylpyrid-6-on, 1-(2'Hydroxyethyl)-2-hydroxy-4-methyl-5-carbamoylpyrid-6-on, 1-Phenyl-2-hydroxy-4-methyl-5-carbamoylpyrid-6-on, 1-Ethyl-2-hydroxy-4-methyl-5-cyanopyrid-6-on, 1-Ethyl-2-hydroxy-4-methyl-5-hydroxysulfonylmethylpyrid-6-on, 1-Methyl-2-hydroxy-4-methyl-5-cyanopyrid-6-on, 1-Methyl-2-hydroxy-5-acetylpyrid-6-on, 1,4-Dimethyl-2-hydroxy-5-cyanopyrid-6-on, 1,4-Dimethyl-5-carbamoylpyrid-6-on, 2,6-Dihydroxy-4-ethyl-5-cyanopyridin, 2,6-Dihydroxy-4-ethyl-5-carbamoylpyridin, 1-Ethyl-2-hydroxy-4-methyl-5-hydroxy-sulfonylmethylpyrid-6-on, 1-Methyl-2-hydroxy-4-methyl-5-methyl-sulfonylpyrid-6-on oder 1-Carboxymethyl-2-hydroxy-4-ethyl-5-phenyl-sulfonylpyrid-6-on zu nennen.

Faserreaktivgruppenhaltige Kupplungskomponenten K der Benzol- oder Naphthalinreihe sind beispielsweise Verbindungen der Formel XVIII a - f.

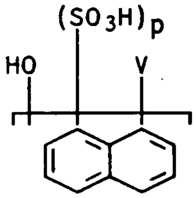 ,

(XVIII a)

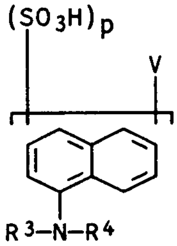 ,

(XVIII b)

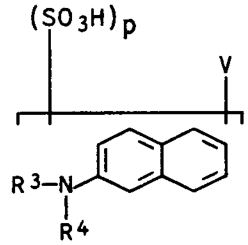 ,

(XVIII c)

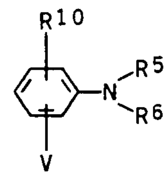 ,

(XVIII d)

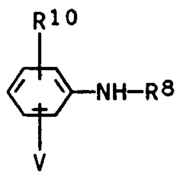 ,

(XVIII e)

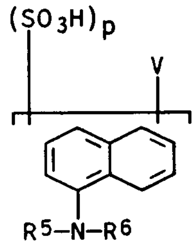 ,

(XVIII f)

wobei $R^3$, $R^4$, $R^5$, $R^6$, $R^8$, $R^{10}$, V und p jeweils die obengenannte Bedeutung besitzen.

Faserreaktivgruppenhaltige Kupplungskomponenten der Pyrazolon-, Aminopyrazol-, 2,6-Diaminopyridin-, Pyridon-, Hydroxy- oder Aminopyrimidin-, Indol-, oder Acetoacetarylidreihe entsprechen beispielsweise der Formel XIX a - f.

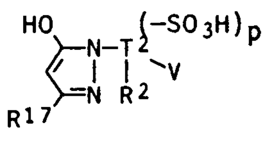 ,

(XIX a)

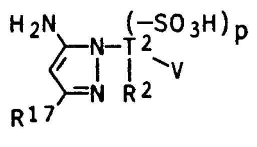 ,

(XIX b)

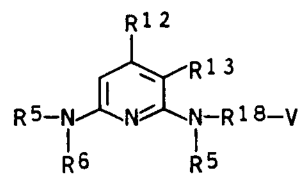 ,

(XIX c)

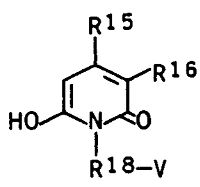 ,

(XIX d)

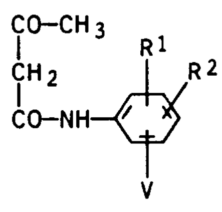 ,

(XIX e)

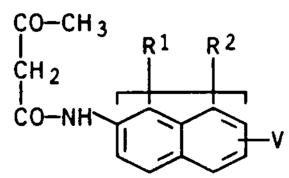 ,

(XIX f)

wobei
$T^2$ für den Rest eines Benzol- oder Naphthalinrings,
$R^{17}$ für Methyl, Carboxyl, $C_1$-$C_4$-Alkoxycarbonyl oder Phenyl und
$R^{18}$ für $C_1$-$C_6$-Alkylen stehen und
$R^1$, $R^2$, $R^5$, $R^6$, $R^{12}$, $R^{13}$, $R^{15}$, $R^{16}$, p und V jeweils die obengenannte Bedeutung besitzen.

Faserreaktive Reste V tragende Pyrazolonkupplungskomponenten leiten sich beispielsweise von folgenden Pyrazolonen ab: 1-(3'- oder 4'-Aminophenyl)-, 1-(2'-Hydroxysulfonyl-5'-aminophenyl)- oder 1-(2'-Methoxy-5'-aminophenyl)-3-carboxylpyrazol-5-on, 1-(3'- oder 4'-Aminophenyl)- oder 1-(6'-Amino-4',8'-dihydroxysulfonylnaphth-2'-yl)-3-carboxylpyrazol-5-on.

Anstelle der Azofarbstoffreste können die Farbstoffe der Formel I auch entsprechende Metallkomplexfarbstoffreste enthalten. Als komplexierende Metalle kommen dabei insbesondere Kupfer, Kobalt, Chrom,

Nickel oder Eisen in Betracht, wobei Kupfer, Kobalt oder Chrom bevorzugt sind.

Dabei befinden sich die metallisierten Gruppen vorzugsweise jeweils in ortho-Stellung zur Azogruppe, z. B. in Form von o,o'-Dihydroxy-, o-Hydroxy-o'-carboxy-, o-Carboxy-o'-amino- oder o-Hydroxy-o'-aminoazogruppierungen.

X in Formel I stellt weiterhin z.B. den Rest eines metallisierten Formazanfarbstoffs dar, wobei insbesondere Kupfer-Formazane zu nennen sind. Kupfer-Formazane sind an sich bekannt und beispielsweise in K. Venkataraman "The Chemistry of Synthetic Dyes", Vol. III, Academic Press, New York, London, 1970, beschrieben.

Besonders bevorzugt sind Kupfer-Formazanfarbstoffe der Formel XX

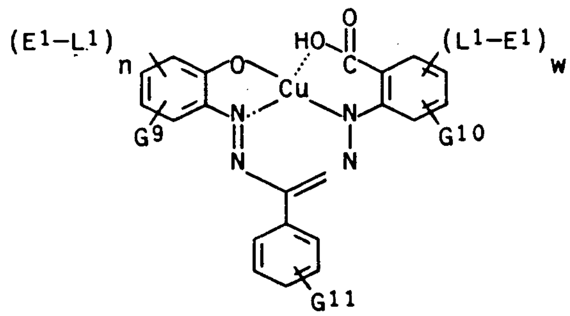 (XX),

in der

| | |
|---|---|
| $G^9$, $G^{10}$ und $G^{11}$ | gleich oder verschieden sind und unabhängig voneinander jeweils Wasserstoff oder Hydroxysulfonyl, |
| n | 0 oder 1 und |
| w | 0 oder 1 bedeuten und |
| $E^1$ und $L^1$ | jeweils die obengenannte Bedeutung besitzen, mit der Maßgabe, daß n und w nicht gleichzeitig 0 bedeuten. |

Eine Methode zur Herstellung der diesen Farbstoffen zugrundeliegenden Formazane ist beispielsweise in der EP-A-315 046 beschrieben.

X in Formel I stellt weiterhin z.B. den Rest eines Anthrachinonfarbstoffs dar. Anthrachinone sind an sich bekannt und beispielsweise in K. Venkataraman "The Chemistry of Synthetic Dyes", Vol. II, Academic Press, New York, 1952, beschrieben.

Besonders bevorzugt sind Anthrachinonfarbstoffe der Formel XXI

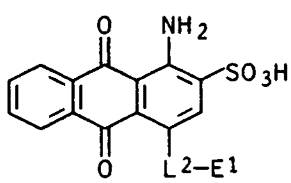 (XXI),

in der

$L^2$ für den Rest

-NH-A- oder

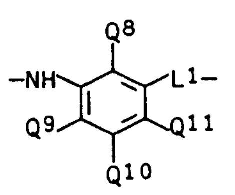 ,

worin A und $L^1$ jeweils die obengenannte Bedeutung besitzt, und $Q^8$ und $Q^9$ gleich oder verschieden sind und unabhängig voneinander jeweils Wasserstoff oder Methyl und einer der beiden Reste $Q^{10}$ und $Q^{11}$ Wasserstoff oder Methyl und der andere Hydroxysulfonyl bedeuten, und $E^1$ die obengenannte Bedeutung besitzt.

X in Formel I stellt weiterhin z.B. den Rest eines Triphendioxazinfarbstoffs dar. Triphendioxazine sind an sich bekannt und beispielsweise in der EP-A-141 359 oder EP-A-311 969 beschrieben.

Besonders bevorzugt sind Triphendioxazinfarbstoffe der Formel XXII

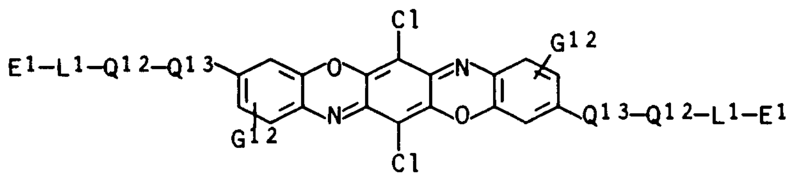
(XXII),

in der

$E^1$ und $L^1$ jeweils die obengenannte Bedeutung besitzen und
$G^{12}$ für Hydroxysulfonyl oder den Rest $SO_2$-$C_2H_4$-$OSO_3H$,
$Q^{13}$ für Sauerstoff, Imino oder $C_1$-$C_4$-Alkylimino und
$Q^{12}$ für geradkettiges oder verzweigtes $C_2$-$C_4$-Alkylen oder Phenylen stehen.

X in der Formel I stellt weiterhin z.B. den Rest eines metallisierten Phthalocyaninfarbstoffs dar. Phthalocyanine sind an sich bekannt und beispielsweise in F.H. Moser, D.L. Thomas "The Phthalocyanines", Vol. II, CRC Press, Boca Raton, Florida, 1983, beschrieben.

Besonders bevorzugt sind Phthalocyaninfarbstoffe der Formel XXIII

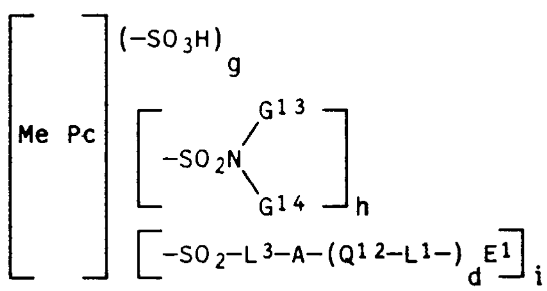
(XXIII),

in der

Pc den Phthalocyaninrest,
$G^{13}$ und $G^{14}$ gleich oder verschieden sind und unabhängig voneinander jeweils Wasserstoff oder $C_1$-$C_4$-Alkyl,
$L^3$ Imino oder $C_1$-$C_4$-Alkylimino,
d 0, 1, 2 oder 3,
Me Kupfer oder Nickel,
g 0, 1 oder 2,
h 0, 1 oder 2 und
i 1 oder 2 bedeuten und A, $L^1$, $E^1$ und $Q^{12}$ jeweils die obengenannte Bedeutung besitzen.

Die Herstellung der Reaktivfarbstoffe der Formel I erfolgt z.B. dadurch, daß man einen geeigneten organischen Farbstoff oder ein geeignetes Farbstoffvorprodukt und die faserreaktive Verbindung der Formel XXVII

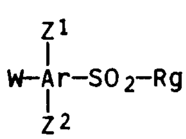
(XXVII),

in der Ar, $Z^1$, $Z^2$ und Rg jeweils die obengenannte Bedeutung besitzen und W den Rest

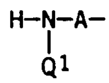 oder 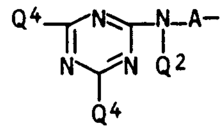

bedeuten,
worin A, $Q^1$, $Q^2$ und $Q^4$ jeweils die obengenannte Bedeutung besitzen, umsetzt, und daß man, im Falle der Verwendung von Farbstoffvorprodukten, die erhaltenen Zwischenverbindungen nach an sich bekannten Methoden in die gewünschten Farbstoffe umwandelt.

Wenn die Verbindung X-H eine Kupplungskomponente darstellt, gelangt man z.B. zu den erfindungsgemäßen Farbstoffen, wenn man den faserreaktiven Anker der Formel XXVIII

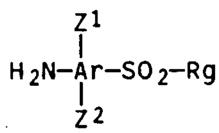 (XXVIII),

in der Ar, $Z^1$, $Z^2$ und Rg jeweils die obengenannte Bedeutung besitzen, nach an sich bekannter Weise diazotiert und mit der Kupplungskomponente X-H kuppelt.

Die Herstellung der faserreaktiven Verbindung der Formel XXVIII ist an sich bekannt und z.B. in der älteren Patentanmeldung EP-A-489299 beschrieben; nicht jedoch Farbstoffe mit dem entsprechenden Reaktivanker.

Die neuen Reaktivfarbstoffe der Formel I eignen sich in vorteilhafter Weise zum Färben oder Bedrucken von Hydroxylgruppen oder Stickstoff enthaltenden organischen Substraten. Solche Substrate sind beispielsweise Leder oder Fasermaterial, das überwiegend natürliche oder synthetische Polyamide oder natürliche oder regenerierte Cellulose enthält. Vorzugsweise eignen sich die neuen Farbstoffe zum Färben und Bedrucken von Textilmaterial auf der Basis von Wolle oder insbesondere von Baumwolle.

Abhängig vom Reaktivanker treten die neuen Reaktivfarbstoffe der Formel I mit den jeweiligen Substratgruppen wie folgt in Wechselwirkung.

a) Bei der Färbung werden die neuen Reaktivfarbstoffe der Formel I zunächst in die entsprechenden Allenverbindungen übergeführt, die dann mit den jeweiligen Substratgruppen, z.B. den Hydroxygruppen der Cellulose, additiv reagieren, wie dies beispielsweise im folgenden Schema dargestellt ist:

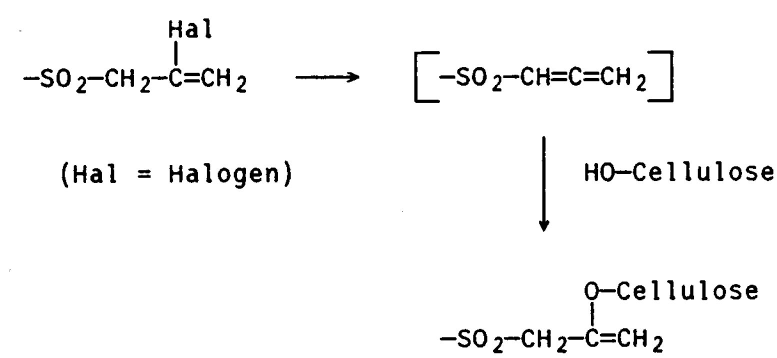


b) Bei der Färbung reagieren die neuen Reaktivfarbstoffe der Formel I mit den jeweiligen Substratgruppen, z.B. den Hydroxygruppen der Cellulose, additiv, wie dies beispielsweise im folgenden Schema dargestellt ist:

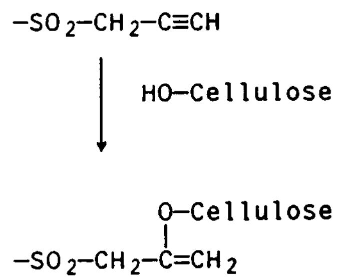


Als Färbeverfahren eignen sich die bekannten Reaktivfärbeverfahren, insbesondere Ausziehverfahren bei 30 bis 80 °C und Kaltverweilverfahren (Verweildauer 2 bis 48 Stunden). Die neuen Farbstoffe zeichnen sich durch hohe Ausgiebigkeit und hohe Naßechtheiten, insbesondere eine hohe Sodakochechtheit aus. Sie ergeben brillante Färbungen.

Die folgenden Beispiele, in denen sich Angaben über Prozente sofern nicht anders vermerkt, auf das Gewicht beziehen, sollen die Erfindung näher erläutern.

In den Tabellenbeispielen besitzen die Abkürzungen E-1 bis E-11 die folgende Bedeutung:

E-1: 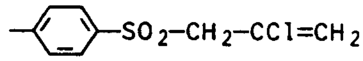

E-2: 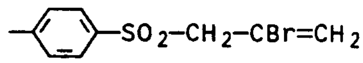

E-3: 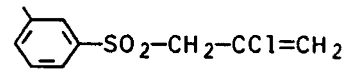

E-4: 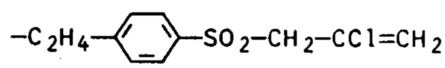

E-5: 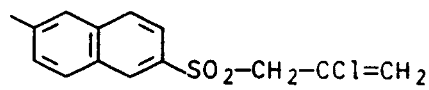

E-6: 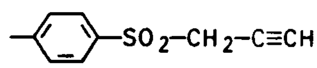

E-7: 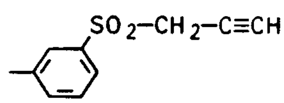

E-8: 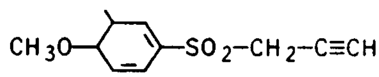

E-9: 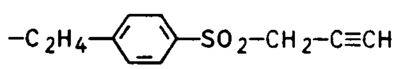

E-10: 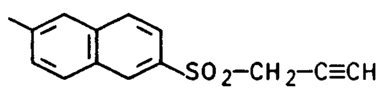

E-11: 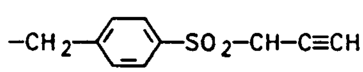

Beispiel 1

Eine Lösung von 14,5 g 4-(2-Chlorprop-2-enylsulfonyl)anilin-hydrochloridin 400 ml Aceton/Wasser (1:1 v/v) wurde mit 15 ml 36 gew.%iger Salzsäure und 14 ml 3,33 N Natriumnitrit-Lösung bei 0 bis 5°C diazotiert und mit einer neutralen wäßrigen Lösung von 24,1 g 1-Hydroxynaphthalin-3,6-disulfonsäure versetzt. Durch Zugabe von gesättigter Natriumacetatlösung wurde ein pH-Wert von 4,5 eingestellt. Nach beendeter Kupplung wurde der Farbstoff mit Natriumchlorid ausgesalzen und gefriergetrocknet. Er färbt Baumwolle in echtem orangefarbenen Ton und entspricht der Formel

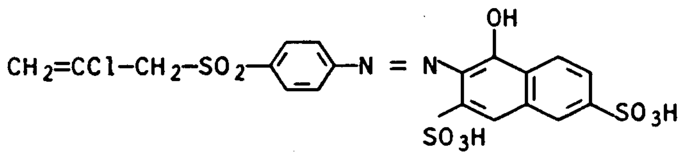

($\lambda_{max}$: 485 nm)

Weitere erfindungsgemäße Farbstoffe, die auf analoge Weise erhalten werden, sind in Tabelle 1 aufgeführt:

Tabelle 1

E–N = N–K

| Bsp.-Nr. | E | K | Farbton auf Baumwolle |
|---|---|---|---|
| 2 | E-1 | 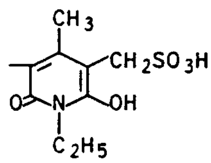 | grünstichig gelb |
| 3 | E-1 | 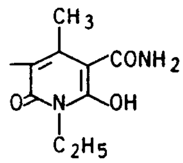 | grünstichig gelb |
| 4 | E-1 | 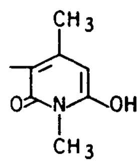 | grünstichig gelb |
| 5 | E-1 | 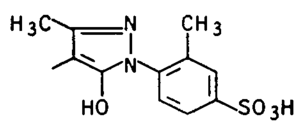 | gelb |
| 6 | E-3 | 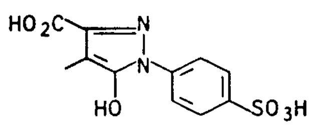 | gelb |
| 7 | E-1 | 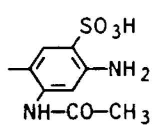 | goldgelb |
| 8 | E-2 | 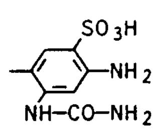 | goldgelb |

Fortsetzung - Tabelle 1

$$E{-}N = N{-}K$$

| Bsp.-Nr. | E | K | Farbton auf Baumwolle |
|---|---|---|---|
| 9 | E-1 | 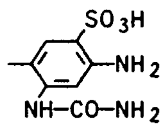 | goldgelb |
| 10 | E-3 | 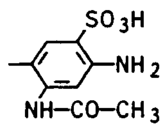 | goldgelb |
| 11 | E-2 | 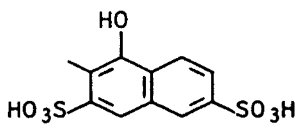 | orange |
| 12 | E-1 | 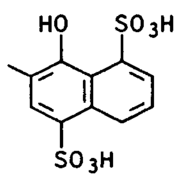 | orange |
| 13 | E-5 | 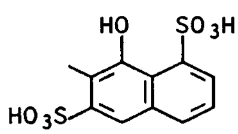 | orange |
| 14 | E-3 | 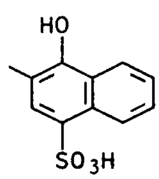 | orangerot |
| 15 | E-1 | 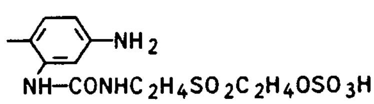 | goldgelb |

Fortsetzung - Tabelle 1

E—N = N—K

| Bsp.-Nr. | E | K | Farbton auf Baumwolle |
|---|---|---|---|
| 16 | E-1 | 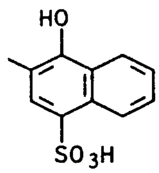 | orangerot |
| 17 | E-1 | 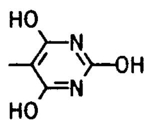 | grünstichig gelb |
| 18 | E-2 | 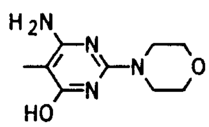 | gelb |
| 19 | E-1 | 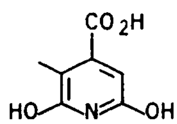 | grünstichig gelb |
| 20 | E-1 | 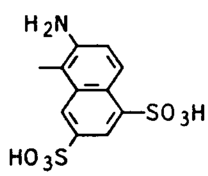 | orangerot |
| 21 | E-1 | 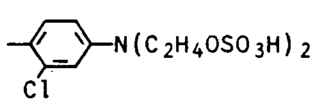 | orange |
| 22 | E-1 | 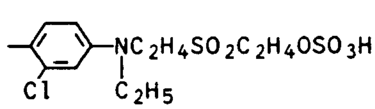 | orange |

Beispiel 23

12,0 g 4-(2-Chlorprop-2-enylsulfonyl)anilin-hydrochlorid in 400 ml Aceton/Wasser (1:1 v/v) wurden Dei 0 bis 5 °C salzsauer diazotiert und mit einer neutralen wäßrigen Lösung von 16,2 g 1-Acetylamino-8-hydroxynaphthalin-3,6-disulfonsäure versetzt. Die Kupplung wurde durch Zugabe gesättigter Natriumacetatlösung bei pH 4,5 vervollständigt und der gebildete Farbstoff mit gesättigter Natriumchlorid-Lösung gefällt und gefriergetrocknet. Er färbt Baumwolle in brillantem roten Ton mit guten Echtheiten und entspricht der

Formel

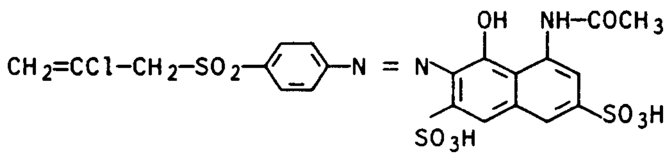

($\lambda_{max}$: 501 nm)

Weitere Farbstoffe, die auf analoge Weise erhalten werden, sind in Tabelle 2 aufgeführt.

Tabelle 2

E-N = N-K

| Bsp.-Nr. | E | K | Farbton auf Baumwolle |
|---|---|---|---|
| 24 | E-3 | 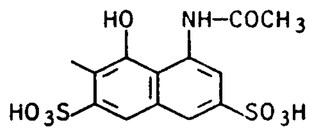 | rot |
| 25 | E-1 | 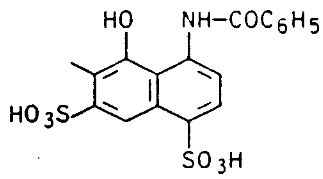 | rot |
| 26 | E-1 | 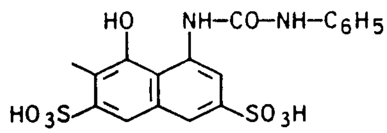 | blaustichig rot |
| 27 | E-1 | 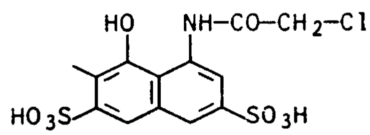 | rot |

Fortsetzung - Tabelle 2

E–N = N–K

| Bsp.-Nr. | E | K | Farbton auf Baumwolle |
|---|---|---|---|
| 28 | E-1 | 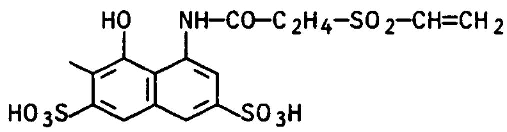 | rot |
| 29 | E-2 | 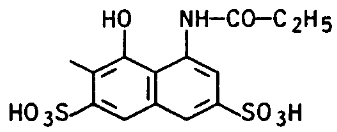 | rot |
| 30 | E-1 | 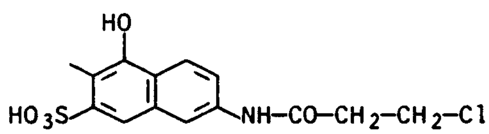 | orange |
| 31 | E-2 | 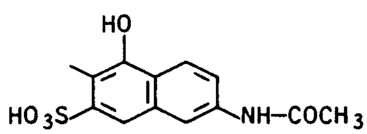 | orange |
| 32 | E-5 | 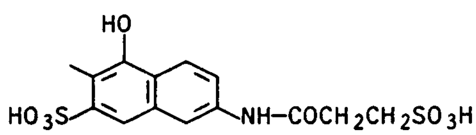 | orange |

Beispiel 33

Eine Lösung von 14,1 g 4-(2-Chlorprop-2-enylsulfonyl)anilin-hydrochloridin 400 ml Wasser/Aceton (1:1 v/v) wurde bei 0 bis 5 ° C salzsauer diazotiert und dann einer Lösung von 22,4 g des Kondensationsproduktes aus 1-Amino-8-hydroxynaphthalin3,6-disulfonsäure und Cyanurchlorid in 380 ml Wasser zugesetzt. Zur Vervollständigung der Kupplung wurde mittels gesättigter Natriumacetat-Lösung der pH-Wert auf 4,5 gebracht. Eine auf pH 4,5 eingestellte wäßrige Lösung von 26 g 4-(2-sulfatoethylsulfonyl)anilin wurde zugegeben und anschließend 3,5 Stunden auf 40 bis 45 ° C erwärmt. Der entstandene Farbstoff wurde mit Natriumchlorid ausgesalzen und gefriergetrocknet. Er färbt Baumwolle in blaustichig rotem Ton mit guten Echtheiten und hat die Formel

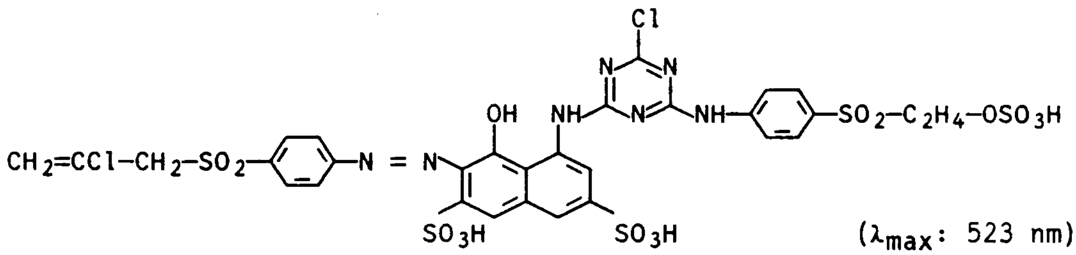

($\lambda_{max}$: 523 nm)

Weitere erfindungsgemäße Farbstoffe, die auf analoge Weise erhalten werden, sind in Tabelle 3 aufgeführt.

Tabelle 3

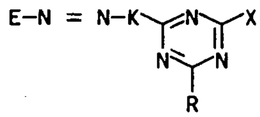

| Bsp.-Nr. | E | K | X | R | Farbton auf Baumwolle |
|---|---|---|---|---|---|
| 34 | E-1 | 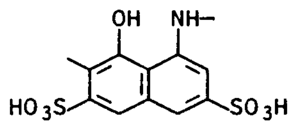 | Cl | $OCH_3$ | rot |
| 35 | E-1 | 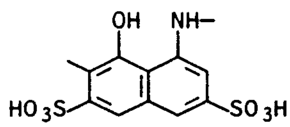 | F | 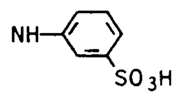 | rot |
| 36 | E-1 | 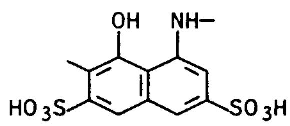 | Cl | $OCH_2CH_2OCH_3$ | rot |
| 37 | E-1 | 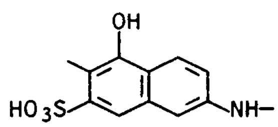 | Cl | 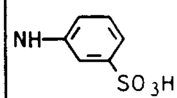 | orange |
| 38 | E-1 | 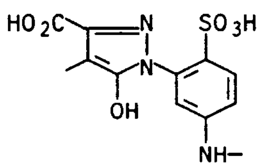 | Cl | 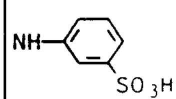 | gelb |
| 39 | E-2 | 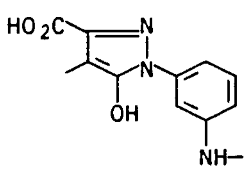 | Cl | 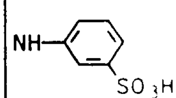 | gelb |
| 40 | E-1 | 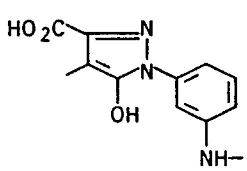 | F | 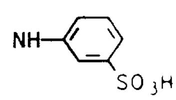 | gelb |

Fortsetzung - Tabelle 3

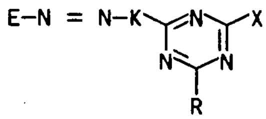

| Bsp.-Nr. | E | K | X | R | Farbton auf Baumwolle |
|---|---|---|---|---|---|
| 41 | E-1 | 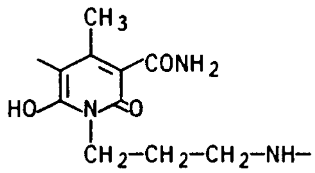 | Cl | 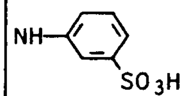 | grünstichig gelb |
| 42 | E-1 | 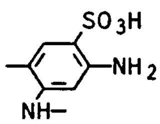 | Cl | 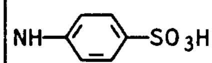 | gold-gelb |
| 43 | E-1 | 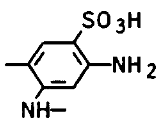 | F | 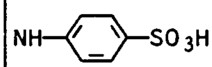 | gold-gelb |
| 44 | E-2 | 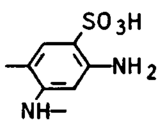 | Cl | 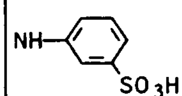 | gold-gelb |
| 45 | E-1 | 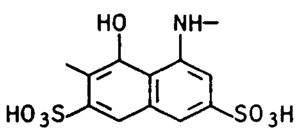 | Cl | 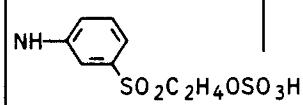 | rot |
| 46 | E-3 | 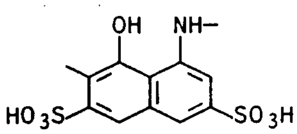 | Cl | 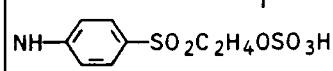 | rot |
| 47 | E-2 | 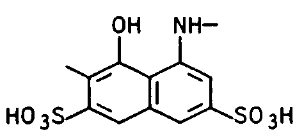 | Cl | 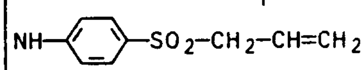 | rot |

Fortsetzung - Tabelle 3

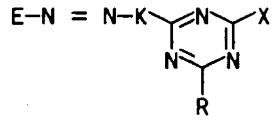

| Bsp.-Nr. | E | K | X | R | Farbton auf Baumwolle |
|---|---|---|---|---|---|
| 48 | E-1 | 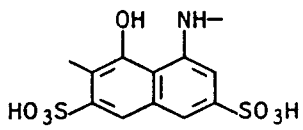 | Cl | 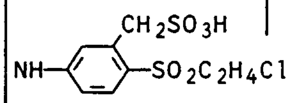 | rot |
| 49 | E-1 | 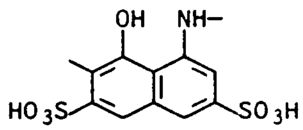 | F | $NHCH_2CH_2SO_2-CH=CH_2$ | rot |
| 50 | E-1 | 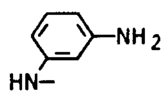 | Cl | 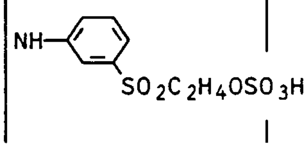 | gold-gelb |

Beispiel 51

Eine neutrale wäßrige Lösung von 26,8 g 4-(2-Chlorprop-2-enylsulfonyl)-anilin-hydrochlorid in 400 ml Wasser und 100 ml Aceton wurde mit einer Suspension von 19,3 g Cyanurchlorid in 250 ml Eiswasser versetzt und 2,5 Stunden bei 0 bis 5 °C gerührt, wobei durch Zugabe von Natriumbicarbonat ein pH-Wert von 5 bis 6 eingehalten wurde. Man filtrierte, gab die Suspension zu einer bei 40 °C und pH 5 bis 6 gerührten Lösung von 16,9 g 1,3-Diaminobenzol-4-sulfonsäure in 100 ml Wasser und hielt 2 Stunden bei 35 bis 40 °C und pH 3 bis 4.

Nach beendeter umsetzung wurde bei 0 bis 5 °C durch Zugabe von 30 ml 3,33 N wäßriger Natriumnitritlösung und 60 ml 5 N Salzsäure diazotiert und auf 27,6 g 1,4-Dimethyl-3-hydroxysulfonylmethyl-6-hydroxypyridon-2 gekuppelt. Der erhaltene Farbstoff wurde mit Natriumchlorid ausgesalzen und schonend unter vermindertem Druck getrocknet. Er färbt Baumwolle in brillantem, echten, grünstichig gelben Ton und entspricht der Formel

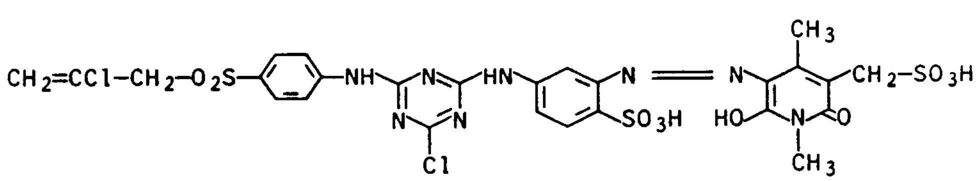 .

Beispiel 52

33 g des Natriumsalzes des Farbstoffs der Formel

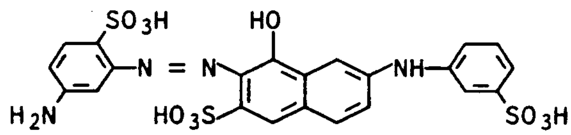

wurden bei pH 6 und 40 ° C in Wasser gelöst und mit 26 g des Kondensationsproduktes aus Cyanurchlorid und 4-(2-Chlorprop-2-enylsulfonyl)anilinhydrochlorid gelöst in 1000 ml Wasser, versetzt und weitere 2 Stunden bei 40 ° C gerührt, wobei durch Einstreuen von Natriumbicarbonat ein pH-Wert von 5 bis 6 eingehalten wird. Der mit Kaliumchlorid ausgefällte und schonend getrocknete Farbstoff ergibt auf Baumwolle eine braune Färbung und entspricht der Formel

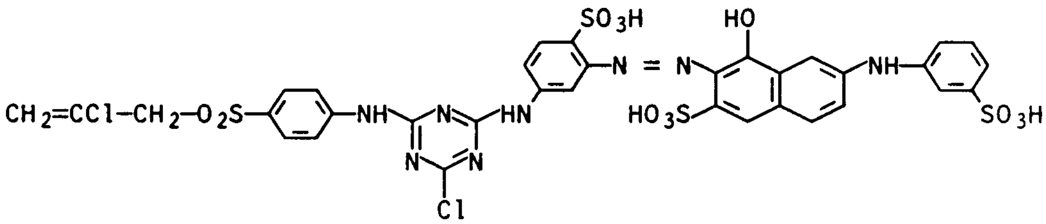

In ähnlicher Weise werden die in Tabelle 4 beschriebenen Farbstoffe erhalten.

Tabelle 4

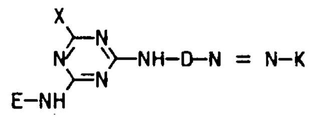

| Bsp.-Nr. | E | X | D | K | Farbton auf Baumwolle |
|---|---|---|---|---|---|
| 53 | E-1 | Cl | 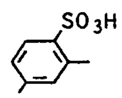 | 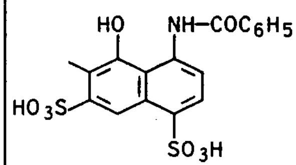 | rot |
| 54 | E-1 | F | 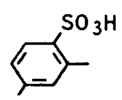 | 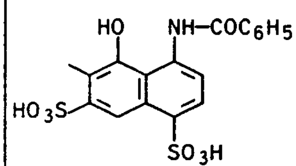 | rot |
| 55 | E-1 | Cl | 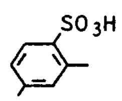 | 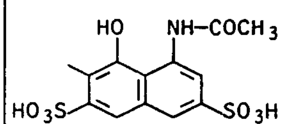 | rot |
| 56 | E-1 | Cl | 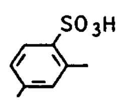 | 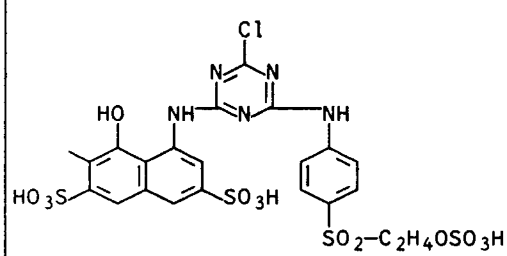 | rot |
| 57 | E-1 | Cl | 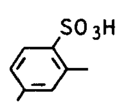 | 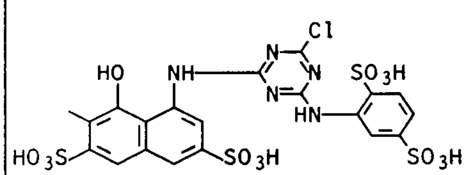 | rot |
| 58 | E-1 | Cl | 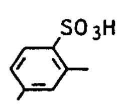 | 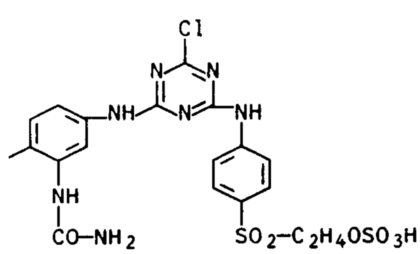 | gelb |

Fortsetzung - Tabelle 4

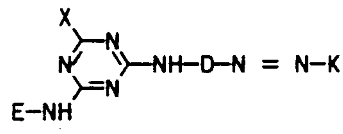

| Bsp.-Nr. | E | X | D | K | Farbton auf Baumwolle |
|---|---|---|---|---|---|
| 59 | E-1 | Cl | 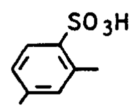 | 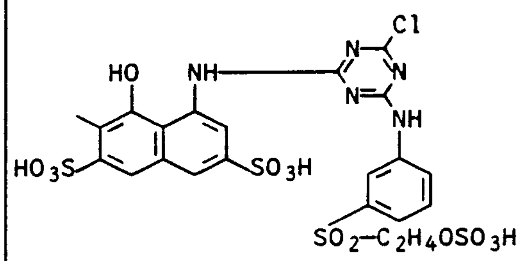 | rot |
| 60 | E-2 | Cl | 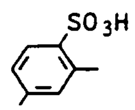 | 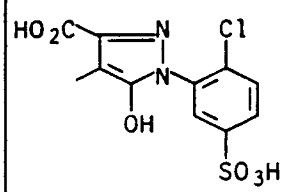 | gelb |
| 61 | E-3 | Cl | 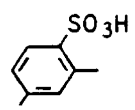 | 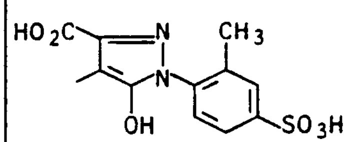 | gelb |
| 62 | E-5 | Cl | 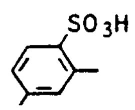 | 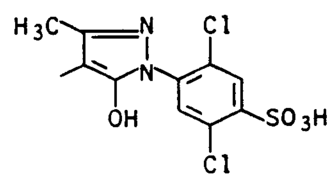 | gelb |
| 63 | E-1 | Cl | 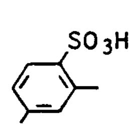 | 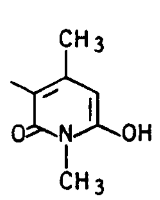 | grunstichig gelb |

Fortsetzung - Tabelle 4

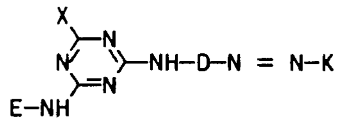

| Bsp.-Nr. | E | X | D | K | Farbton auf Baumwolle |
|---|---|---|---|---|---|
| 64 | E-1 | Cl | 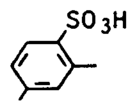 | 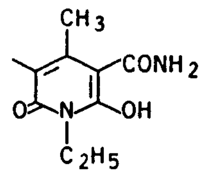 | grünstichig gelb |
| 65 | E-1 | Cl | 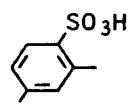 | 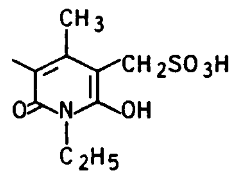 | grünstichig gelb |
| 66 | E-1 | Cl | 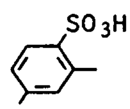 | 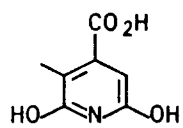 | grünstichig gelb |
| 67 | E-2 | Cl | 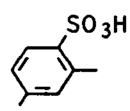 | 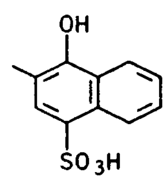 | orangerot |
| 68 | E-1 | Cl | 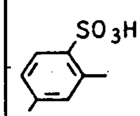 | 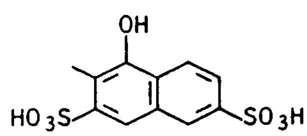 | orange |
| 69 | E-1 | F | 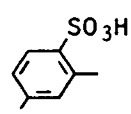 | 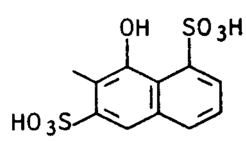 | orange |

Fortsetzung - Tabelle 4

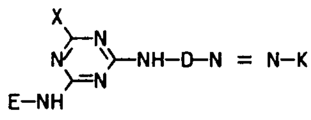

| Bsp.-Nr. | E | X | D | K | Farbton auf Baumwolle |
|---|---|---|---|---|---|
| 70 | E-5 | Cl | 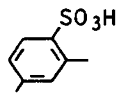 | 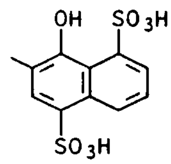 | orangerot |
| 71 | E-1 | Cl | 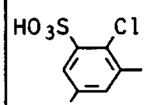 | 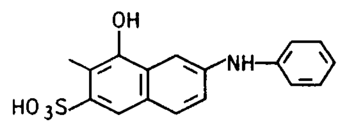 | braun |
| 72 | E-3 | Cl | 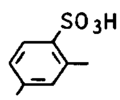 | 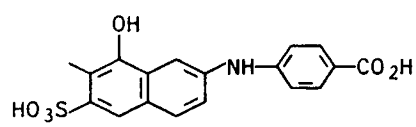 | braun |
| 73 | E-1 | Cl | 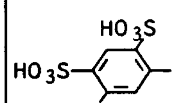 | 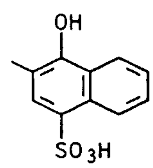 | orangerot |
| 74 | E-1 | Cl | 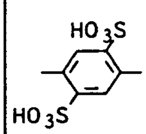 | 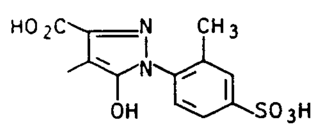 | goldgelb |
| 75 | E-2 | Cl | 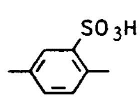 | 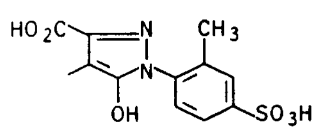 | goldgelb |
| 76 | E-1 | Cl | 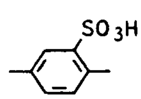 | 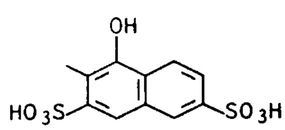 | rot |

Fortsetzung - Tabelle 4

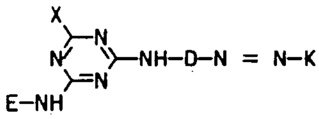

| Bsp.-Nr. | E | X | D | K | Farbton auf Baumwolle |
|---|---|---|---|---|---|
| 77 | E-1 | Cl | 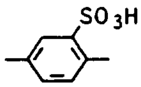 | 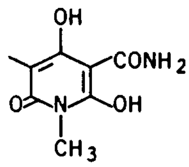 | goldgelb |
| 78 | E-3 | Cl | 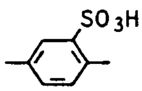 | 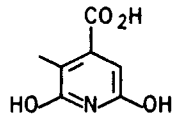 | goldgelb |
| 79 | E-3 | Cl | 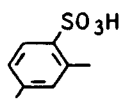 | 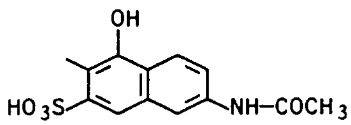 | orange |
| 80 | E-3 | F | 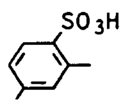 | 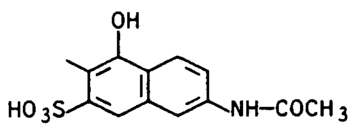 | orange |
| 81 | E-1 | Cl | 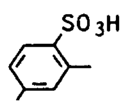 | 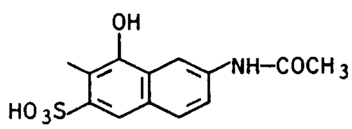 | orange |
| 82 | E-1 | Cl | 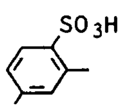 | 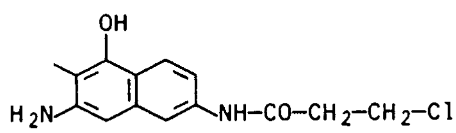 | orange |
| 83 | E-4 | Cl | 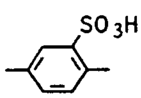 | 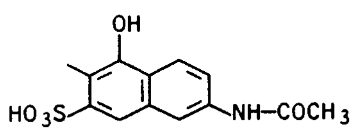 | rot |

Fortsetzung - Tabelle 4

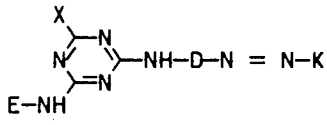

| Bsp.-Nr. | E | X | D | K | Farbton auf Baumwolle |
|---|---|---|---|---|---|
| 84 | E-2 | Cl | 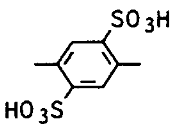 | 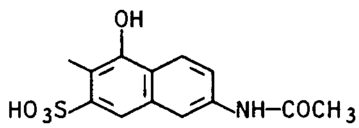 | rot |
| 85 | E-1 | Cl | 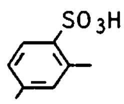 | 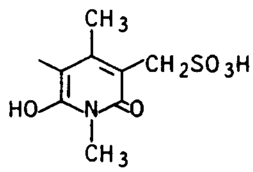 | grünstichig gelb |
| 86 | E-1 | Cl | 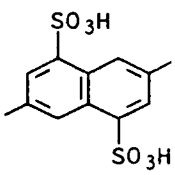 | 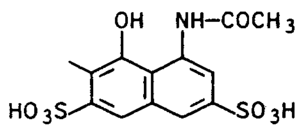 | blaustichig rot |
| 87 | E-1 | Cl | 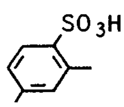 | 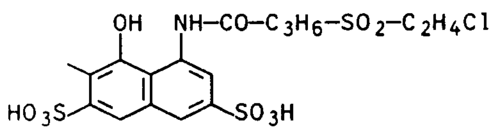 | blaustichig rot |
| 88 | E-1 | Cl | 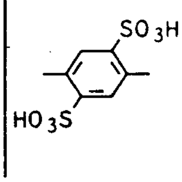 | 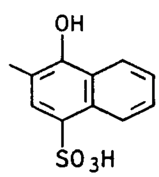 | rot |

Fortsetzung - Tabelle 4

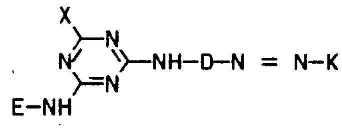

| Bsp.-Nr. | E | X | D | K | Farbton auf Baumwolle |
|---|---|---|---|---|---|
| 89 | E-2 | Cl | 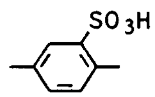 | 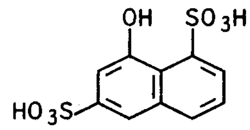 | rot |
| 90 | E-1 | Cl | 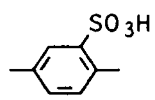 | 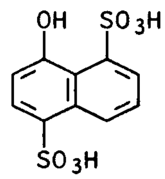 | rot |

Beispiel 91

Eine neutrale Lösung von 16,1 g 1-Amino-8-hydroxynaphthalin-3,6-disulfonsäure wurde bei 10 °C mit einer Suspension von 9,3 g Cyanurchlorid in 80 ml Eiswasser versetzt, wobei durch Zugabe konzentrierter Salzsäure der pH-Wert kleiner 2 gehalten wurde. Diese Lösung wurde Dei 0 bis 5 °C zu 8,7 g salzsauer diazotierter Anilin-2-sulfonsäure in 100 ml Wasser gegeben. Die Kupplung wurde durch Zugabe von gesättigter Natriumacetat-Lösung bei pH 4 bis 4,5 vervollständigt. Eine auf einen pH-Wert von 4,5 eingestellte Lösung von 12 g 4-(2-Chlorprop-2-enylsulfonyl)anilin-hydrochlorid in 300 ml Wasser/Aceton (1:1 v/v) wurde dann der oben hergestellten Lösung zugesetzt. Nach Verdünnen mit 500 ml Wasser wurde zur Vervollständigung der Reaktion 1,5 Stunden auf 40 bis 50 °C erwärmt, wobei durch Einstreuen von Natriumhydrogencarbonat der pH-Wert bei 4 bis 4,5 gehalten wurde.

Der entstandene Farbstoff färbt Baumwolle in echtem brillianten roten Ton und besitzt die Strukturformel

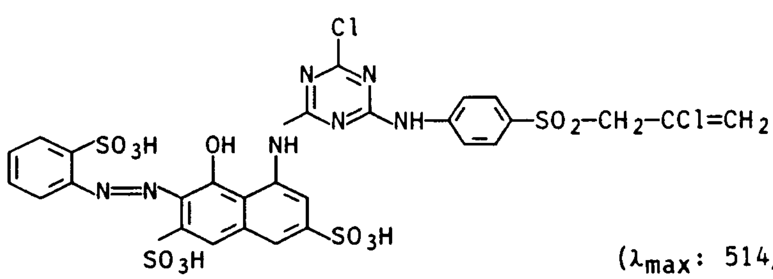

($\lambda_{max}$: 514/534 nm)

Beispiel 92

31,9 g (0,1 mol) 1-Amino-8-hydroxynaphthalin-3,6-disulfonsäure wurden in 150 g Wasser neutral gelöst und auf 0 bis 5 °C abgekühlt. Bei dieser Temperatur wurde eine Suspension aus 18,2 g (0,1 mol) Cyanurchlorid und 200 g Eis eingetragen und bis zur vollständigen Umsetzung gerührt. Anschließend wurde das Reaktionsgemisch mit 23,2 g (0,1 mol) 3-(2-Chlorprop-2-enylsulfonyl)anilin, gelöst in 150 ml Wasser/Aceton (1:1 v/v), versetzt, der pH-Wert mittels 2 N Natronlauge auf 5,5 bis 6 gestellt und die Temperatur

innerhalb von 2 bis 3 Stunden auf 20 bis 25 °C erhöht.

Nach beendeter Reaktion wurde das Reaktionsgemisch auf 0 bis 10 °C abgekühlt und mit 17,3 g diazotierter Anilin-2-sulfonsäure bei einem pH-Wert von 5,5 gekuppelt. Nach beendeter Kupplung wurde der Farbstoff durch Aussalzen isoliert. Der Farbstoff färbt Baumwolle in rotem Ton und entspricht der Formel

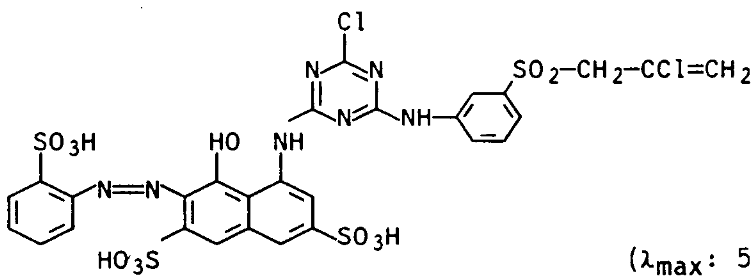

($\lambda_{max}$: 513/534 nm)

Beispiel 93

Eine auf pH 4,5 eingestellte wäßrige Lösung von 19,5 g des in Beispiel 91 beschriebenen Azofarbstoffs der Formel

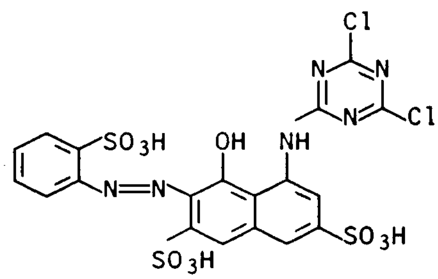

wurde mit einer Lösung von 11,7 g 4-(2-Bromprop-2-enylsulfonyl)anilinhydrochlorid in 300 ml Wasser/Aceton (1:1 v/v) bei einem pH-Wert von 4 bis 4,5 versetzt. Zur Vervollständigung der Reaktion wurde 1 Stunde auf 40 bis 50 °C erwärmt. Der erhaltene Farbstoff wurde nach Abkühlen auf 20 °C mit Natriumchlorid ausgesalzen und gefriergetrocknet. Er färbt Baumwolle mit echtem, brillianten roten Ton und entspricht der Formel

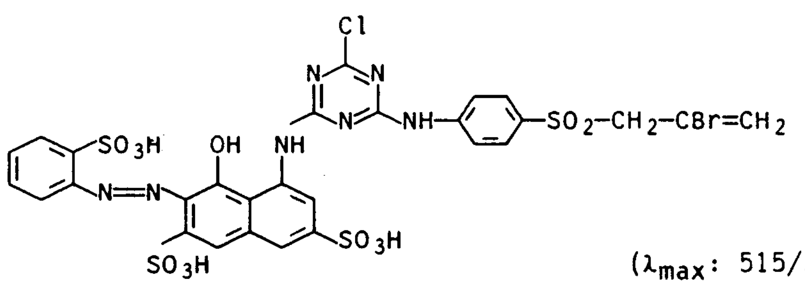

($\lambda_{max}$: 515/534 nm)

Beispiel 94

32,8 g des durch Kupplung von diazotierter 2-Aminonaphthalin-3,6,8-trisulfonsäure mit 3-Aminophenylharnstoff erhaltenen Azofarbstoffs wurden in 150 ml Wasser neutral gelöst, bei 15 bis 20 °C mit einer salzsauren Suspension von 11,1 g Cyanurchlorid in 100 ml Eiswasser versetzt, wobei der pH-Wert durch Zugabe von 20 gew.-%iger Natronlauge bei 7 gehalten wurde. Nach einer Stunde Rühren bei 20 °C wurde eine Lösung von 29 g 4-(2-Chlorprop-2-enylsulfonyl)anilin-hydrochlorid in 400 ml Wasser/Aceton (1:1 v/v)

zugesetzt und der pH-Wert durch Zugabe von 20 gew.-%iger Natronlauge auf 6,5 gestellt. Zur Vervollständigung der Reaktion wurde 5 Stunden auf 40 bis 45 ° C erwärmt. Nach Abkühlen auf 20 ° C wurde der erhaltene Farbstoff durch Zugabe von Isopropanol gefällt und gefriergetrocknet. Er färbt Baumwolle in goldgelber Nuance mit guten Echtheiten und entspricht der Formel

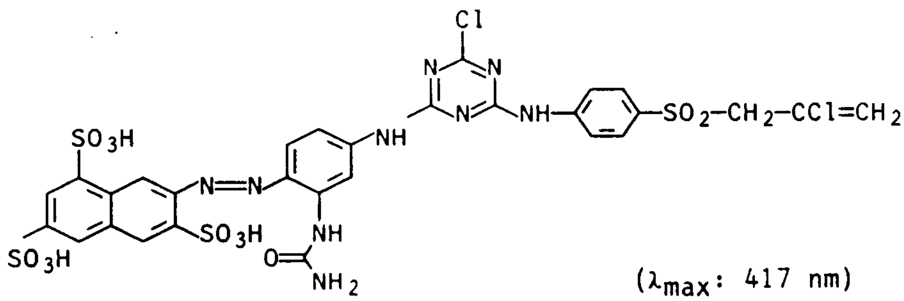

($\lambda_{max}$: 417 nm)

Beispiel 95

28,6 g 2-Aminonaphthalin-1,5-disulfonsäure wurden in 400 ml Wasser bei 0 bis 5 ° C salzsauer diazotiert, dann einer salzsauren Lösung von 23,5 g des in Beispiel 91 beschriebenen Kondensationsproduktes aus 1-Amino-8-hydroxynaphthalin-3,6-disulfonsäure und Cyanurchlorid zugesetzt. Durch Zugabe von gesättigter Natriumacetat-Lösung wurde der pH-Wert auf 4,5 gestellt, die Lösung noch 1 Stunde bei 20 ° C gerührt und dann mit 18 g 4-(2-Chlorprop-2-enlylsulfonyl)anilin-hydrochlorid, in 300 ml Wasser/Aceton (1:1 v/v) gelöst, versetzt. Nach 2 Stunden Rühren bei pH 4,5 war die Reaktion beendet. Der erhaltene Farbstoff wurde dann mit Natriumchlorid ausgesalzen und gefriergetrocknet. Er färbt Baumwolle in blaustichig rotem Ton mit guten Echtheiten und entspricht der Formel

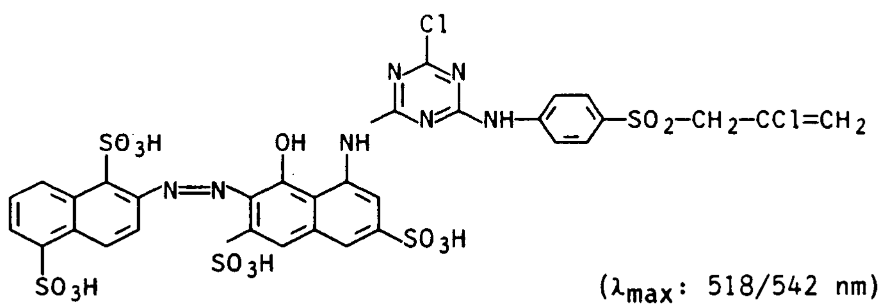

($\lambda_{max}$: 518/542 nm)

Beispiel 96

14,2 g 4-(2-Sulfoatoethylsulfonyl)anilin wurden in 200 ml Wasser bei 0 bis 5 ° C salzsauer diazotiert, dann einer salzsauren Lösung von 23,5 g des in Beispiel 91 beschriebenen Kondensationsproduktes aus 1-Amino-8-hydroxynaphthalin-3,6-disulfonsäure und Cyanurchlorid zugesetzt. Durch Zugabe von gesättigter Natriumacetat-Lösung wurde der pH-Wert auf 4,5 eingestellt und nach 30-minütigem Rühren bei 30 ° C wurde eine Lösung von 16 g 4-(2-Chlorprop-2-enylsulfonyl)anilin-hydrochlorid in 250 ml Wasser/Aceton (1:1 v/v) zugegeben. Zur Vervollständigung der Reaktion wurde die Lösung 1,5 Stunden auf 40 bis 45 ° C erwärmt. Der entstandene Farbstoff wurde mit Natriumchlorid ausgesalzen und gefriergetrocknet. Er färbt Baumwolle in blaustichig rotem Ton mit guten Echtheiten und besitzt die Formel

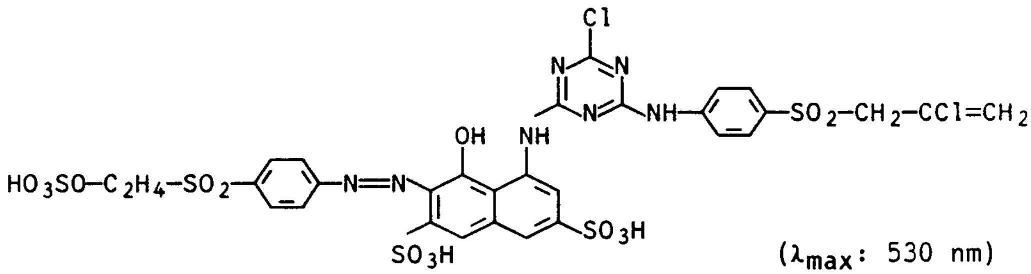

($\lambda_{max}$: 530 nm)

Beispiel 97

Eine neutrale Lösung von 15,9 g 1-Amino-8-hydroxynaphthalin-3,6-disulfonsäure wurde bei 10 °C mit einer Suspension von 9,3 g Cyanurchlorid in 80 ml Eiswasser versetzt, wobei durch Zugabe von konzentrierter Salzsäure der pH-Wert kleiner 2 gehalten wurde. Diese Lösung wurde bei 0 bis 5 °C zu 9 g salzsauer diazotierter Anilin-2-sulfonsäure in 100 ml Wasser gegeben. Die Kupplung wurde durch Zugabe von gesättigter Natriumacetat-Lösung bei pH 4 bis 4,5 vervollständigt. Eine auf einen pH-Wert von 4,5 eingestellte Lösung von 23 g 2-[4-(2-Chlorprop-2-enylsulfonyl)phenyl]ethylamin-hydrochlorid in 300 ml Wasser/Aceton (1:1 v/v) wurde der oben hergestellten Lösung zugesetzt. Nach Verdünnen mit 500 ml Wasser wurde zur Vervollständigung der Reaktion zwei Stunden auf 40 bis 50 °C erwärmt.

Der entstandene Farbstoff wurde mit Natriumchlorid gefällt und gefriergetrocknet. Er färbt Baumwolle in echtem brillianten rotem Ton und besitzt die Strukturformel

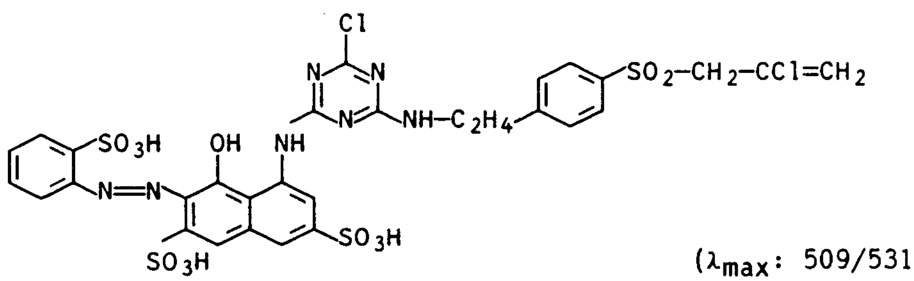

($\lambda_{max}$: 509/531 nm)

Beispiel 98

14,2 g 4-(2-Sulfatoethylsulfonyl)anilin wurden in 200 ml Wasser bei 0 bis 5 °C salzsauer diazotiert, dann einer salzsauren Lösung von 23,5 g des in Beispiel 91 beschriebenen Kondensationsproduktes aus 1-Amino-8-hydroxynaphthalin-3,6-disulfonsäure und Cyanurchlorid zugesetzt. Durch Zugabe von gesättigter Natriumacetat-Lösung wurde der pH-Wert auf 4,5 eingestellt. Anschließend wurde eine Lösung von 31 g 2-[4-(2-Chlorprop-2-enylsulfonyl)-phenyl]ethylamin-hydrochlorid in 400 ml Wasser/Aceton (1:1 v/v) zugegeben. Zur Vervollständigung der Reaktion wurde die Lösung 7,5 Stunden auf 40 bis 45 °C erwärmt. Der entstandene Farbstoff wurde mit Natriunmchlorid ausgesalzen und gefriergetrocknet. Er färbt Baumwolle in blaustichig rotem Ton mit guten Echtheiten und besitzt die Formel

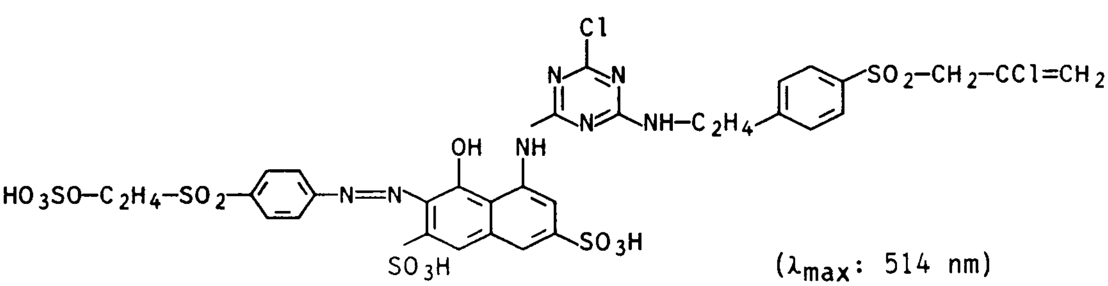

($\lambda_{max}$: 514 nm)

In analoger Weise werden die in Tabelle 5 aufgeführten Farbstoffe erhalten.

Tabelle 5

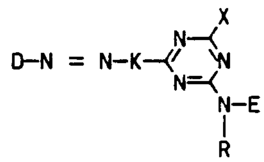

| Bsp.-Nr. | D | R | K | X | E | Farbton auf Baumwolle |
|---|---|---|---|---|---|---|
| 99 | 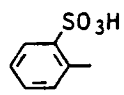 | H | 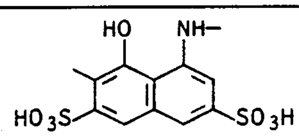 | F | E-3 | rot |
| 100 | 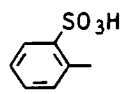 | H | 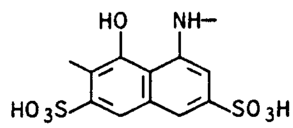 | F | E-1 | rot |
| 101 | 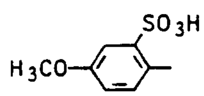 | H | 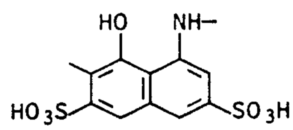 | Cl | E-1 | bordorot |
| 102 | 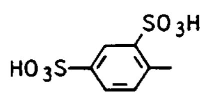 | H | 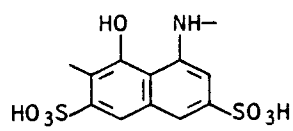 | Cl | E-1 | blaustichig rot |
| 103 | 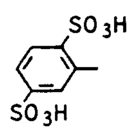 | H | 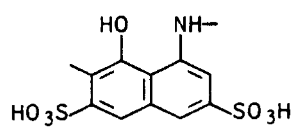 | Cl | E-1 | blaustichig rot |
| 104 | 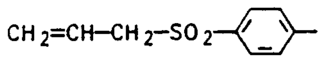 | H | 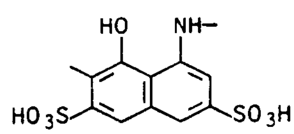 | Cl | E-1 | rot |
| 105 | 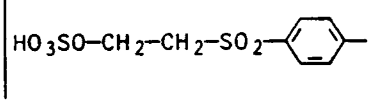 | H | 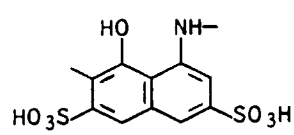 | Cl | E-3 | rot |

Fortsetzung - Tabelle 5

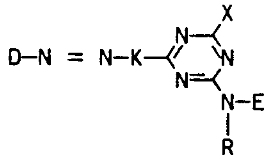

| Bsp.-Nr. | D | R | K | X | E | Farbton auf Baumwolle |
| --- | --- | --- | --- | --- | --- | --- |
| 106 | 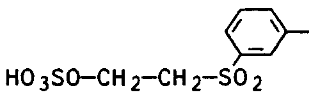 | H | 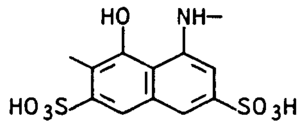 | F | E-1 | rot |
| 107 | 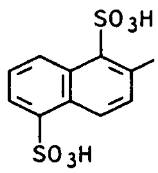 | H | 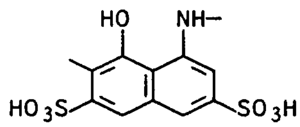 | Cl | E-3 | blaustichig rot |
| 108 | 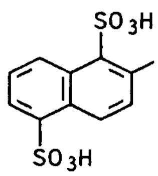 | $CH_3$ | 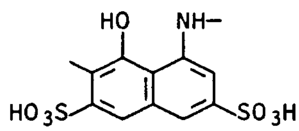 | Cl | E-1 | blaustichig rot |
| 109 | 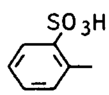 | | 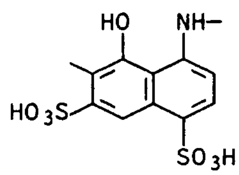 | Cl | E-1 | rot |
| 110 | 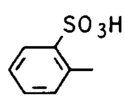 | H | 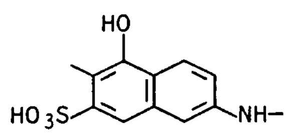 | Cl | E-1 | orange |
| 111 | 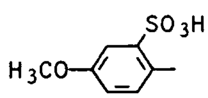 | H | 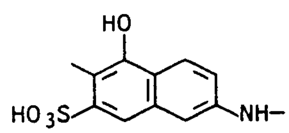 | Cl | E-1 | orange |

Fortsetzung - Tabelle 5

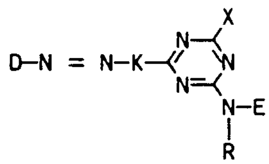

| Bsp.-Nr. | D | R | K | X | E | Farbton auf Baumwolle |
|---|---|---|---|---|---|---|
| 112 | 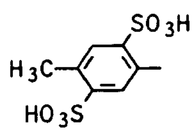 | H | 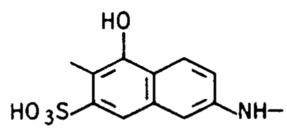 | Cl | E-1 | orange |
| 113 | 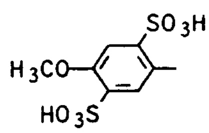 | H | 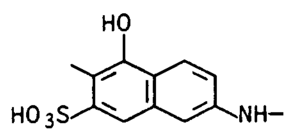 | Cl | E-1 | orange |
| 114 | 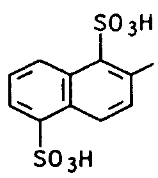 | H | 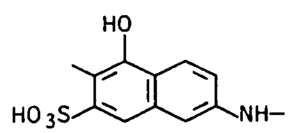 | Cl | E-1 | orange |
| 115 | 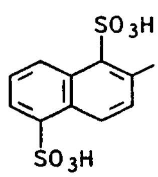 | H | 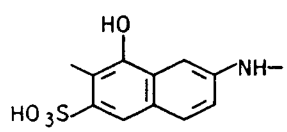 | Cl | E-1 | scharlach-rot |
| 116 | 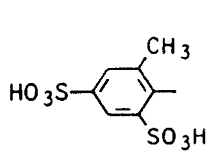 | H | 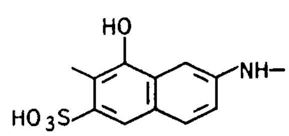 | Cl | E-1 | scharlach-rot |

Fortsetzung - Tabelle 5

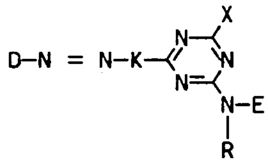

| Bsp.-Nr. | D | R | K | X | E | Farbton auf Baumwolle |
|---|---|---|---|---|---|---|
| 117 | 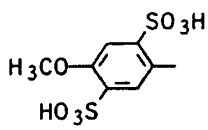 | H | 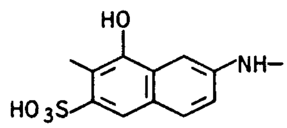 | Cl | E-1 | scharlach-rot |
| 118 | 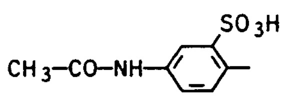 | H | 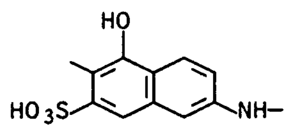 | Cl | E-1 | rot |
| 119 | 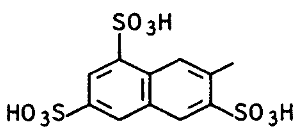 | H | 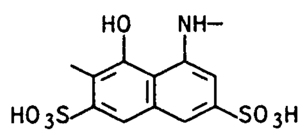 | Cl | E-1 | bordo |
| 120 | 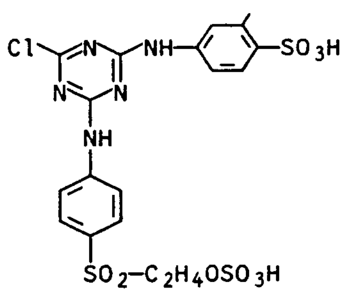 | H | 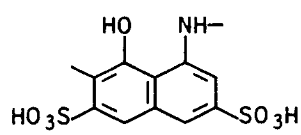 | Cl | E-1 | rot |

Fortsetzung - Tabelle 5

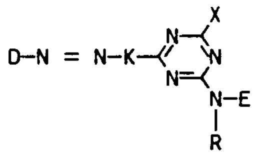

| Bsp.-Nr. | D | R | K | X | E | Farbton auf Baumwolle |
|---|---|---|---|---|---|---|
| 121 | 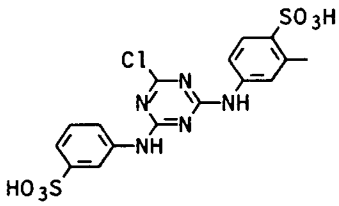 | H | 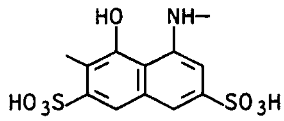 | Cl | E-1 | rot |
| 122 | 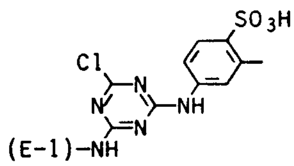 | H | 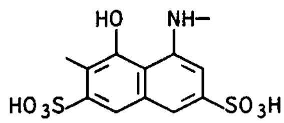 | Cl | E-1 | rot |
| 123 | 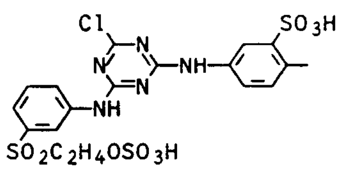 | H | 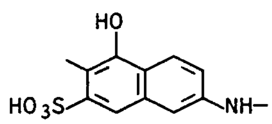 | Cl | E-1 | rot |
| 124 | 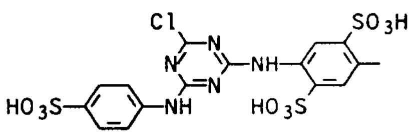 | H | 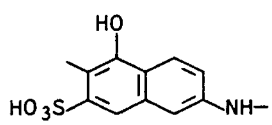 | Cl | E-1 | rot |
| 125 | 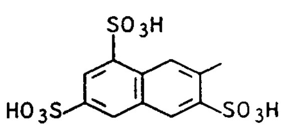 | H | 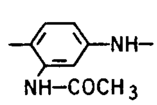 | Cl | E-1 | goldgelb |
| 126 | 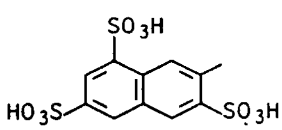 | H | 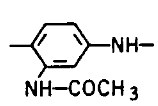 | F | E-1 | goldgelb |

Fortsetzung - Tabelle 5

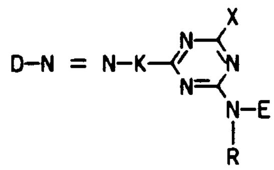

| Bsp.-Nr. | D | R | K | X | E | Farbton auf Baumwolle |
|---|---|---|---|---|---|---|
| 127 | 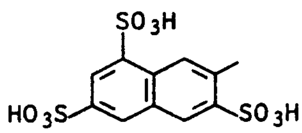 | H | 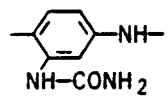 | F | E-1 | goldgelb |
| 128 | 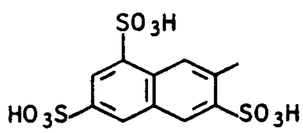 | $CH_3$ | 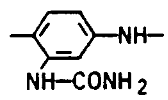 | Cl | E-1 | goldgelb |
| 129 | 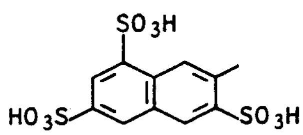 | H | 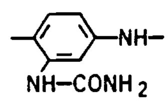 | Cl | E-3 | goldgelb |
| 130 | 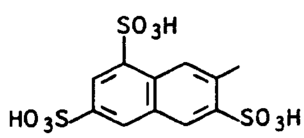 | H | 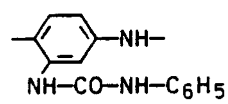 | Cl | E-1 | goldgelb |
| 131 | 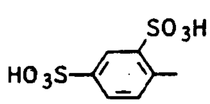 | H | 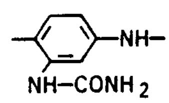 | Cl | E-1 | gelb |
| 132 | 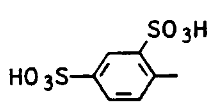 | H | 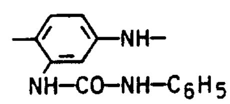 | Cl | E-1 | gelb |

Fortsetzung - Tabelle 5

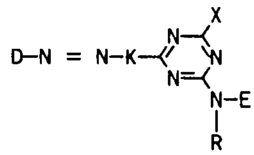

| Bsp.-Nr. | D | R | K | X | E | Farbton auf Baumwolle |
|---|---|---|---|---|---|---|
| 133 | 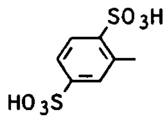 | H | 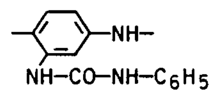 | Cl | E-1 | gelb |
| 134 | 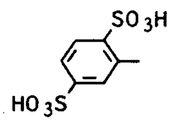 | H | 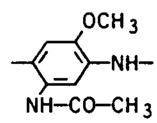 | Cl | E-1 | goldgelb |
| 135 | 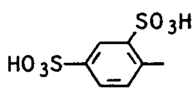 | H | 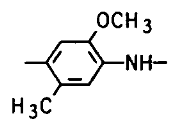 | Cl | E-1 | goldgelb |
| 136 | 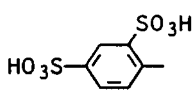 | H | 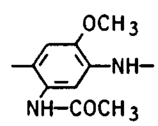 | Cl | E-1 | goldgelb |
| 137 | 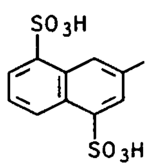 | H | 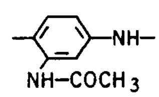 | Cl | E-1 | goldgelb |
| 138 | 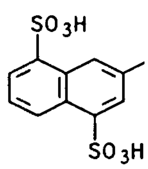 | H | 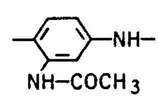 | F | E-1 | goldgelb |
| 139 | 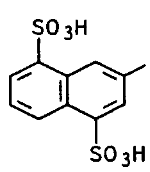 | H | 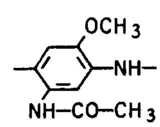 | Cl | E-4 | goldgelb |

Fortsetzung - Tabelle 5

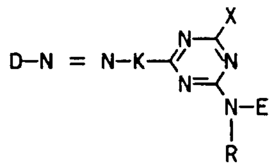

| Bsp.-Nr. | D | R | K | X | E | Farbton auf Baumwolle |
|---|---|---|---|---|---|---|
| 140 | E-1 | H | 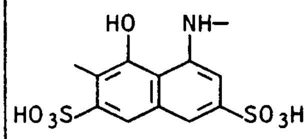 | Cl | E-3 | rot |
| 141 | E-1 | H | 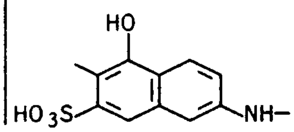 | Cl | E-1 | rot |

Beispiel 142

15,9 g 1-Amino-8-hydroxynaphthalin-3,6-disulfonsäure wurden bei 0 bis 5 °C in 210 ml 10 gew.%iger Salzsäure suspendiert und während 35 Minuten mit einer ebenfalls eisgekühlten Lösung von 14 g salzsauer diazotiertem 4-(2-Sulfatoethylsulfonyl)anilin versetzt. Während 14 Stunden Rühren wurde auf 25 °C erwärmt, dann bei 20 °C mit einer Lösung von 13,7 g salzsauer diazotiertem 4-(2-Chlorprop-2-enylsulfonyl)anilin-hydrochlorid versetzt. Zur Vervollständigung der Kupplung wurde der pH-Wert auf 4,5 eingestellt. Nach 1 Stunde Rühren wurde der entstandene Farbstoff mit Isopropanol gefällt und getrocknet. Er färbt Baumwolle in marineblauem Ton mit guten Echtheiten und entspricht der Formel

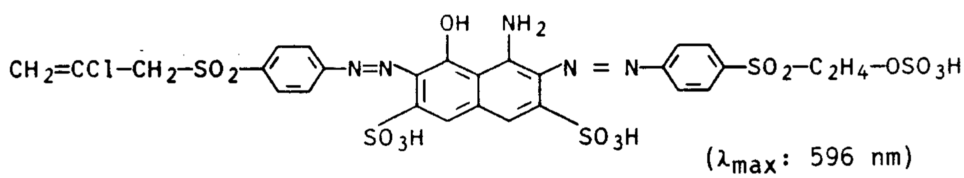

($\lambda_{max}$: 596 nm)

Beispiel 143

15,9 g 1-Amino-8-hydroxynaphthalin-3,6-disulfonsäure wurden bei 0 bis 5 °C in 210 ml 10 gew.%iger Salzsäure suspendiert und während 35 Minuten mit einer ebenfalls eisgekühlten Lösung aus 13,4 g salzsauer diazotiertem 4-(2-Sulfatoethylsulfonyl)anilin versetzt. Während 14 Stunden Rühren wurde auf 25 °C erwärmt, dann bei 20 °C mit einer Lösung von 14,5 g salzsauer diazotiertem 4-(2-Chlorprop-2-enylsulfonyl)anilin-hydrochlorid versetzt. Zur Vervollständigung der Kupplung wurde mit gesättigter Natriumacetatlösung der pH-Wert auf 4,5 gestellt. Nach 1 Stunde Rühren war die Reaktion beendet. Der entstandene Farbstoff wurde dann mit Isopropanol gefällt und getrocknet. Er färbt Baumwolle in marineblauem Ton mit guten Echtheiten und entspricht der Formel

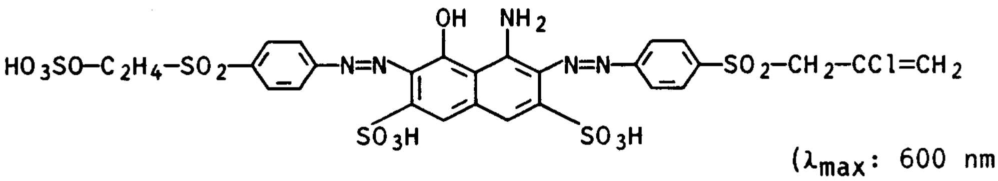

($\lambda_{max}$: 600 nm)

Weitere erfindungsgemäße Farbstoffe enthält Tabelle 6.

Tabelle 6

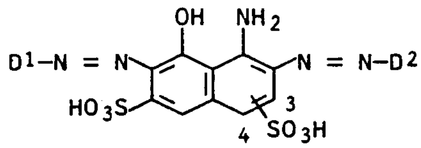

| Bsp.-Nr. | $D^1$ | $D^2$ | Stellung 3,4 | Farbton auf Baumwolle |
|---|---|---|---|---|
| 144 | 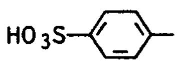 | E-1 | 3 | marineblau |
| 145 | 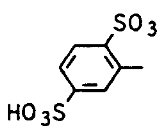 | E-2 | 3 | marineblau |
| 146 | 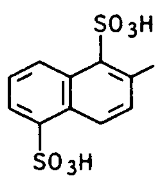 | E-1 | 4 | marineblau |
| 147 | E-1 | E-1 | 3 | marineblau |
| 148 | E-1 | E-2 | 3 | marineblau |
| 149 | E-1 | 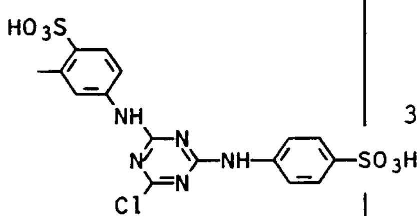 | 3 | marineblau |
| 150 | E-1 | 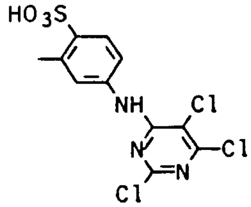 | 3 | marineblau |

Fortsetzung - Tabelle 6

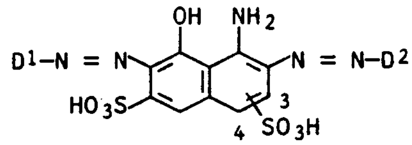

| Bsp.-Nr. | $D^1$ | $D^2$ | Stellung 3,4 | Farbton auf Baumwolle |
|---|---|---|---|---|
| 151 | E-1 | 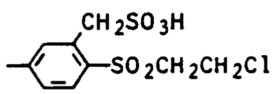 | 3 | marineblau |
| 152 | E-1 | 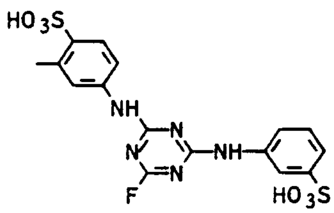 | 3 | marineblau |
| 153 | E-1 | 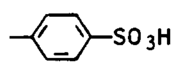 | 3 | marineblau |
| 154 | E-1 | 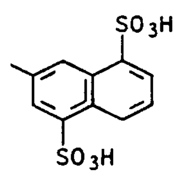 | 4 | marineblau |
| 155 | E-1 | 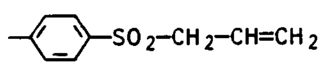 | 3 | marineblau |
| 156 | E-1 | 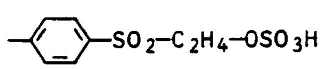 | 3 | marineblau |
| 157 | E-1 | 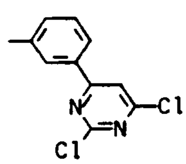 | 3 | marineblau |

Fortsetzung - Tabelle 6

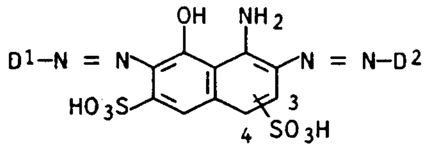

| Bsp.-Nr. | $D^1$ | $D^2$ | Stellung 3,4 | Farbton auf Baumwolle |
|---|---|---|---|---|
| 158 | E-2 | 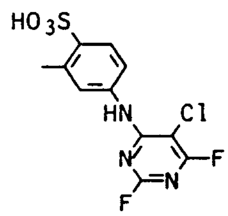 | 3 | marineblau |
| 159 | E-1 | 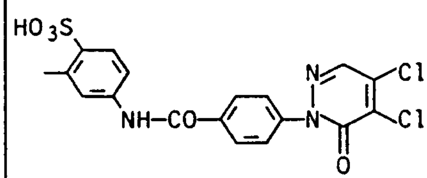 | 3 | marineblau |
| 160 | 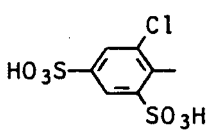 | E-1 | 3 | rotstichig marineblau |
| 161 | $CH_2$=CH-$CH_2O_2S$- 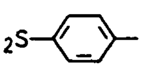 | E-1 | 3 | marineblau |
| 162 | $HO_3SOH_4C_2O_2S$- 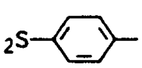 | E-2 | 3 | marineblau |
| 163 | 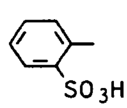 | E-1 | 3 | marineblau |
| 164 | $HO_3SOH_4C_2HNO_2S$- 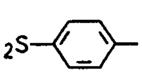 | E-1 | 3 | marineblau |

Fortsetzung - Tabelle 6

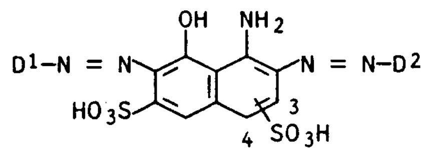

| Bsp.-Nr. | $D^1$ | $D^2$ | Stellung 3,4 | Farbton auf Baumwolle |
|---|---|---|---|---|
| 165 | E-1 | 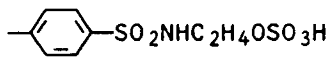 | 3 | marineblau |
| 166 | 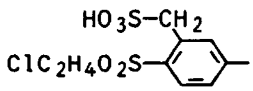 | E-1 | 3 | marineblau |

Beispiel 167

8,7 g Sulfanilsäure wurden in 250 ml Wasser salzsauer diazotiert. Man tropfte eine Suspension von 13,7 g 1-Amino-8-hydroxy-naphthalin-3,6-disulfonsäure in 100 ml Wasser hinzu und rührte 12 Stunden bei Raumtemperatur und einem pH-Wert von 1,5. Man kühlte auf 10 °C ab und setzte eine Diazokomponente zu, die durch salzsaure Diazotierung von 55,4 g des sekundären Kondensationsprodukts aus 4-(2-Chlorprop-2-enylsulfonyl)anilin,Cyanurchlorid und 1,3-Phenylendiamin-4-sulfonsäure in 750 ml Wasser erhalten wurde.

Anschließend ließ man bei einem pH-Wert von 5,5 bis 6 durch Zugabe von Natriumhydrogencarbonat über Nacht ausreagieren. Man salzte mit 200 g Natriumchlorid aus und erhielt nach dem Trocknen einen Farbstoff der Formel

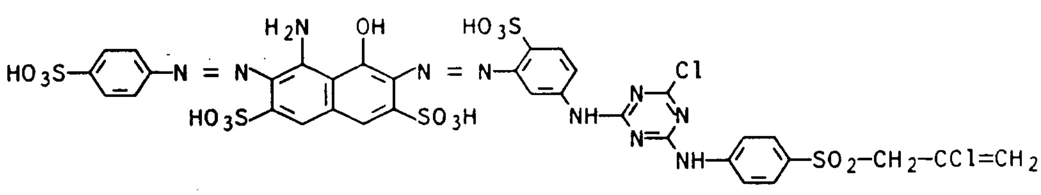

der Baumwolle in echtem, marineblauen Ton färbt.

Beispiel 168

Man ersetzte in Bsp. 167 1-Amino-8-hydroxynaphthalin-3,6-disulfonsäure durch 1-Amino-8-hydroxynaphthalin-4,6-disulfonsäure und erhielt einen Farbstoff mit ähnlichen Eigenschaften.

Tabelle 7 enthält weitere Farbstoffbeispiele, die analog Beispiel 167 erhalten werden.

Tabelle 7

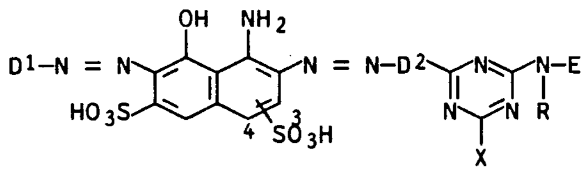

| Bsp.-Nr. | $D^1$ | R | Stellung 3/4 | $D^2$ | X | E | Farbton auf Baumwolle |
|---|---|---|---|---|---|---|---|
| 169 | 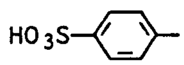 | H | 3 | 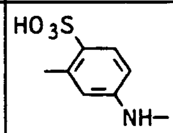 | F | E-1 | marineblau |
| 170 | 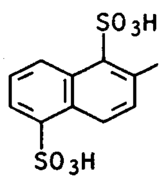 | H | 3 | 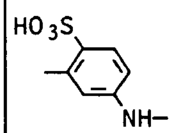 | Cl | E-1 | marineblau |
| 171 | 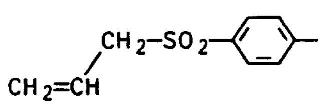 | H | 4 | 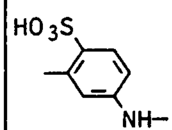 | Cl | E-1 | marineblau |
| 172 | 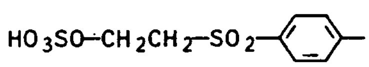 | H | 3 | 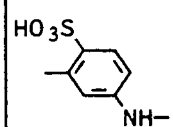 | Cl | E-3 | marineblau |
| 173 | 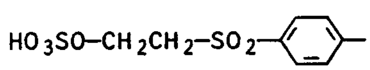 | H | 3 | 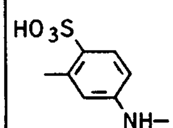 | Cl | E-4 | marineblau |
| 174 | 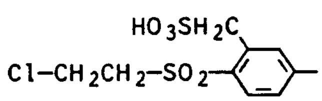 | H | 3 | 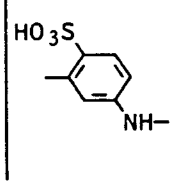 | Cl | E-1 | marineblau |

Fortsetzung - Tabelle 7

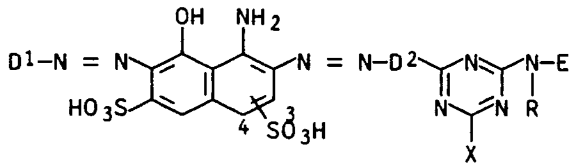

| Bsp.-Nr. | $D^1$ | R | Stellung 3/4 | $D^2$ | X | E | Farbton auf Baumwolle |
|---|---|---|---|---|---|---|---|
| 175 | 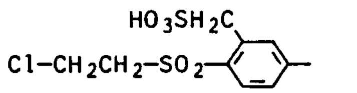 | $CH_3$ | 3 | 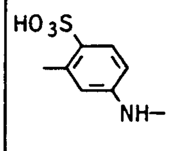 | Cl | E-1 | marineblau |
| 176 | 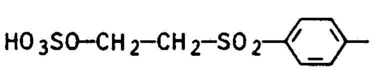 | H | 3 | 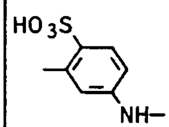 | Cl | E-1 | marineblau |
| 177 | 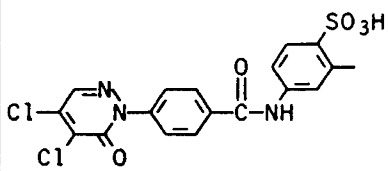 | H | 3 | 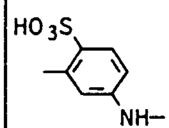 | Cl | E-1 | marineblau |
| 178 | 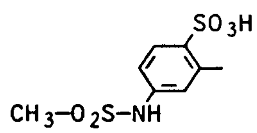 | H | 3 | 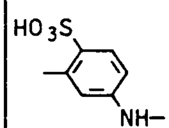 | Cl | E-1 | marineblau |
| 179 | 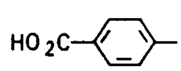 | H | 3 | 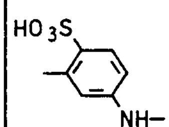 | Cl | E-1 | marineblau |
| 180 | 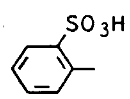 | H | 3 | 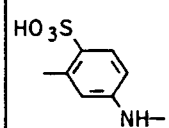 | Cl | E-1 | marineblau |
| 181 | 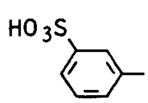 | H | 3 | 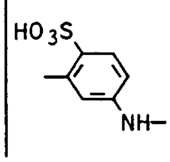 | Cl | E-1 | marineblau |

Beispiel 182

Zu der Lösung von 28,2 g des diazotierten sekundären Kondensationsproduktes von 1,3-Phenylendiamin-4-sulfonsäure, Cyanurchlorid und 4-(2-Chlorprop-2-enylsulfonyl)anilin in 750 ml Wasser gab man bei 0 bis 5 °C 15,9 g 1-Amino-8-hydroxynaphthalin-3,6-disulfonsäure, suspendiert in 100 ml Wasser. Mit Natriumformiat wurde ein pH-Wert von 2,5 bis 3 gehalten. Man ließ 12 Stunden bei Raumtemperatur rühren,

gab dann bei 10 °C 8,7 g salzsauer diazotierte Anilin-4-sulfonsäure, in 200 ml Wasser gelöst, hinzu und hielt den pH-Wert mit Natriumbicarbonat bei 6 bis 6,5. Nach dem Aussalzen mit Natriumchlorid erhielt man einen Farbstoff der Formel

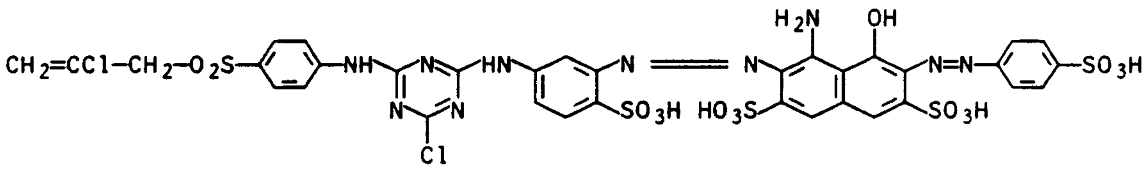

Die in Tabelle 8 aufgeführten Farbstoffe werden in analoger Weise erhalten.

Tabelle 8

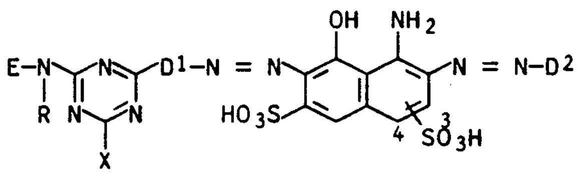

| Bsp.-Nr. | E | X | D1 | Stellung 3/4 | D2 | R | Farbton auf Baumwolle |
|---|---|---|---|---|---|---|---|
| 183 | E-1 | Cl | 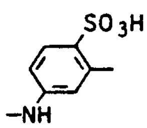 | 3 | 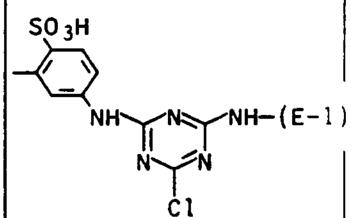 | H | marineblau |
| 184 | E-1 | Cl | 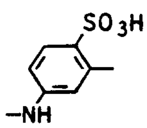 | 3 | 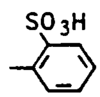 | H | marineblau |

Fortsetzung - Tabelle 8

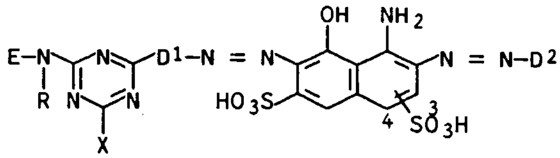

| Bsp.-Nr. | E | X | D1 | Stellung 3/4 | D2 | R | Farbton auf Baumwolle |
|---|---|---|---|---|---|---|---|
| 185 | E-1 | Cl | 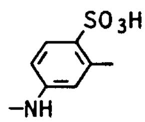 | 3 | 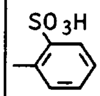 | $CH_3$ | marineblau |
| 186 | E-1 | Cl | 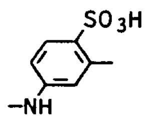 | 4 | 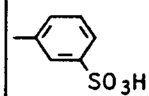 | H | marineblau |
| 187 | E-2 | Cl | 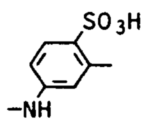 | 3 | 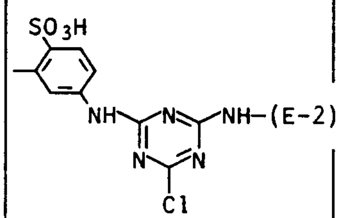 | H | marineblau |
| 188 | E-1 | Cl | 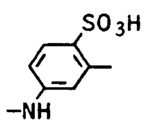 | 3 | 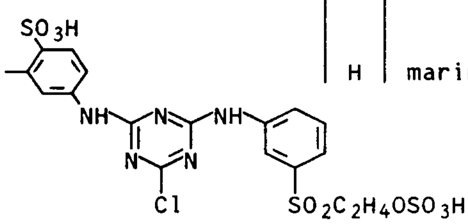 | H | marineblau |
| 189 | E-1 | Cl | 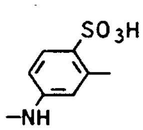 | 4 | 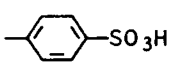 | H | marineblau |
| 190 | E-1 | Cl | 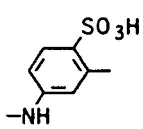 | 3 | 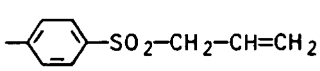 | H | marineblau |

Fortsetzung - Tabelle 8

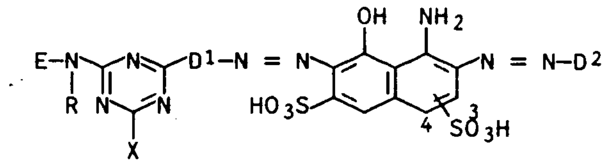

| Bsp.-Nr. | E | X | D1 | Stellung 3/4 | D2 | R | Farbton auf Baumwolle |
|---|---|---|---|---|---|---|---|
| 191 | E-1 | Cl | 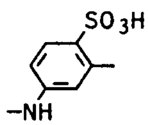 | 4 | 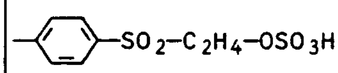 | H | marineblau |
| 192 | E-1 | Cl | 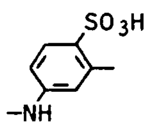 | 3 | 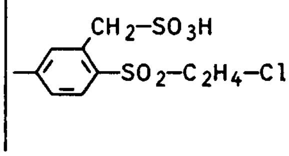 | H | marineblau |

Beispiel 193

38,6 g des bekannten Farbstoffs der Formel

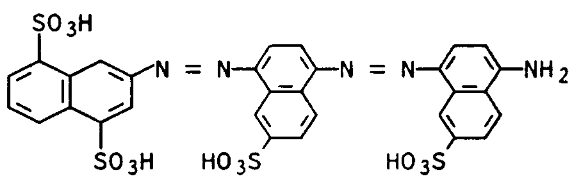

wurden bei einem pH-Wert von 7 in 400 ml Wasser bei 40 ° C vorgelegt und mit 21,4 g des wie in Beispiel 51 hergestellten primären Kondensationsproduktes aus Cyanurchlorid und 4-(2-Chlorprop-2-enylsulfonyl)-anilin in 500 ml Wasser versetzt. Man rührte bei 40 ° C und einem pH-Wert von 5 bis 6 bis dünnschichtchromatographisch keine freien Aminogruppen mehr nachweisbar waren. Der nach Aussalzen mit Kaliumchlorid erhaltene Farbstoff entspricht der Formel

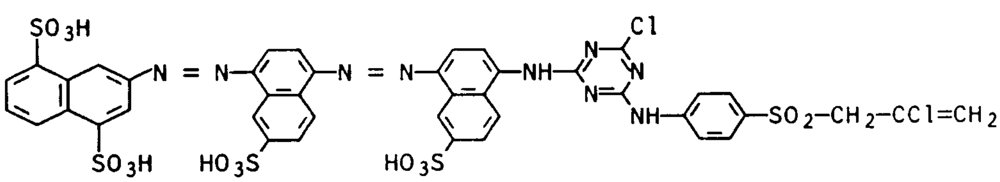

und färbt Baumwolle in rotbraunem Ton.

Tabelle 9 enthält Farbstoffe, die auf analoge Weise erhalten werden.

Tabelle 9

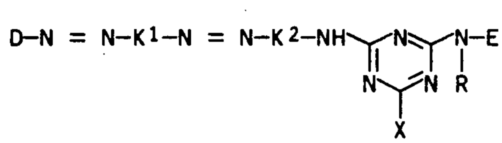

| Bsp.-Nr. | D | $K^1$ | $K^2$ | R | X | E | Farbton auf Baumwolle |
|---|---|---|---|---|---|---|---|
| 194 | 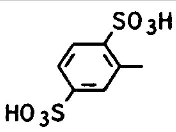 | 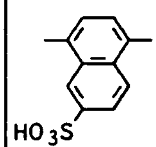 | 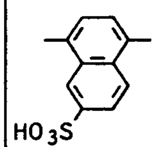 | H | Cl | E-1 | rotstichig braun |
| 195 | 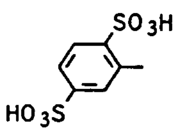 | 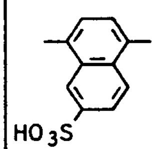 | 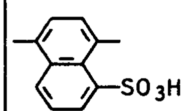 | H | Cl | E-1 | rotstichig braun |
| 196 | 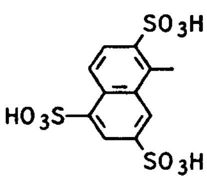 | 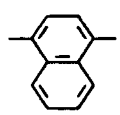 | 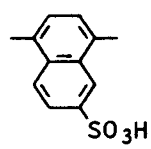 | H | Cl | E-1 | rotstichig braun |
| 197 | 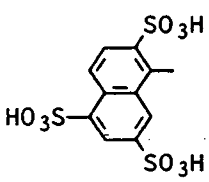 | 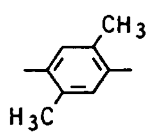 | 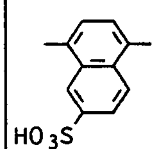 | H | Cl | E-1 | gelbstichig braun |
| 198 | 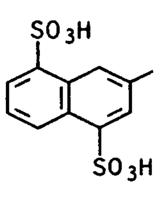 | 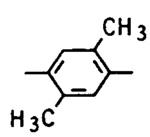 | 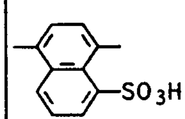 | H | Cl | E-2 | gelbstichig braun |

Fortsetzung - Tabelle 9

| Bsp.-Nr. | D | K¹ | K² | R | X | E | Farbton auf Baumwolle |
|---|---|---|---|---|---|---|---|
| 199 | 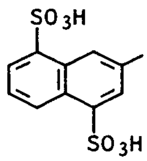 | 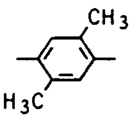 | 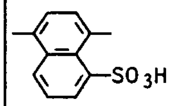 | $CH_3$ | Cl | E-1 | gelbstichig braun |
| 200 | 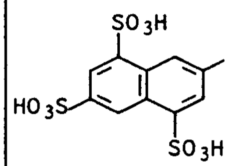 | 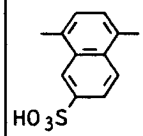 | 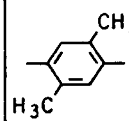 | H | F | E-1 | gelbstichig braun |
| 201 | 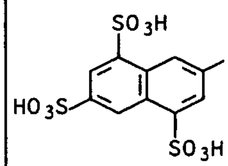 | 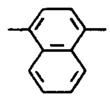 | 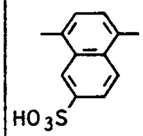 | H | Cl | E-1 | rotstichig braun |
| 202 | E-1 | 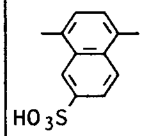 | 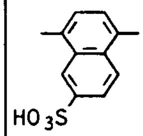 | H | Cl | 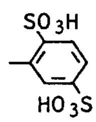 | rotbraun |
| 203 | 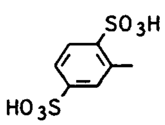 | 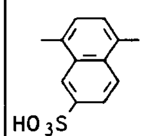 | 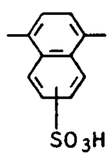 | H | Cl | E-1 | rotbraun |
| 204 | 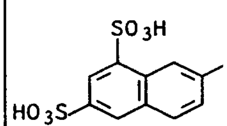 | 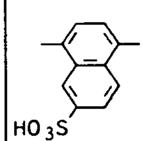 | 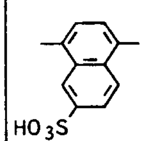 | H | Cl | E-1 | rotbraun |
| 205 | 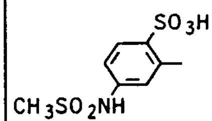 | 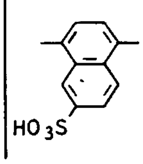 | 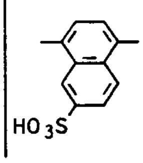 | H | Cl | E-1 | rotbraun |

Beispiel 206

43,4 g 88 %ige 1-Amino-4-bromanthrachinon-2-sulfonsäure, 29,5 g des Hydrochlorids der Formel

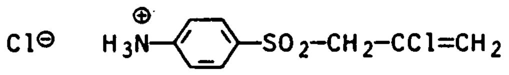

1,5 g Cu-Pulver, 0,75 g Cu-II-Sulfat und 50,4 g Natriumhydrogencarbonat wurden 48 Stunden auf 65 bis 70 °C erhitzt. Nach vollständigem Umsatz (Dünnschichtchromatographie) wurde heiß filtriert und das Filtrat mit konz. Salzsäure auf einen pH-Wert von 1 gestellt. Der ölige Rückstand wurde bei 0 bis 5 °C durch Ausrühren mit 100 ml Ethanol kristallisiert, das kristalline Produkt isoliert, mit Ethanol gewaschen und getrocknet. Man erhielt 45 g einer Verbindung der Formel

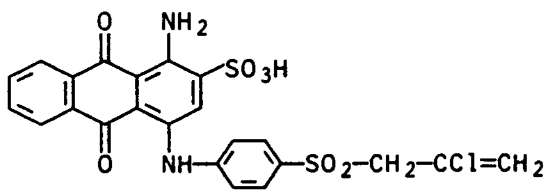

In analoger Weise werden die in Tabelle 10 aufgeführten Verbindungen der Formel

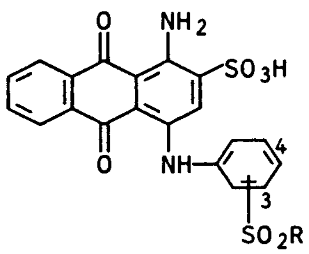

erhalten.

Tabelle 10

| Bsp.-Nr. | R | Stellung 3/4 |
|---|---|---|
| 207 | $CH_2$-CBr = $CH_2$ | 4 |
| 208 | $CH_2$-CCl = $CH_2$ | 3 |

Beispiel 209

24,1 g 1-Amino-4-(3-amino-4-hydroxysulfonylphenylamino)-2-hydroxysulfonylanthrachinon wurden in 1000 ml Wasser eingerührt, wobei mit Natronlauge ein pH-Wert von 6,5 eingestellt wurde. In diese Lösung wurde bei 0 bis 5 °C eine Suspension aus 9,2 g Cyanurchlorid in 100 g Eiswasser eingetragen. Unter Aufrechterhaltung von pH 6 wurde bei 0 bis 5 °C gerührt bis die Umsetzung beendet war, was etwa 2 Stunden in Anspruch nahm.

Nach der Zugabe von 16,9 g 4-(2-Chlorprop-2-enylsulfonyl)anilin-hydrochlorid wurde die Temperatur auf 40 °C erhöht und 2 Stunden bei dieser Temperatur gerührt.

Nach dem Abkühlen auf Raumtemperatur wurde mit 150 g Kochsalz ausgesalzen, der ausgefallene Farbstoff abgesaugt und getrocknet.

Er färbt Baumwolle in blauem Ton mit guten Echtheiten und entspricht der Formel

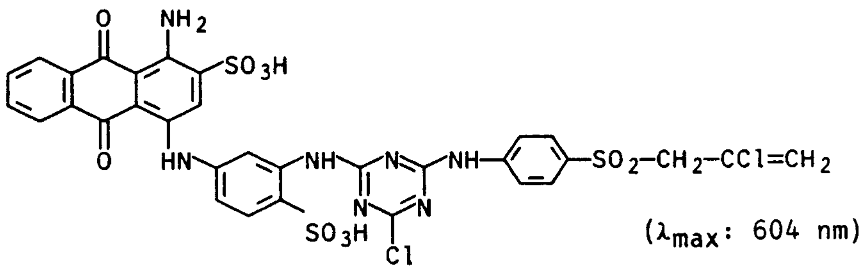

($\lambda_{max}$: 604 nm)

Beispiel 210

Einen weiteren Farbstoff mit ähnlichen Eigenschaften erhielt man, als man anstelle von 4-(2-Chlorprop-2-enylsulfonyl)anilin-hydrochlorid 16,1 g 3-(2-Chlorprop-2-enylsulfonyl)anilin-hydrochlorid verwendete.

Er entspricht der Formel

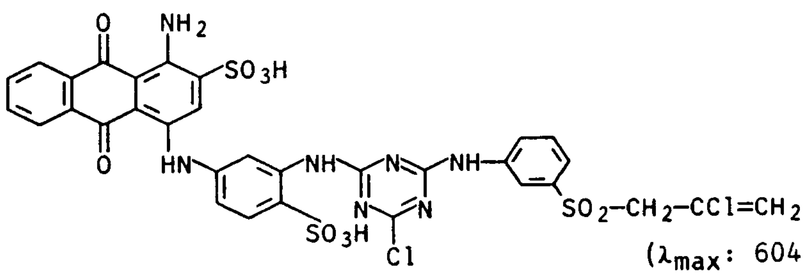

($\lambda_{max}$: 604 nm)

In analoger Weise werden die in der folgenden Tabelle 11 aufgeführten Verbindungen der Formel

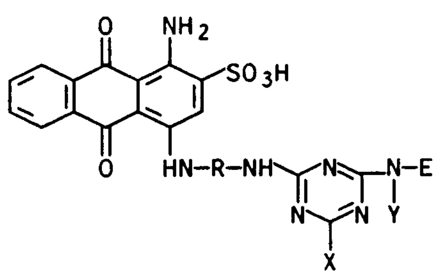

erhalten.

Tabelle 11

| Bsp.-Nr. | R | Y | X | E |
|---|---|---|---|---|
| 211 | 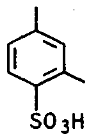 | H | Cl | E-2 |
| 212 | 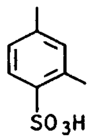 | H | F | E-1 |
| 213 | 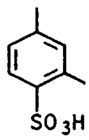 | H | F | E-3 |
| 214 | 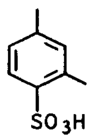 | H | Cl | E-4 |
| 215 | 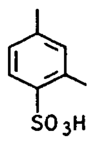 | H | Cl | E-5 |
| 216 | 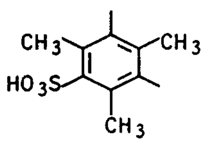 | H | Cl | E-1 |
| 217 | 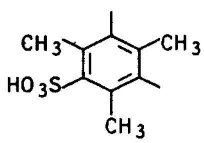 | $CH_3$ | Cl | E-1 |
| 218 | 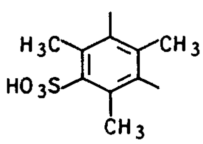 | H | F | E-3 |
| 219 | 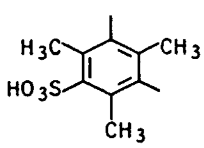 | H | Cl | E-2 |

Beispiel 220

64,8 g des bekannten Chromophors der Formel

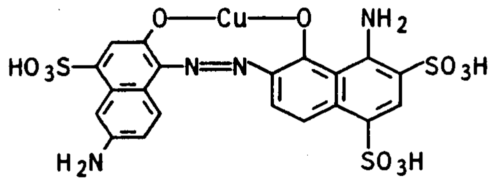

wurden in 700 ml Wasser angerührt. Bei einem pH-Wert von 5,5 bis 6 und 40 °C setzte man über 2 Stunden 17,6 g des in Beispiel 51 beschriebenen primären Kondensationsproduktes aus Cyanurchlorid und 4-(2-Chlorprop-2-enylsulfonyl)anilin, gelöst in 600 ml Wasser, hinzu und hielt weitere 30 Minuten bei einem pH-Wert von 5,5 bis 6 und 40 bis 45 °C. Nach beendeter Umsetzung wurde mit Natriumchlorid ausgesalzen, abfiltriert und unter vermindertem Druck getrocknet. Der resultierende Farbstoff entspricht der Formel

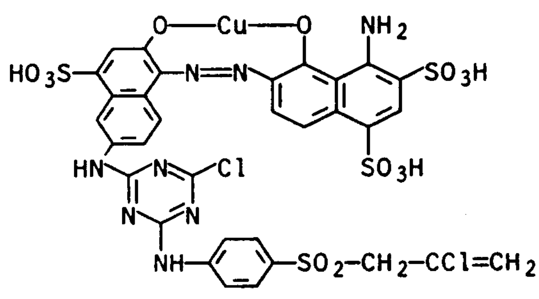

und färbt Baumwolle in echtem blauen Ton.

Analog Beispiel 220 können, ausgehend von bekannten Chromophoren, die folgenden Kupfer- und Nickel-Phthalocyanin- und Kupfer-Formazanfarbstoffe synthetisiert werden.

Tabelle 12

| Bsp. Nr. | Farbstoff | Farbe auf Baumwolle |
|---|---|---|
| 221 | 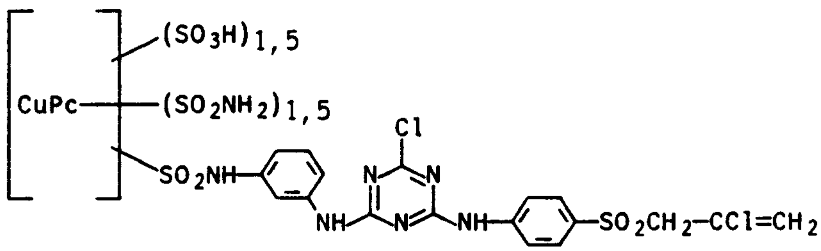 | türkis |
| 222 | 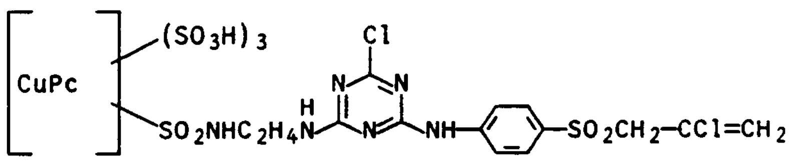 | türkis |
| 223 | 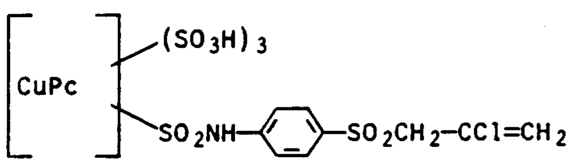 | türkis |
| 224 | 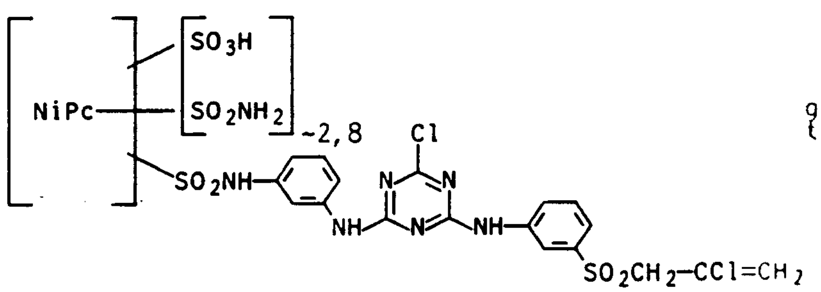 | grunstichig turkis |

Fortsetzung - Tabelle 12

| Bsp. Nr. | Farbstoff | Farbe auf Baumwolle |
|---|---|---|
| 225 | 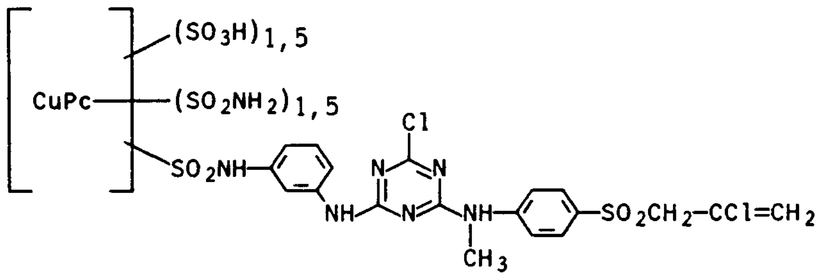 | türkis |
| 226 | 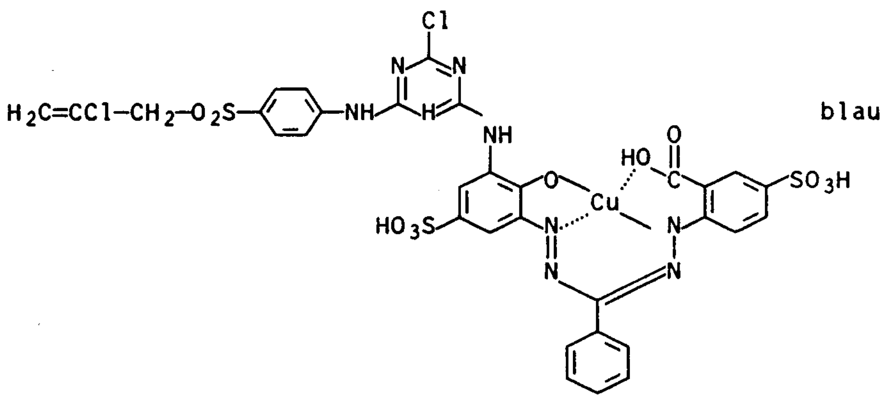 | blau |
| 227 | 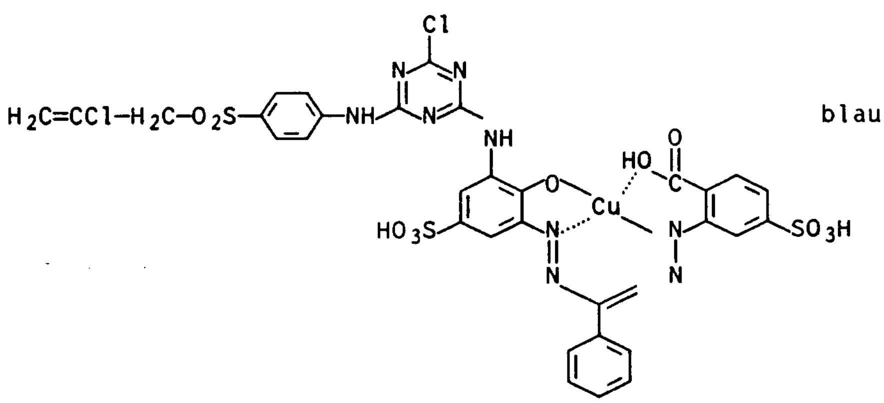 | blau |

Fortsetzung - Tabelle 12

| Bsp. Nr. | Farbstoff | Farbe auf Baumwolle |
|---|---|---|
| 228 | 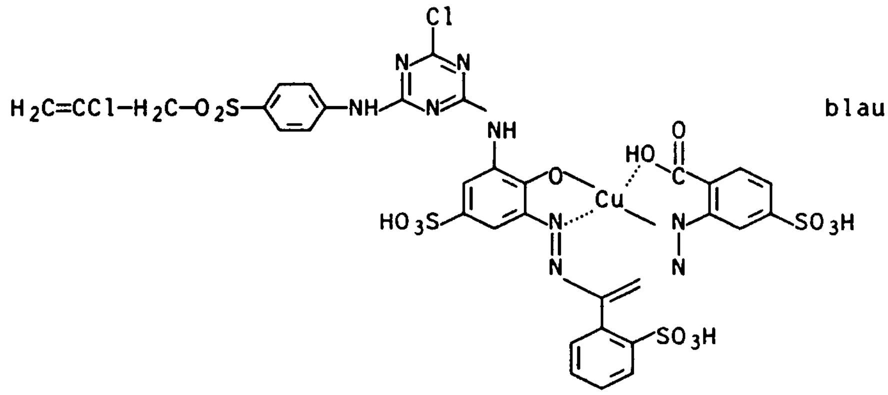 | blau |
| 229 | 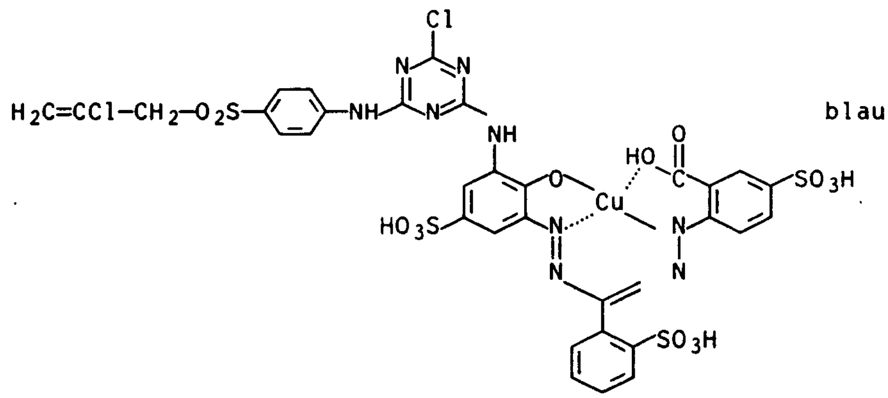 | blau |

Beispiel 230

19,1 g der Verbindung der Formel

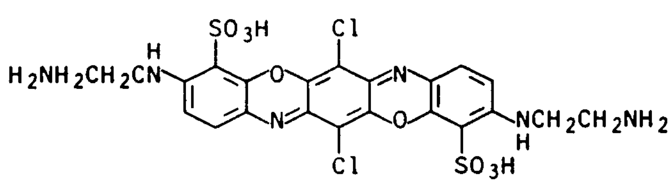

wurden in 1000 g Wasser eingerührt, wobei mit Natronlauge ein pH-Wert von 10 eingestellt wurde. Diese Lösung wurde in eine 40 bis 50 °C warme, auf pH 6 bis 8 gestellte Lösung des Kondensationsproduktes aus 11,1 g Cyanurchlorid mit 16;4 g 4-(2-Chlorprop-2-enylsulfonyl)anilin-hydrochlorid getropft. Unter Aufrechterhaltung eines pH-Wertes von 6,5 bis 7 wurde bei 60 °C gerührt bis die Umsetzung beendet war, was etwa 2 Stunden in Anspruch nahm. Nach dem Abkühlen auf Raumtemperatur wurde mit 500 g Kochsalz ausgesalzen, der ausgefallene Farbstoff abgesaugt und getrocknet. Er färbt Baumwolle in brillantem blauen Ton mit guten Echtheiten und entspricht der Formel

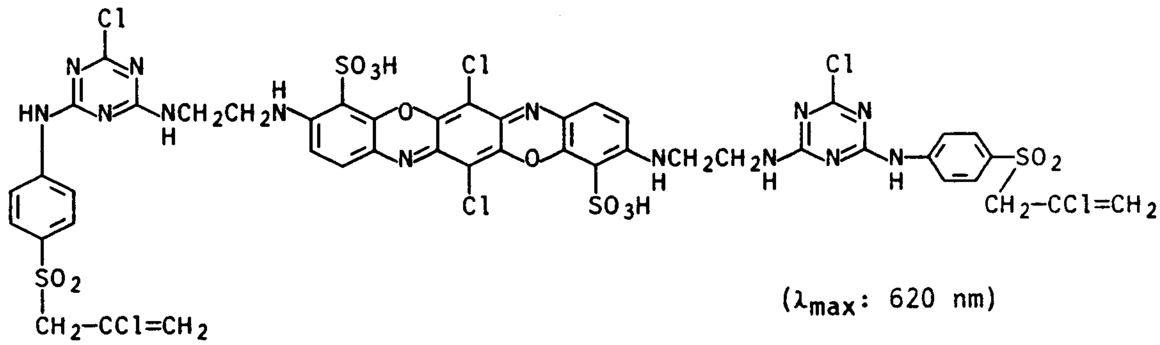

($\lambda_{max}$: 620 nm)

Weitere Farbstoffe, die in analoger Weise erhalten werden, sind in Tabelle 13 aufgeführt.

Tabelle 13

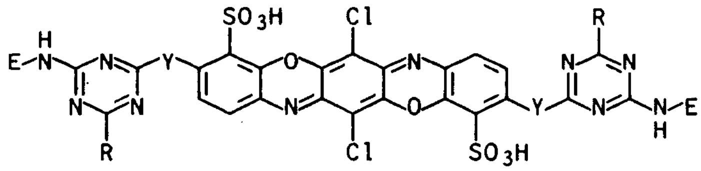

| Bsp.-Nr. | Y | R | E | Farbton auf Baumwolle |
|---|---|---|---|---|
| 231 | 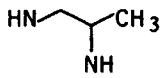 | Cl | E-1 | blau |
| 232 | 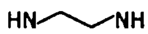 | F | E-1 | blau |
| 233 | 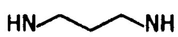 | Cl | E-1 | blau |
| 234 | 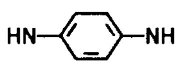 | Cl | E-1 | blau |
| 235 | 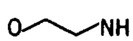 | Cl | E-1 | rot |
| 236 | 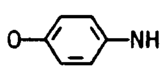 | Cl | E-1 | rot |
| 237 | 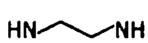 | Cl | E-2 | blau |
| 238 | 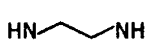 | F | E-2 | blau |
| 239 | 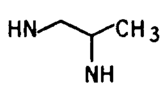 | Cl | E-2 | blau |

Fortsetzung - Tabelle 13

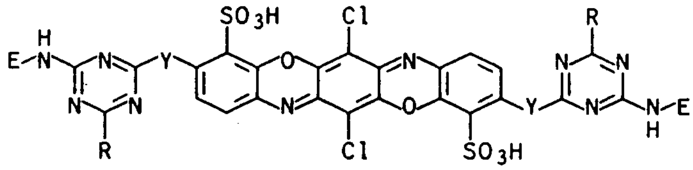

| Bsp.-Nr. | Y | R | E | Farbton auf Baumwolle |
|---|---|---|---|---|
| 240 | 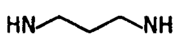 | Cl | E-2 | blau |
| 241 | 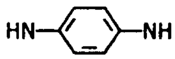 | Cl | E-2 | blau |
| 242 | 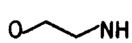 | Cl | E-2 | rot |
| 243 | 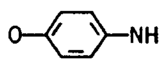 | Cl | E-2 | rot |
| 244 | 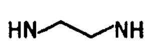 | Cl | E-3 | blau |
| 245 | 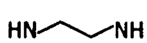 | F | E-3 | blau |
| 246 | 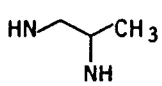 | Cl | E-3 | blau |
| 247 | 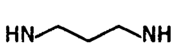 | Cl | E-3 | blau |
| 248 | 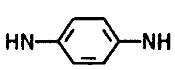 | Cl | E-3 | blau |

Fortsetzung - Tabelle 13

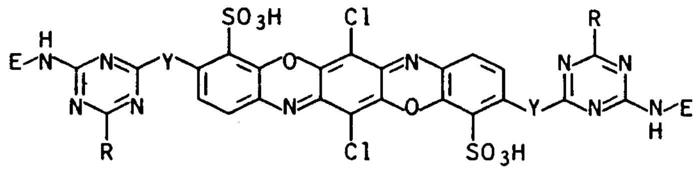

| Bsp.-Nr. | Y | R | E | Farbton auf Baumwolle |
|---|---|---|---|---|
| 249 | 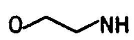 | Cl | E-3 | rot |
| 250 | 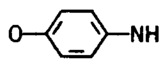 | Cl | E-3 | rot |
| 251 | 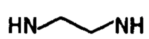 | Cl | E-4 | blau |
| 252 | 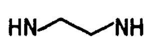 | F | E-4 | blau |
| 253 | 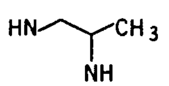 | Cl | E-4 | blau |
| 254 | 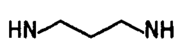 | Cl | E-4 | blau |
| 255 | 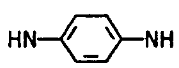 | Cl | E-4 | blau |
| 256 | 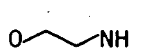 | Cl | E-4 | rot |
| 257 | 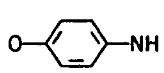 | Cl | E-4 | rot |

Beispiel 258

11,6 g 4-(Prop-2-inylsulfonyl)anilin-hydrochlorid in 150 ml Wasser wurden bei 0 bis 5 °C salzsauer diazotiert und mit einer neutralen wäßrigen Lösung von 24,1 g 1-Hydroxynaphthalin-3,6-disulfonsäure versetzt. Durch Zugabe von gesättigter Natriumacetatlösung wurde ein pH-Wert von 4,5 eingestellt. Nach beendeter Kupplung wurde der Farbstoff mit Natriumchlorid ausgesalzen und gefriergetrocknet. Er färbt Baumwolle in echtem orangefarbenen Ton und entspricht der Formel

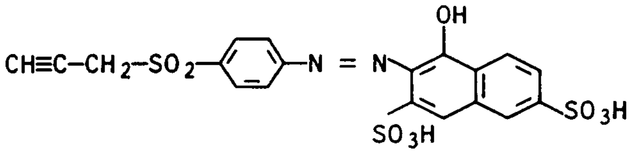

($\lambda_{max}$: 483 nm)

Weitere erfindungsgemäße Farbstoffe, die auf analoge Weise erhalten werden, sind in Tabelle 14 aufgeführt:

Tabelle 14

E–N = N–K

| Bsp.-Nr. | E | K | Farbton auf Baumwolle |
|---|---|---|---|
| 259 | E-6 | 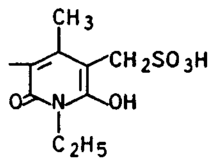 | grünstichig gelb |
| 260 | E-6 | 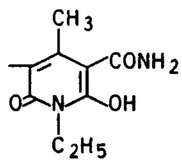 | grünstichig gelb |
| 261 | E-6 | 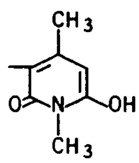 | grünstichig gelb |
| 262 | E-6 | 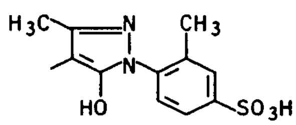 | gelb |
| 263 | E-6 | 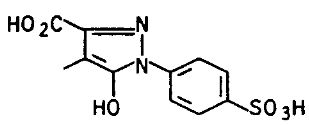 | gelb |
| 264 | E-6 | 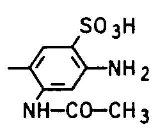 | goldgelb |
| 265 | E-7 | 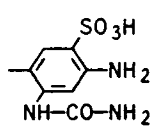 | goldgelb |

Fortsetzung - Tabelle 14

E–N = N–K

| Bsp.-Nr. | E | K | Farbton auf Baumwolle |
|---|---|---|---|
| 266 | E-6 | 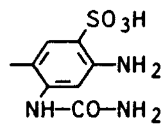 | goldgelb |
| 267 | E-8 | 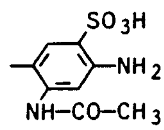 | goldgelb |
| 268 | E-7 | 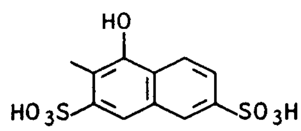 | orange |
| 269 | E-6 | 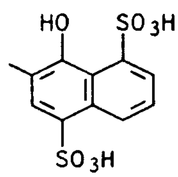 | orange |
| 270 | E-6 | 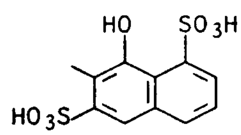 | orange |
| 271 | E-7 | 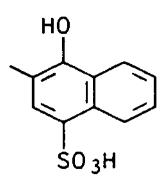 | orangerot |
| 272 | E-6 | 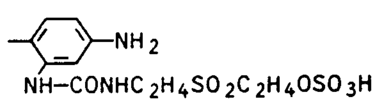 | goldgelb |

Fortsetzung - Tabelle 14

E–N = N–K

| Bsp.-Nr. | E | K | Farbton auf Baumwolle |
|---|---|---|---|
| 273 | E-6 | 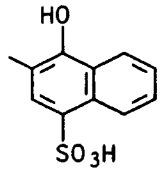 | orangerot |
| 274 | E-6 | 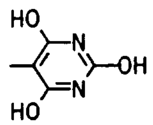 | grünstichig gelb |
| 275 | E-7 | 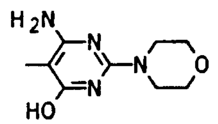 | gelb |
| 276 | E-6 | 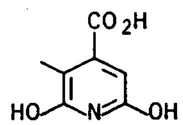 | grünstichig gelb |
| 277 | E-6 | 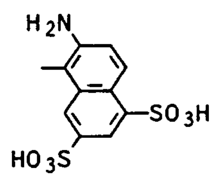 | orangerot |
| 278 | E-6 | 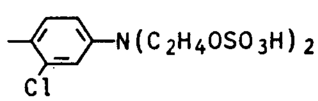 | orange |
| 279 | E-6 | 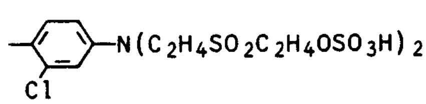 | orange |

Beispiel 280

11,6 g 4-(Prop-2-inylsulfonyl)anilin-hydrochlorid in 150 ml Wasser wurden bei 0 bis 5 °C salzsauer diazotiert und mit einer neutralen wäßrigen Lösung von 16,2 g 1-Acetylamino-8-hydroxynaphthalin-3,6-disulfonsäure versetzt. Die Kupplung wurde durch Zugabe gesättigter Natriumacetatlösung bei pH 4,5 vervollständigt und der gebildete Farbstoff mit gesättigter Natriumchlorid-Lösung gefällt und gefriergetrocknet. Er färbt Baumwolle in brillantem roten Ton mit guten Echtheiten und entspricht der Formel

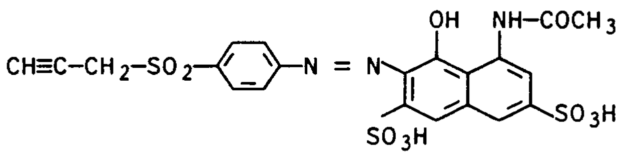

($\lambda_{max}$: 501 nm)

Weitere Farbstoffe, die auf analoge Weise erhalten werden, sind in Tabelle 15 aufgeführt.

Tabelle 15

E-N = N-K

| Bsp.-Nr. | E | K | Farbton auf Baumwolle |
|---|---|---|---|
| 281 | E-10 | 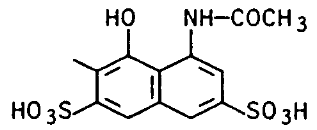 | rot |
| 282 | E-6 | 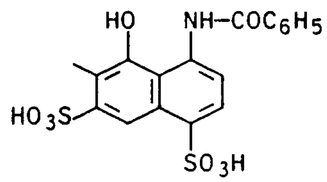 | rot |
| 283 | E-6 | 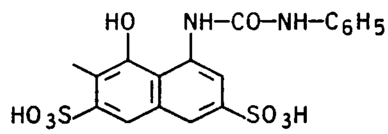 | blaustichig rot |
| 284 | E-6 | 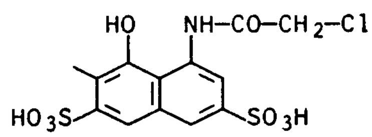 | rot |

Fortsetzung - Tabelle 15

E–N = N–K

| Bsp.-Nr. | E | K | Farbton auf Baumwolle |
|---|---|---|---|
| 285 | E-6 | 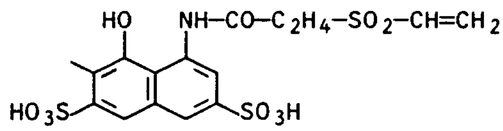 | rot |
| 286 | E-7 | 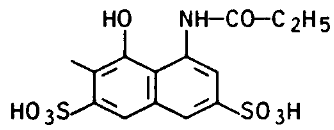 | rot |
| 287 | E-6 | 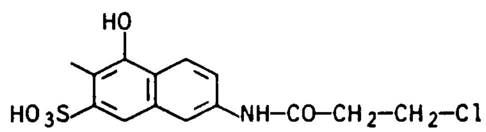 | orange |
| 288 | E-7 | 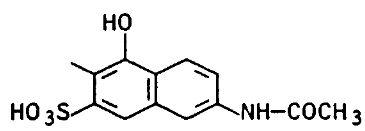 | orange |
| 289 | E-10 | 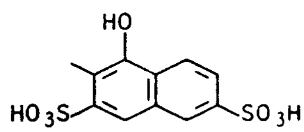 | orange |

Beispiel 290

Eine Lösung von 11,6 g 4-(Prop-2-inylsulfonyl)anilin-hydrochlorid in 150 ml Wasser wurde bei 0 bis 5 °C salzsauer diazotiert und dann einer Lösung von 23,4 g des Kondensationsproduktes aus 1-Amino-8-hydroxynaphthalin-3,6-disulfonsäure und Cyanurchlorid in 380 ml Wasser zugesetzt. Zur Vervollständigung der Kupplung wurde mittels gesättigter Natriumacetat-Lösung der pH-Wert auf 4,5 gebracht. Eine auf pH 4,5 eingestellte wäßrige Lösung von 12,5 g 4-(2-Sulfatoethylsulfonyl)anilin wurde zugegeben und anschließend 5 Stunden auf 40 bis 45 °C erwärmt. Der entstandene Farbstoff wurde mit Natriumchlorid ausgesalzen und gefriergetrocknet. Er färbt Baumwolle in blaustichig rotem Ton mit guten Echtheiten und hat die Formel

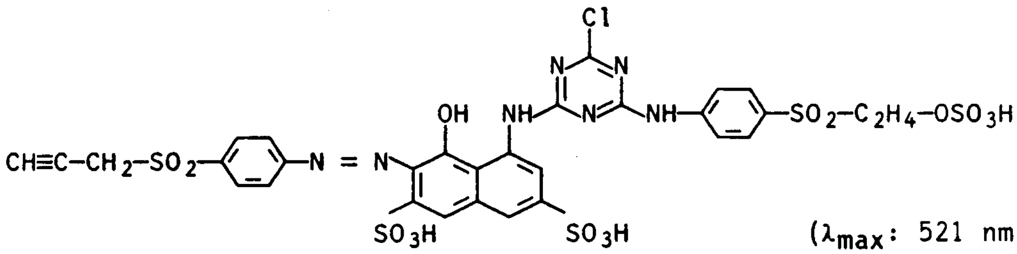

($\lambda_{max}$: 521 nm)

Weitere erfindungsgemäße Farbstoffe, die auf analoge Weise erhalten werden, sind in Tabelle 16 aufgeführt.

Tabelle 16

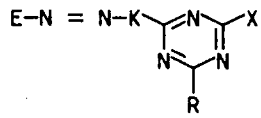

| Bsp.-Nr. | E | K | X | R | Farbton auf Baumwolle |
|---|---|---|---|---|---|
| 291 | E-6 | 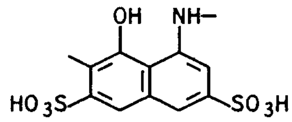 | Cl | $OCH_3$ | rot |
| 292 | E-6 | 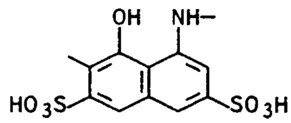 | Cl | 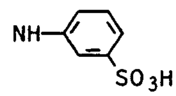 | rot |
| 293 | E-8 | 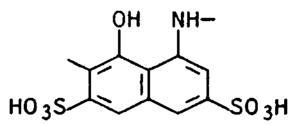 | Cl | 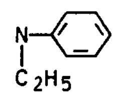 | rot |
| 294 | E-6 | 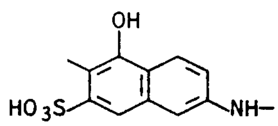 | Cl | 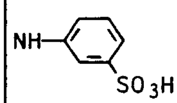 | orange |
| 295 | E-6 | 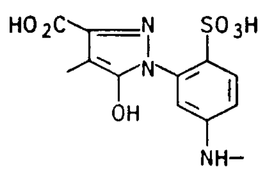 | Cl | 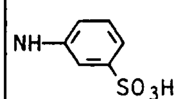 | gelb |
| 296 | E-7 | 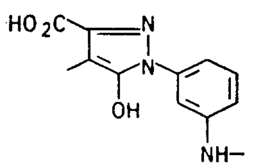 | Cl | 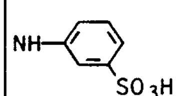 | gelb |
| 297 | E-6 | 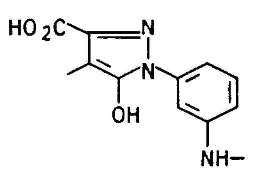 | F | 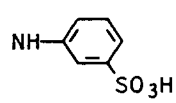 | gelb |

Fortsetzung - Tabelle 16

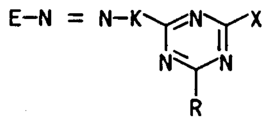

| Bsp.-Nr. | E | K | X | R | Farbton auf Baumwolle |
|---|---|---|---|---|---|
| 298 | E-6 | 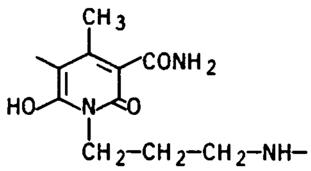 | Cl | 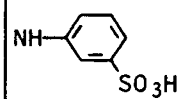 | grünstichig gelb |
| 299 | E-6 | 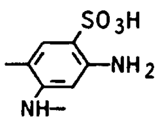 | Cl | 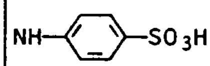 | gold-gelb |
| 300 | E-6 | 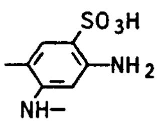 | F | 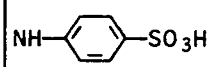 | gold-gelb |
| 301 | E-7 | 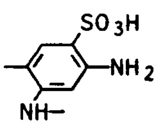 | Cl | 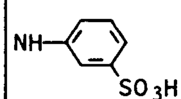 | gold-gelb |
| 302 | E-6 | 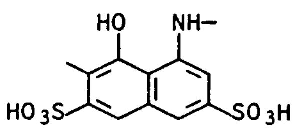 | Cl | 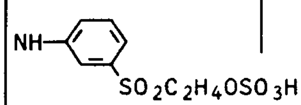 | rot |
| 303 | E-8 | 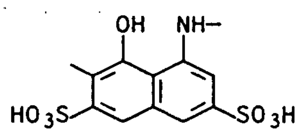 | Cl | 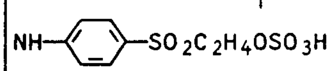 | rot |
| 304 | E-7 | 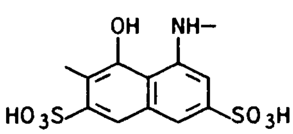 | Cl | 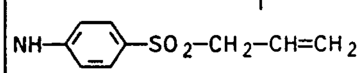 | rot |

Fortsetzung - Tabelle 16

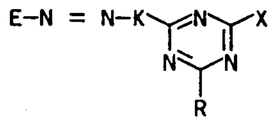

| Bsp.-Nr. | E | K | X | R | Farbton auf Baumwolle |
|---|---|---|---|---|---|
| 305 | E-6 | 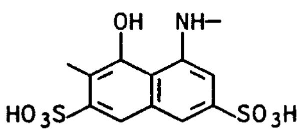 | Cl | 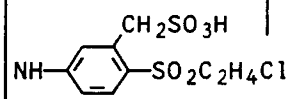 | rot |
| 306 | E-6 | 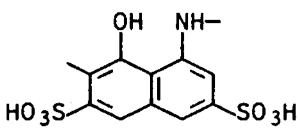 | F | $NHCH_2CH_2SO_2-CH=CH_2$ | rot |
| 307 | E-6 | 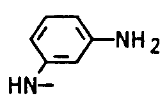 | Cl | 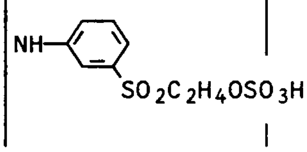 | gold-gelb |

Beispiel 308

Eine neutrale Lösung von 24,3 g 4-(Prop-2-inylsulfonyl)anilin-hydrochloridin 400 ml Wasser und 100 ml Aceton wurde mit einer Suspension von 19,3 g Cyanurchlorid in 250 ml Eiswasser versetzt und 2,5 Stunden bei 0 bis 5 °C gerührt, wobei durch Zugabe von Natriumbicarbonat ein pH-Wert von 5 bis 6 eingehalten wurde. Man filtrierte, gab die Suspension zu einer bei 40 °C und pH 5 bis 6 gerührten Lösung von 16,9 g 1,3-Diaminobenzol-4-sulfonsäure in 100 ml Wasser und hielt 2 Stunden bei 35 bis 40 °C und pH 3 bis 4.

Nach beendeter Umsetzung wurde bei 0 bis 5 °C durch Zugabe von 30 ml 3,33 N wäßriger Natriumnitritlösung und 60 ml 5 N Salzsäure diazotiert und auf 27,6 g 1,4-Dimethyl-3-hydroxysulfonylmethyl-6-hydroxypyridon-2 gekuppelt. Der erhaltene Farbstoff wurde mit Natriumchlorid ausgesalzen und schonend unter vermindertem Druck getrocknet. Er färbt Baumwolle in brillantem, echten, grünstichig gelben Ton und entspricht der Formel

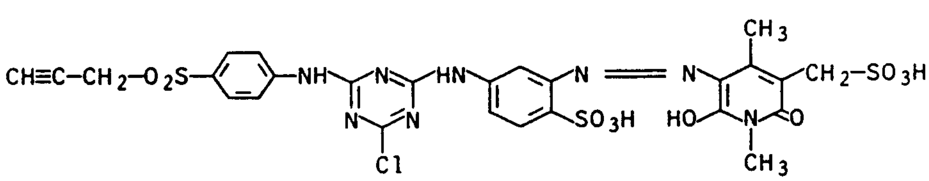 .

Beispiel 309

33 g des Natriumsalzes des Farbstoffs der Formel

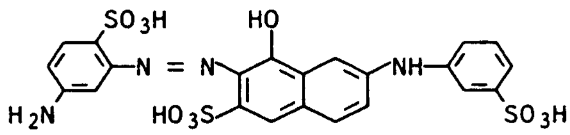

wurden bei pH 6 und 40 °C in Wasser gelöst und mit 17,1 g des Kondensationsproduktes aus Cyanurchlorid und 4-(Prop-2-inylsulfonyl)anilin-hydrochlorid gelöst in 1000 ml Wasser, versetzt und weitere 2 Stunden bei 40 °C gerührt, wobei durch Einstreuen von Natriumbicarbonat ein pH-Wert von 5 bis 6 eingehalten wird. Der mit Kaliumchlorid ausgefällte und schonend getrocknete Farbstoff ergibt auf Baumwolle eine braune Färbung und entspricht der Formel

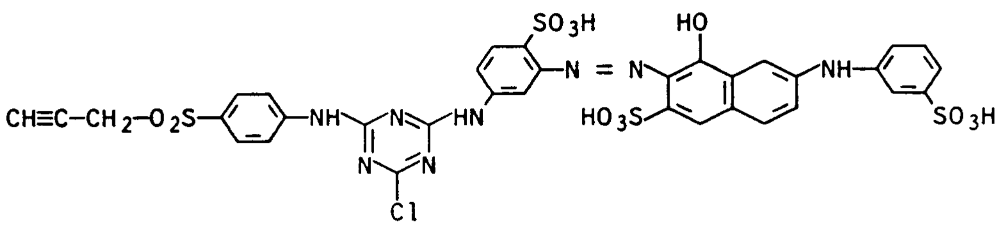

In ähnlicher Weise werden die in Tabelle 17 beschriebenen Farbstoffe erhalten.

Tabelle 17

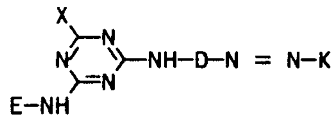

| Bsp.-Nr. | E | X | D | K | Farbton auf Baumwolle |
|---|---|---|---|---|---|
| 310 | E-6 | Cl | 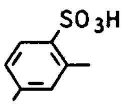 | 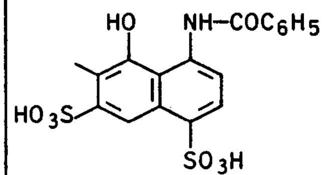 | rot |
| 311 | E-6 | F | 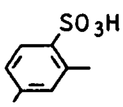 | 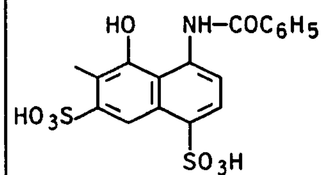 | rot |
| 312 | E-6 | Cl | 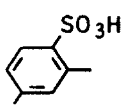 | 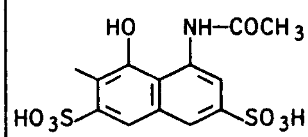 | rot |
| 313 | E-7 | Cl | 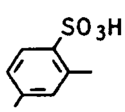 | 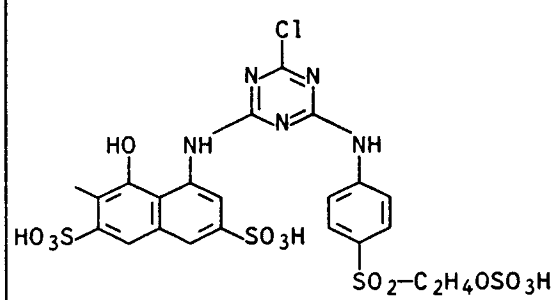 | rot |
| 314 | E-6 | Cl | 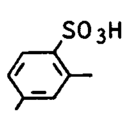 | 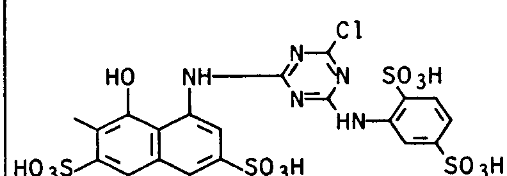 | rot |

Fortsetzung - Tabelle 17

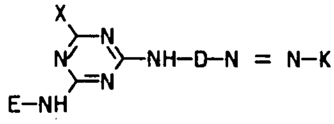

| Bsp.-Nr. | E | X | D | K | Farbton auf Baumwolle |
|---|---|---|---|---|---|
| 315 | E-6 | Cl | 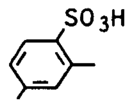 | 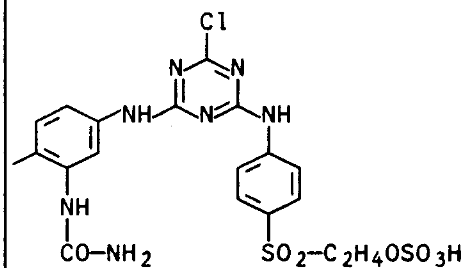 | gelb |
| 316 | E-6 | Cl | 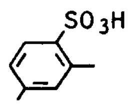 | 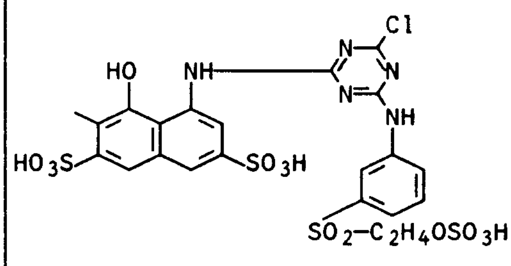 | rot |
| 317 | E-7 | Cl | 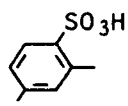 | 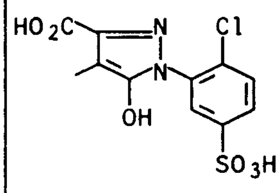 | gelb |
| 318 | E-8 | Cl | 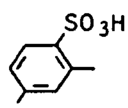 | 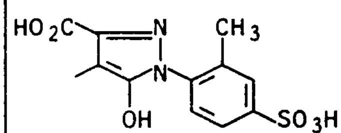 | gelb |
| 319 | E-10 | Cl | 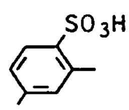 | 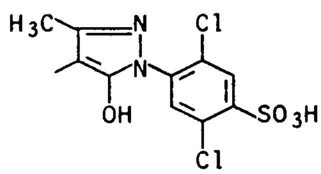 | gelb |

Fortsetzung - Tabelle 17

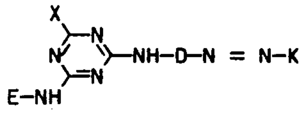

| Bsp.-Nr. | E | X | D | K | Farbton auf Baumwolle |
|---|---|---|---|---|---|
| 320 | E-6 | Cl | 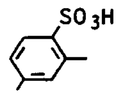 | 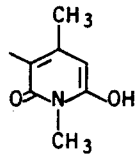 | grünstichig gelb |
| 321 | E-6 | Cl | 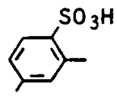 | 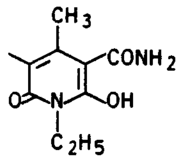 | grünstichig gelb |
| 322 | E-6 | Cl | 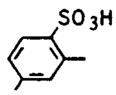 | 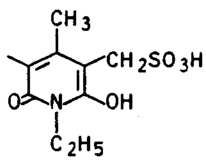 | grünstichig gelb |
| 323 | E-6 | Cl | 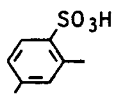 | 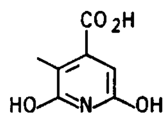 | grunstichig gelb |
| 324 | E-7 | Cl | 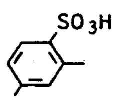 | 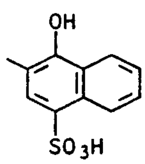 | orangerot |
| 325 | E-6 | Cl | 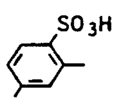 | 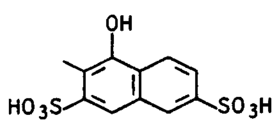 | orange |
| 326 | E-6 | F | 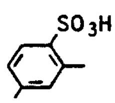 | 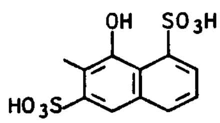 | orange |

Fortsetzung - Tabelle 17

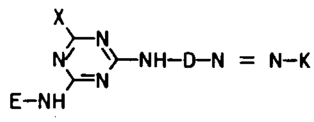

| Bsp.-Nr. | E | X | D | K | Farbton auf Baumwolle |
|---|---|---|---|---|---|
| 327 | E-10 | Cl | 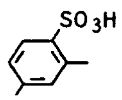 | 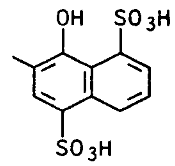 | orangerot |
| 328 | E-6 | Cl | 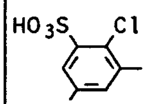 | 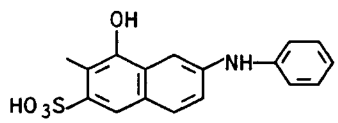 | braun |
| 329 | E-8 | Cl | 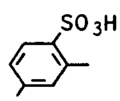 | 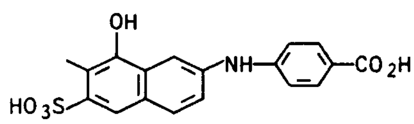 | braun |
| 330 | E-6 | Cl | 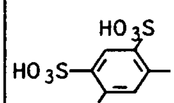 | 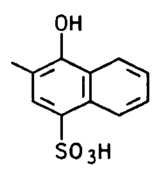 | orangerot |
| 331 | E-6 | Cl | 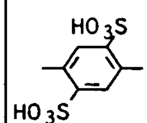 | 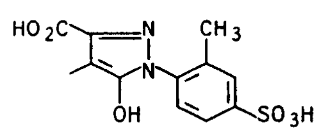 | goldgelb |
| 332 | E-7 | Cl | 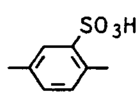 | 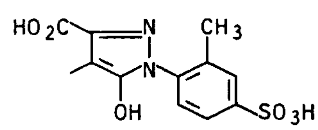 | goldgelb |
| 333 | E-6 | Cl | 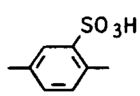 | 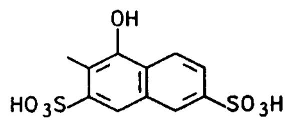 | rot |

Fortsetzung - Tabelle 17

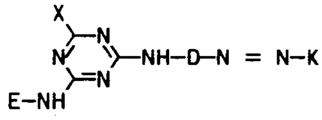

| Bsp.-Nr. | E | X | D | K | Farbton auf Baumwolle |
|---|---|---|---|---|---|
| 334 | E-6 | Cl | 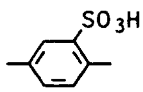 | 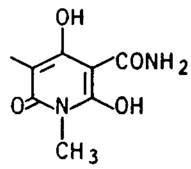 | goldgelb |
| 335 | E-7 | Cl | 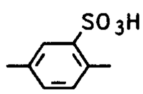 | 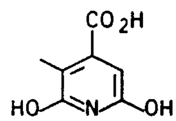 | goldgelb |
| 336 | E-7 | Cl | 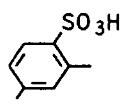 | 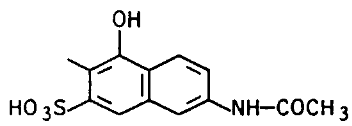 | orange |
| 337 | E-8 | F | 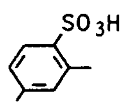 | 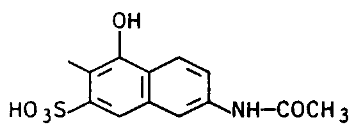 | orange |
| 338 | E-6 | Cl | 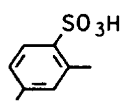 | 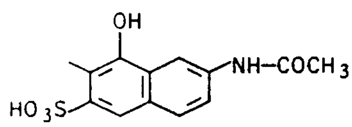 | orange |
| 339 | E-6 | Cl | 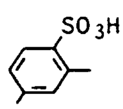 | 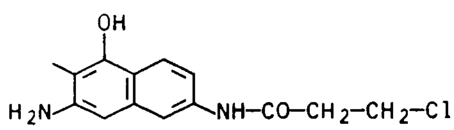 | orange |
| 340 | E-9 | Cl | 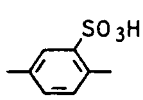 | 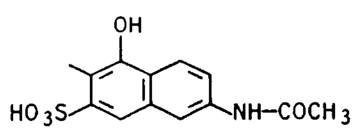 | rot |

Fortsetzung - Tabelle 17

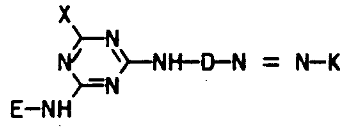

| Bsp.-Nr. | E | X | D | K | Farbton auf Baumwolle |
|---|---|---|---|---|---|
| 341 | E-7 | Cl | 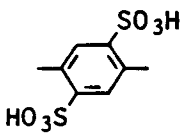 | 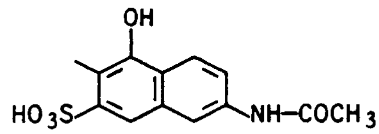 | rot |
| 342 | E-6 | Cl | 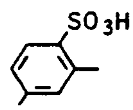 | 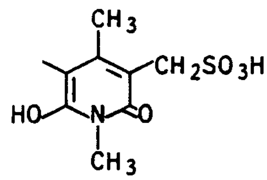 | grünstichig gelb |
| 343 | E-6 | Cl | 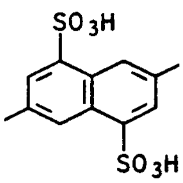 | 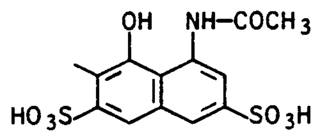 | blaustichig rot |
| 344 | E-6 | Cl | 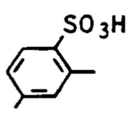 | 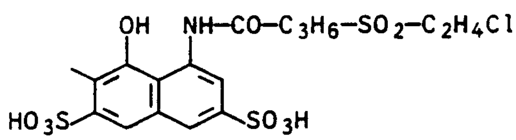 | blaustichig rot |
| 345 | E-6 | Cl | 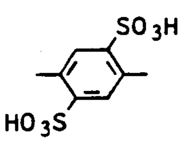 | 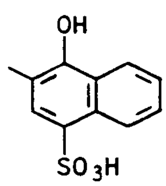 | rot |

Fortsetzung - Tabelle 17

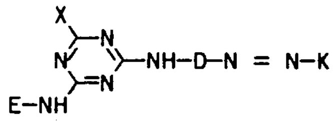

| Bsp.-Nr. | E | X | D | K | Farbton auf Baumwolle |
|---|---|---|---|---|---|
| 346 | E-7 | Cl | 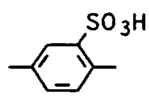 | 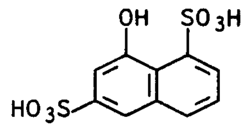 | rot |
| 347 | E-6 | Cl | 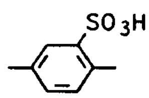 | 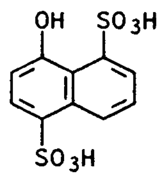 | rot |

Beispiel 348

Eine neutrale Lösung von 16,1 g 1-Amino-8-hydroxynaphthalin-3,6-disulfonsäure wurde bei 10 °C mit einer Suspension von 9,3 g Cyanurchlorid in 80 ml Eiswasser versetzt, wobei durch Zugabe konzentrierter Salzsäure der pH-Wert kleiner 2 gehalten wurde. Diese Lösung wurde bei 0 bis 5 °C zu 8,7 g salzsauer diazotierter Anilin-2-sulfonsäure in 100 ml Wasser gegeben. Die Kupplung wurde durch Zugabe von gesättigter Natriumacetat-Lösung bei pH 4 bis 4,5 vervollständigt. Eine auf einen pH-Wert von 4,5 eingestellte Lösung von 11,6 g 4-(Prop-2-inylsulfonyl)anilin-hydrochlorid in 200 ml Wasser/Aceton (1:1 v/v) wurde dann der oben hergestellten Lösung Zugesetzt. Nach Verdünnen mit 500 ml Wasser wurde zur Vervollständigung der Reaktion 45 Stunden auf 40 bis 50 °C erwärmt, wobei durch Einstreuen von Natriumhydrogencarbonat der pH-Wert bei 4 bis 4,5 gehalten wurde.

Der entstandene Farbstoff färbt Baumwolle in echtem brillianten roten Ton und besitzt die Strukturformel

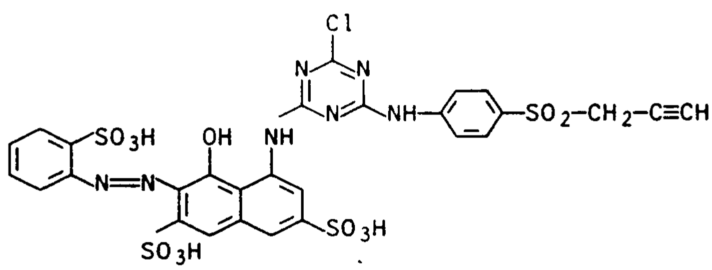

Beispiel 349

31,9 g (0,1 mol) 1-Amino-8-hydroxynaphthalin-3,6-disulfonsäure wurden in 150 g Wasser neutral gelöst und auf 0 bis 5 °C abgekühlt. Bei dieser Temperatur wurde eine Suspension aus 18,2 g (0,1 mol) Cyanurchlorid und 200 g Eis eingetragen und bis zur vollständigen Umsetzung gerührt. Anschließend wurde das Reaktionsgemisch mit 26,2 g (0,1 mol) 2-Methoxy-5-( prop-2-inylsulfonyl)anilin-hydrochlorid, gelöst in 150 ml Wasser/Aceton (1:1 v/v), versetzt, der pH-Wert mittels 2 N Natronlauge auf 5,5 bis 6 gestellt und die Temperatur innerhalb von 2 bis 3 Stunden auf 20 bis 25 °C erhöht.

Nach beendeter Reaktion wurde das Reaktionsgemisch auf 0 bis 10 °C abgekühlt und mit 17,3 g diazotierter Anilin-2-sulfonsäure bei einem pH-Wert von 5,5 gekuppelt. Nach beendeter Kupplung wurde der Farbstoff durch Aussalzen isoliert. Der Farbstoff färbt Baumwolle in rotem Ton und entspricht der Formel

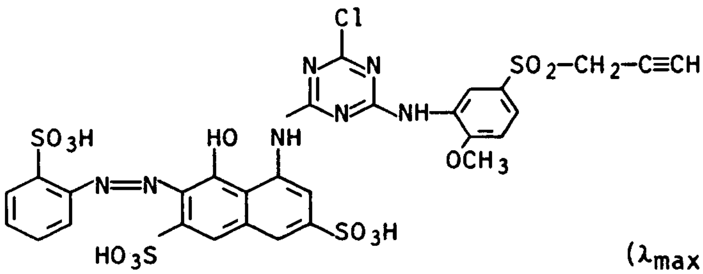

($\lambda_{max}$: 512/535 nm)

Beispiel 350

Eine auf pH 4,5 eingestellte wäßrige Lösung von 19,5 g des in Beispiel 348 beschriebenen Azofarbstoffs der Formel

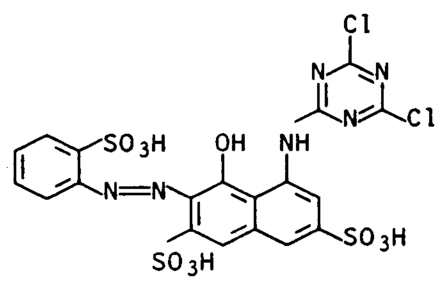

wurde mit einer Lösung von 7 g 3-(Prop-2-inylsulfonyl)anilin-hydrochlorid in 100 ml Wasser/Aceton (1:1 v/v) bei einem pH-Wert von 4 bis 4,5 versetzt. Zur Vervollständigung der Reaktion wurde 1 Stunde auf 40 bis 50 °C erwärmt. Der erhaltene Farbstoff wurde nach Abkühlen auf 20 °C mit Natriumchlorid ausgesalzen und gefriergetrocknet. Er färbt Baumwolle mit echtem, brillianten roten Ton und entspricht der Formel

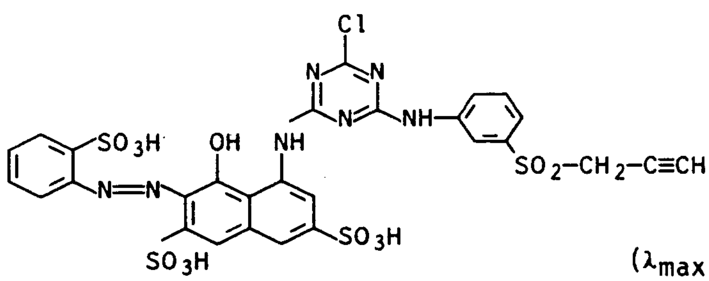

($\lambda_{max}$: 514/535 nm)

Beispiel 351

32,8 g des durch Kupplung von diazotierter 2-Aminonaphthalin-3,6,8-trisulfonsäure mit 3-Aminophenylharnstoff erhaltenen Azofarbstoffs wurden in 150 ml Wasser neutral gelöst, bei 15 bis 20 °C mit einer salzsauren Suspension von 11,1 g Cyanurchlorid in 100 ml Eiswasser versetzt, wobei der pH-Wert durch Zugabe von 20 gew.-%iger Natronlauge bei 7 gehalten wurde. Nach einer Stunde Rühren bei 20 °C wurde eine Lösung von 11,7 g 3-(Prop-2-inylsulfonyl)anilin-hydrochlorid in 200 ml Wasser/Aceton (1:1 v/v) zugesetzt und der pH-Wert durch Zugabe von 2N Natronlauge auf 6,5 gestellt. Zur Vervollständigung der Reaktion wurde 1,5 Stunden auf 40 bis 45 °C erwärmt. Der erhaltene Farbstoff wurde durch Zugabe von

Kaliumchlorid gefällt und gefriergetrocknet. Er färbt Baumwolle in goldgelber Nuance mit guten Echtheiten und entspricht der Formel

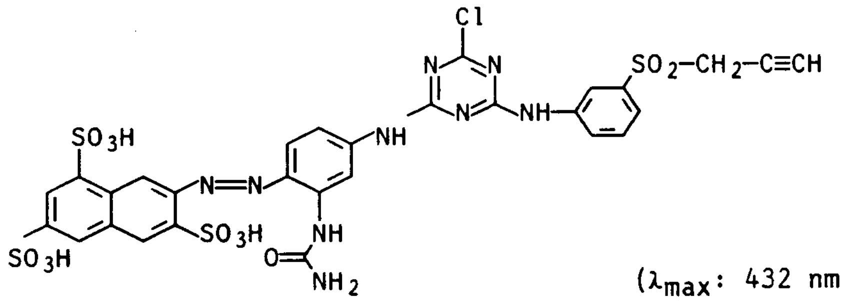

($\lambda_{max}$: 432 nm)

Beispiel 352

28,6 g 2-Aminonaphthalin-1,5-disulfonsäure wurden in 400 ml Wasser bei 0 bis 5 °C salzsauer diazotiert, dann einer salzsauren Lösung von 23,5 g des in Beispiel 91 beschriebenen Kondensationsproduktes aus 1-Amino-8-hydroxynaphthalin-3,6-disulfonsäure und Cyanurchlorid zugesetzt. Durch Zugabe von gesättigter Natriumacetat-Lösung wurde der pH-Wert auf 4,5 gestellt, die Lösung noch 1 Stunde bei 20 °C gerührt und dann mit 11,7 g 3-(Prop-2-inylsulfonyl)anilin-hydrochlorid, in 200 ml Wasser/Aceton (1:1 v/v) gelöst, versetzt. Nach 2 Stunden Rühren bei pH 4,5 war die Reaktion beendet. Der erhaltene Farbstoff wurde dann mit Natriumchlorid ausgesalzen und gefriergetrocknet. Er färbt Baumwolle in blaustichig rotem Ton mit guten Echtheiten und entspricht der Formel

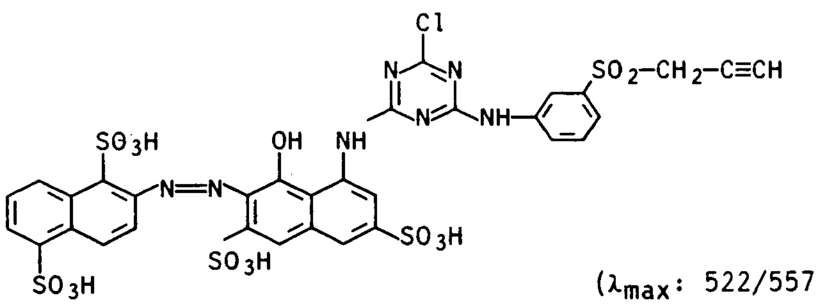

($\lambda_{max}$: 522/557 nm)

Beispiel 353

14,2 g 4-(2-Sulfoatoethylsulfonyl)anilin wurden in 200 ml Wasser bei 0 bis 5 °C salzsauer diazotiert, dann einer salzsauren Lösung von 23,5 g des in Beispiel 91 beschriebenen Kondensationsproduktes aus 1-Amino-8-hydroxynaphthalin-3,6-disulfonsäure und Cyanurchlorid zugesetzt. Durch Zugabe von gesättigter Natriumacetat-Lösung wurde der pH-Wert auf 4,5 eingestellt und nach 30-minütigem Rühren bei 30 °C wurde eine Lösung von 11,7 g 4-(Prop-2-inylsulfonyl)anilin-hydrochlorid in 200 ml Wasser/Aceton (1:1 v/v) zugegeben. Zur Vervollständigung der Reaktion wurde die Lösung 45 Stunden auf 40 bis 45 °C erwärmt. Der entstandene Farbstoff wurde mit Natriumchlorid ausgesalzen und gefriergetrocknet. Er färbt Baumwolle in blaustichig rotem Ton mit guten Echtheiten und besitzt die Formel

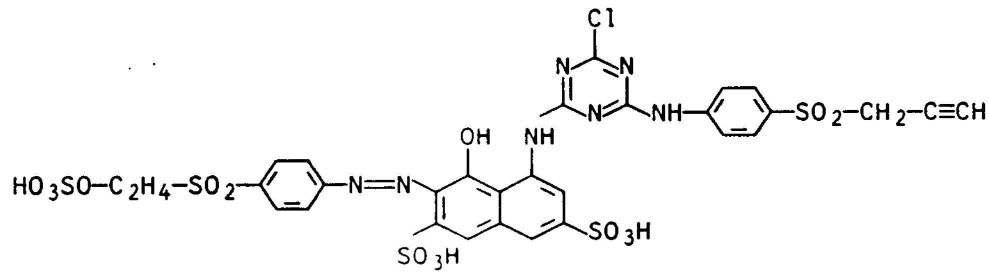

Beispiel 354

Eine neutrale Lösung von 15,9 g 1-Amino-8-hydroxynaphthalin-3,6-disulfonsäure wurde bei 10 °C mit einer Suspension von 9,3 g Cyanurchlorid in 80 ml Eiswasser versetzt, wobei durch Zugabe von konzentrierter Salzsäure der pH-Wert kleiner 2 gehalten wurde. Diese Lösung wurde bei 0 bis 5 °C zu 9 g salzsauer diazotierter Anilin-2-sulfonsäure in 100 ml Wasser gegeben. Die Kupplung wurde durch Zugabe von gesättigter Natriumacetat-Lösung bei pH 4 bis 4,5 vervollständigt. Eine auf einen pH-Wert von 4,5 eingestellte Lösung von 13 g 2-[4-(Prop-2-inylsulfonyl)phenyl]ethylamin-hydrochlorid in 300 ml Wasser/Aceton (1:1 v/v) wurde der oben hergestellten Lösung zugesetzt. Nach Verdünnen mit 500 ml Wasser wurde zur Vervollständigung der Reaktion zwei Stunden auf 40 bis 50 °C erwärmt. Der entstandene Farbstoff wurde mit Kaliumchlorid ausgesalzen und gefriergetrocknet. Er färbt Baumwolle in echtem brillianten rotem Ton und besitzt die Strukturformel

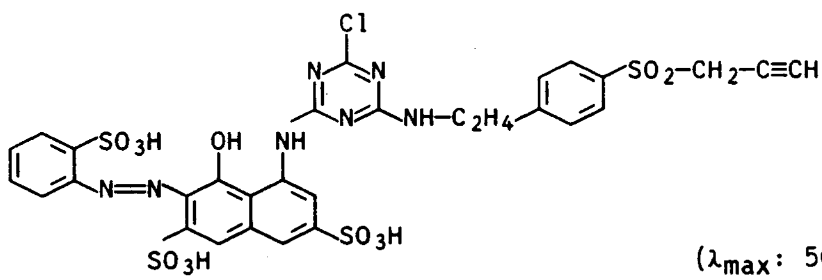

($\lambda_{max}$: 509/531 nm)

Beispiel 355

14,2 g 4-(2-Sulfatoethylsulfonyl)anilin wurden in 200 ml Wasser bei 0 bis 5 °C salzsauer diazotiert, dann einer salzsauren Lösung von 23,5 g des in Beispiel 91 beschriebenen Kondensationsproduktes aus 1-Amino-8-hydroxynaphthalin-3,6-disulfonsäure und Cyanurchlorid zugesetzt. Durch Zugabe von gesättigter Natriumacetat-Lösung wurde der pH-Wert auf 4,5 eingestellt. Anschließend wurde eine Lösung von 13 g 2-[4-(Prop-2-inylsulfonyl)-phenyl]ethylamin-hydrochlorid in 300 ml Wasser/Aceton (1:1 v/v) zugegeben. Zur Vervollständigung der Reaktion wurde die Lösung 2,5 Stunden auf 40 bis 45 °C erwärmt. Der entstandene Farbstoff wurde mit Natriunmchlorid ausgesalzen und gefriergetrocknet. Er färbt Baumwolle in blaustichig rotem Ton mit guten Echtheiten und besitzt die Formel

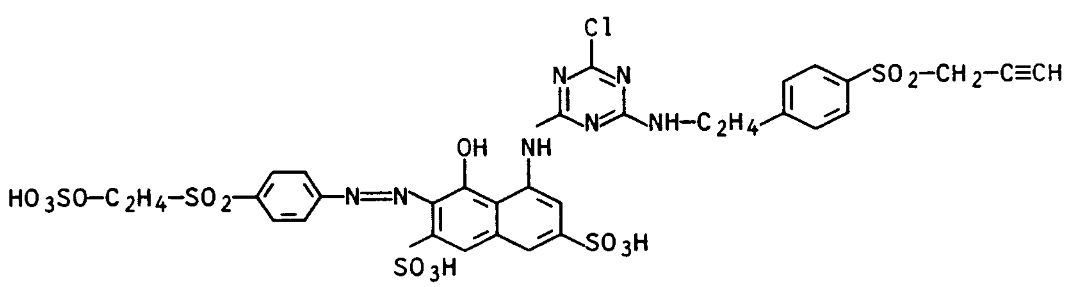

In analoger Weise werden die in Tabelle 18 aufgeführten Farbstoffe erhalten.

Tabelle 18

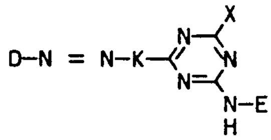

| Bsp.-Nr. | D | K | X | E | Farbton auf Baumwolle |
|---|---|---|---|---|---|
| 356 | 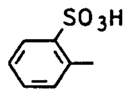 | 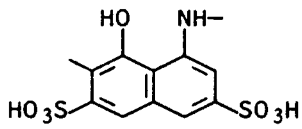 | F | E-8 | rot |
| 357 | 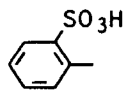 | 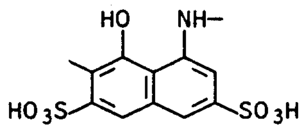 | F | E-6 | rot |
| 358 | 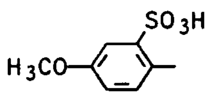 | 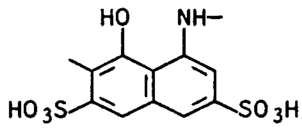 | Cl | E-6 | bordorot |
| 359 | 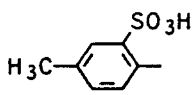 | 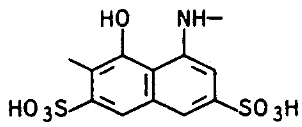 | Cl | E-6 | blaustichig rot |
| 360 | 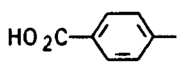 | 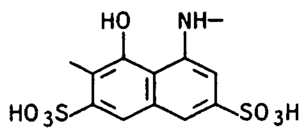 | Cl | E-6 | blaustichig rot |
| 361 | 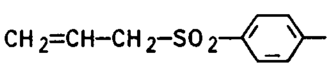 | 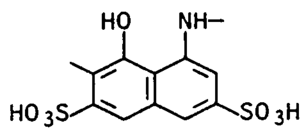 | Cl | E-6 | rot |
| 362 | 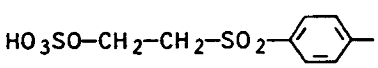 | 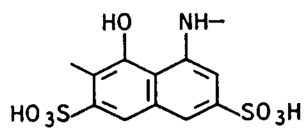 | Cl | E-8 | rot |

Fortsetzung - Tabelle 18

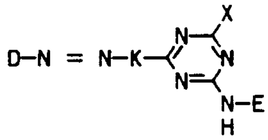

| Bsp.-Nr. | D | K | X | E | Farbton auf Baumwolle |
|---|---|---|---|---|---|
| 363 | 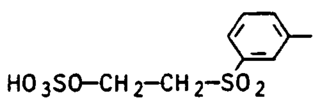 | 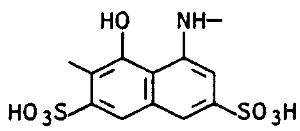 | F | E-6 | rot |
| 364 | 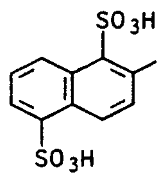 | 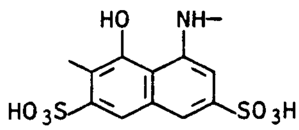 | Cl | E-8 | blaustichig rot |
| 365 | 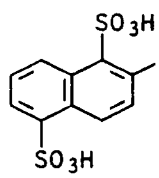 | 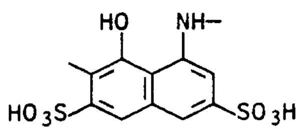 | Cl | E-10 | blaustichig rot |
| 366 | 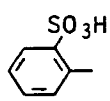 | 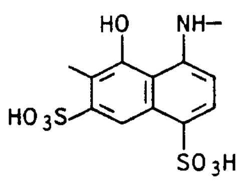 | Cl | E-6 | rot |
| 367 | 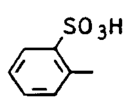 | 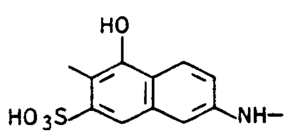 | Cl | E-6 | orange |
| 368 | 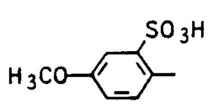 | 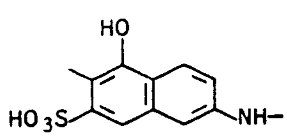 | Cl | E-6 | orange |

Fortsetzung - Tabelle 18

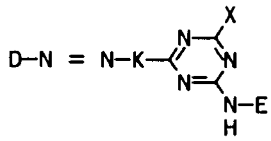

| Bsp.-Nr. | D | K | X | E | Farbton auf Baumwolle |
|---|---|---|---|---|---|
| 369 | 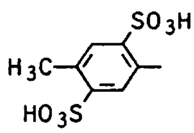 | 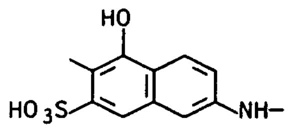 | Cl | E-6 | orange |
| 370 | 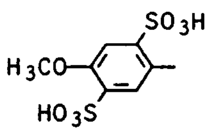 | 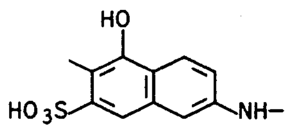 | Cl | E-6 | orange |
| 371 | 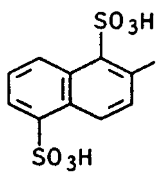 | 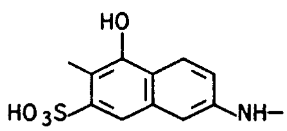 | Cl | E-6 | orange |
| 372 | 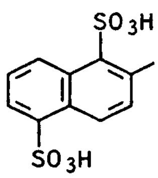 | 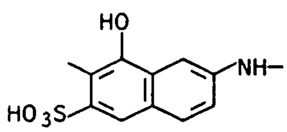 | Cl | E-6 | scharlach-rot |
| 373 | 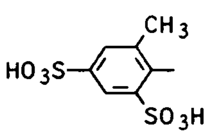 | 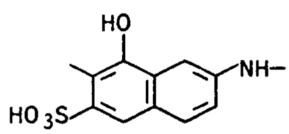 | Cl | E-6 | scharlach-rot |

Fortsetzung - Tabelle 18

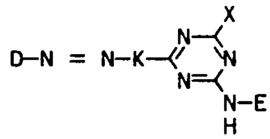

| Bsp.-Nr. | D | K | X | E | Farbton auf Baumwolle |
|---|---|---|---|---|---|
| 374 | 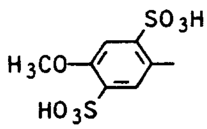 | 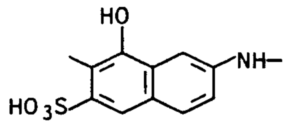 | Cl | E-6 | scharlach-rot |
| 375 | 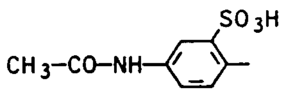 | 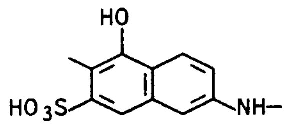 | Cl | E-6 | rot |
| 376 | 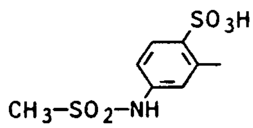 | 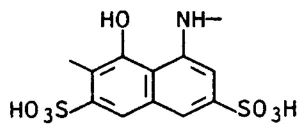 | Cl | E-6 | rot |
| 377 | 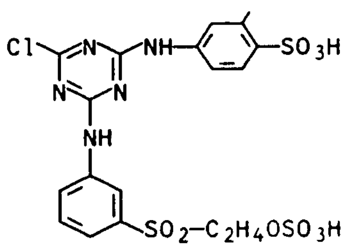 | 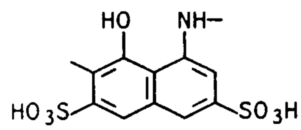 | Cl | E-6 | rot |

Fortsetzung - Tabelle 18

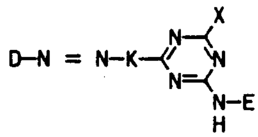

| Bsp.-Nr. | D | K | X | E | Farbton auf Baumwolle |
|---|---|---|---|---|---|
| 378 | 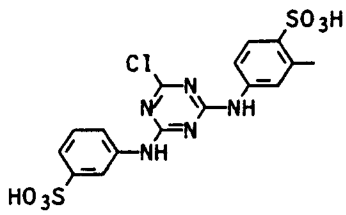 | 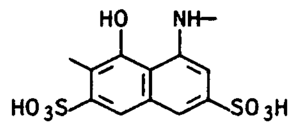 | Cl | E-6 | rot |
| 379 | 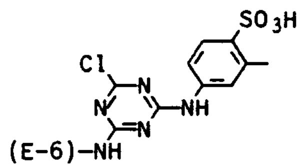 | 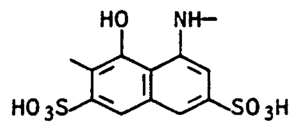 | Cl | E-6 | rot |
| 380 | 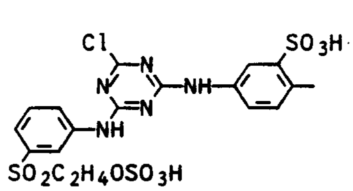 | 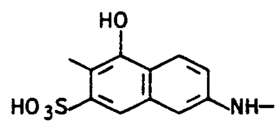 | Cl | E-6 | rot |
| 381 | 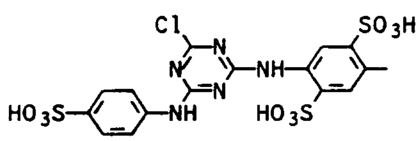 | 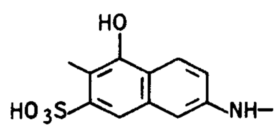 | Cl | E-6 | rot |
| 382 | 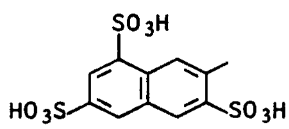 | 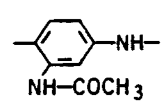 | Cl | E-6 | goldgelb |
| 383 | 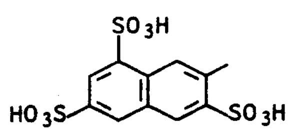 | 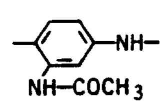 | F | E-6 | goldgelb |

Fortsetzung - Tabelle 18

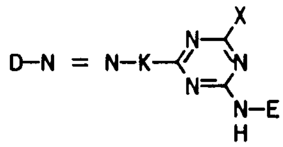

| Bsp.-Nr. | D | K | X | E | Farbton auf Baumwolle |
|---|---|---|---|---|---|
| 384 | 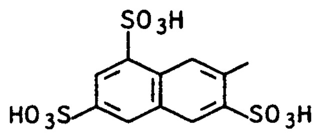 | 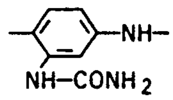 | F | E-6 | goldgelb |
| 385 | 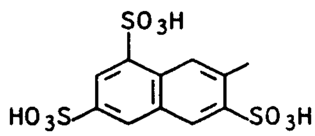 | 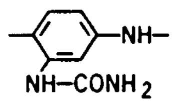 | Cl | E-10 | goldgelb |
| 386 | 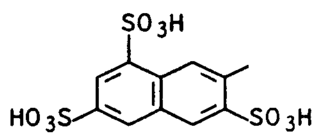 | 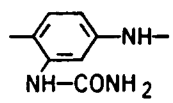 | Cl | E-8 | goldgelb |
| 387 | 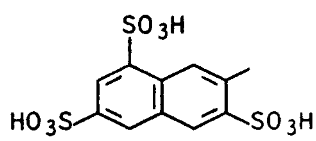 | 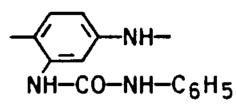 | Cl | E-6 | goldgelb |
| 388 | 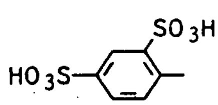 | 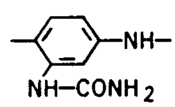 | Cl | E-6 | gelb |
| 389 | 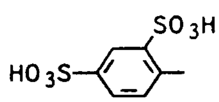 | 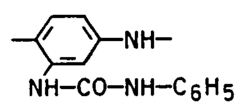 | Cl | E-6 | gelb |

Fortsetzung - Tabelle 18

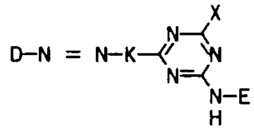

| Bsp.-Nr. | D | K | X | E | Farbton auf Baumwolle |
|---|---|---|---|---|---|
| 390 | 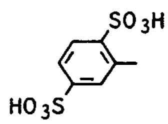 | 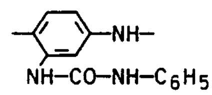 | Cl | E-6 | gelb |
| 391 | 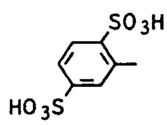 | 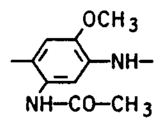 | Cl | E-6 | goldgelb |
| 392 | 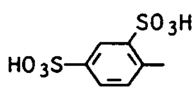 | 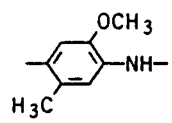 | Cl | E-6 | goldgelb |
| 393 | 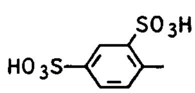 | 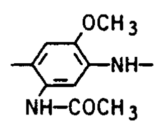 | Cl | E-6 | goldgelb |
| 394 | 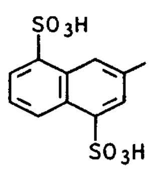 | 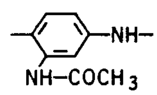 | Cl | E-6 | goldgelb |
| 395 | 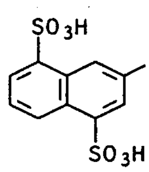 | 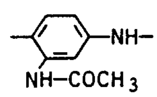 | F | E-6 | goldgelb |
| 396 | 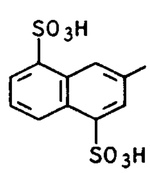 | 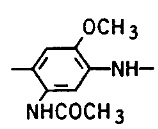 | Cl | E-9 | goldgelb |

Fortsetzung - Tabelle 18

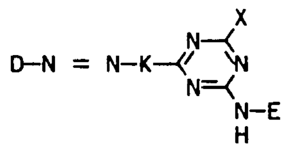

| Bsp.-Nr. | D | K | X | E | Farbton auf Baumwolle |
|---|---|---|---|---|---|
| 397 | E-6 | 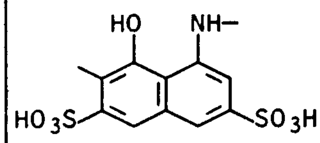 | Cl | E-7 | rot |
| 398 | E-6 | 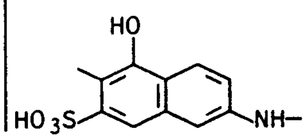 | Cl | E-6 | rot |

Beispiel 399

15,9 g 1-Amino-8-hydroxynaphthalin-3,6-disulfonsäure wurden bei 0 bis 5 °C in 210 ml 10 gew.%iger Salzsäure suspendiert und während 35 Minuten mit einer ebenfalls eisgekühlten Lösung von 12,5 g salzsauer diazotiertem 4-(2-Sulfatoethylsulfonyl)anilin versetzt. Während 14 Stunden Rühren wurde auf 25 °C erwärmt, dann bei 20 °C mit einer Lösung von 11,6 g salzsauer diazotiertem 4-(Prop-2-inylsulfonyl)-anilin-hydrochlorid versetzt. Zur Vervollständigung der Kupplung wurde der pH-Wert auf 4,5 eingestellt. Nach 1 Stunde Rühren wurde der entstandene Farbstoff mit Isopropanol gefällt und getrocknet. Er färbt Baumwolle in marineblauem Ton mit guten Echtheiten und entspricht der Formel

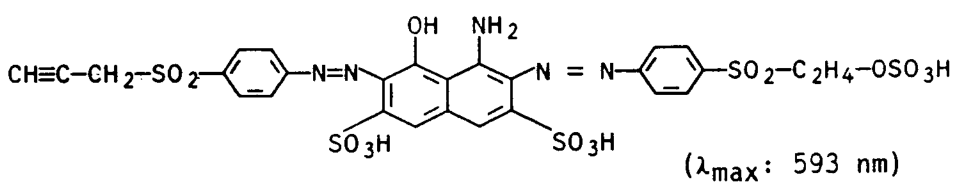

($\lambda_{max}$: 593 nm)

Beispiel 400

15,9 g 1-Amino-8-hydroxynaphthalin-3,6-disulfonsäure wurden bei 0 bis 5 °C in 210 ml 10 gew.%iger Salzsäure suspendiert und während 35 Minuten mit einer ebenfalls eisgekühlten Lösung aus 11,6 g salzsauer diazotiertem 4-(Prop-2-inylsulfonyl)anilin-hydrochlorid versetzt und bis zur vollständigen Umsetzung bei Raumtemperatur gerührt. Anschließend wurde dann bei 20 °C mit einer Lösung von 14,5 g salzsauer diazotiertem 4-(2-Sulfatoethylsulfonyl)anilin versetzt. Zur Vervollständigung der Kupplung wurde mit gesättigter Natriumacetatlösung der pH-Wert auf 4,5 gestellt. Nach 1 Stunde Rühren war die Reaktion beendet. Der entstandene Farbstoff wurde dann mit Isopropanol gefällt und getrocknet. Er färbt Baumwolle in marineblauem Ton mit guten Echtheiten und entspricht der Formel

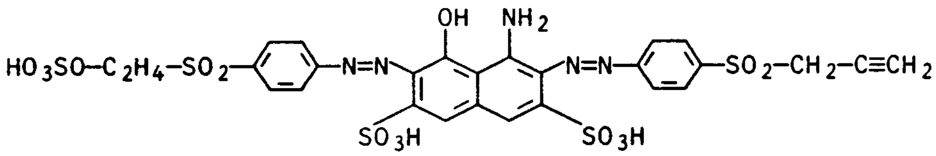

Weitere erfindungsgemäße Farbstoffe enthält Tabelle 19.

Tabelle 19

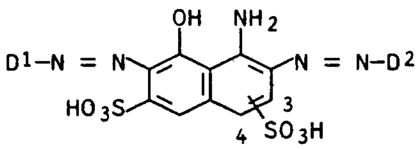

| Bsp.-Nr. | D1 | D2 | Stellung 3,4 | Farbton auf Baumwolle |
|---|---|---|---|---|
| 401 | 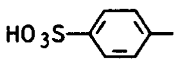 | E-6 | 3 | marineblau |
| 402 | 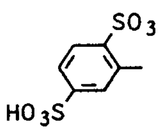 | E-7 | 3 | marineblau |
| 403 | 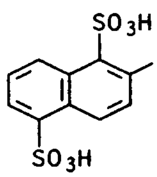 | E-6 | 4 | marineblau |
| 404 | E-6 | E-6 | 3 | marineblau |
| 405 | E-6 | E-7 | 3 | marineblau |
| 406 | E-6 | 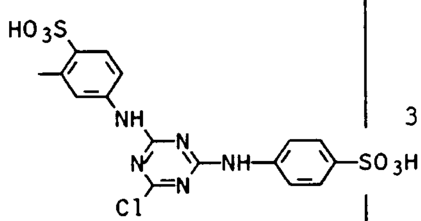 | 3 | marineblau |
| 407 | E-6 | 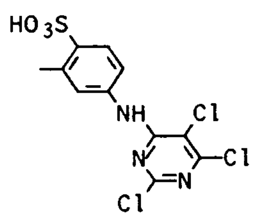 | 3 | marineblau |

Fortsetzung - Tabelle 19

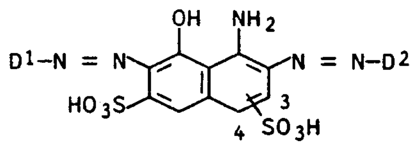

| Bsp.-Nr. | $D^1$ | $D^2$ | Stellung 3,4 | Farbton auf Baumwolle |
|---|---|---|---|---|
| 408 | E-6 | 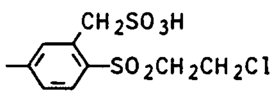 | 3 | marineblau |
| 409 | E-6 | 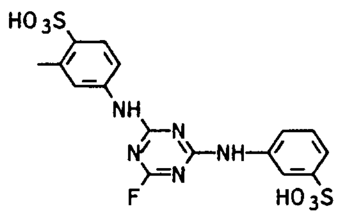 | 3 | marineblau |
| 410 | E-6 | 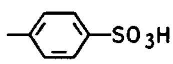 | 3 | marineblau |
| 411 | E-6 | 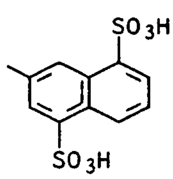 | 4 | marineblau |
| 412 | E-6 | 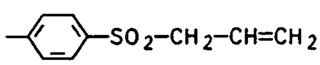 | 3 | marineblau |
| 413 | E-7 | 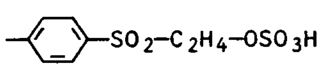 | 3 | marineblau |
| 414 | E-6 | 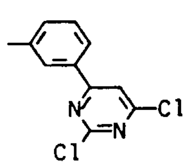 | 3 | marineblau |

Fortsetzung - Tabelle 19

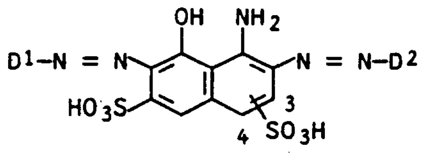

| Bsp.-Nr. | $D^1$ | $D^2$ | Stellung 3,4 | Farbton auf Baumwolle |
|---|---|---|---|---|
| 415 | E-7 | 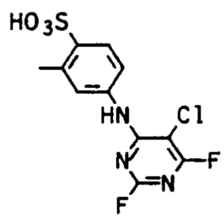 | 3 | marineblau |
| 416 | E-6 | 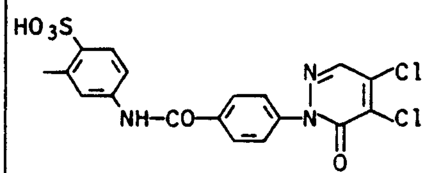 | 3 | marineblau |
| 417 | 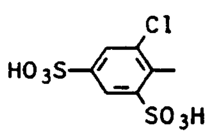 | E-6 | 3 | rotstichig marineblau |
| 418 | $CH_2=CH-CH_2O_2S-$ 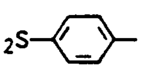 | E-6 | 3 | marineblau |
| 419 | $HO_3SOH_4C_2O_2S-$ 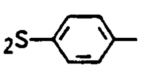 | E-7 | 3 | marineblau |
| 420 | 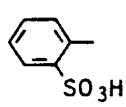 | E-6 | 3 | marineblau |
| 421 | $HO_3SOH_4C_2HNO_2S-$ 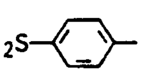 | E-6 | 3 | marineblau |

Fortsetzung - Tabelle 19

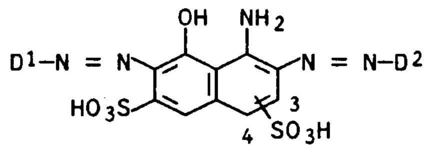

| Bsp.-Nr. | D1 | D2 | Stellung 3,4 | Farbton auf Baumwolle |
|---|---|---|---|---|
| 422 | E-6 | 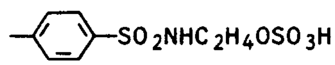 | 3 | marineblau |
| 423 | 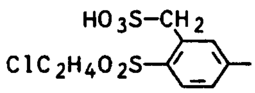 | E-6 | 3 | marineblau |

Beispiel 424

8,7 g Sulfanilsäure wurden in 250 ml Wasser salzsauer diazotiert. Man tropfte eine Suspension von 16 g 1-Amino-8-hydroxy-naphthalin-3,6-disulfonsäure in 100 ml Wasser hinzu und rührte 12 Stunden bei Raumtemperatur und einem pH-Wert von 1,5. Man kühlte auf 10 °C ab und setzte eine Diazokomponente zu, die durch salzsaure Diazotierung von 24,7 g des sekundären Kondensationsprodukts aus 4-(Prop-2-inylsulfonyl)anilin, Cyanurchlorid und 1,3-Phenylendiamin-4-sulfonsäure in 750 ml Wasser erhalten wurde.

Anschließend ließ man bei einem pH-Wert von 5,5 bis 6 durch Zugabe von Natriumhydrogencarbonat über Nacht ausreagieren. Man salzte mit Natriumchlorid aus und erhielt nach dem Trocknen einen Farbstoff der Formel

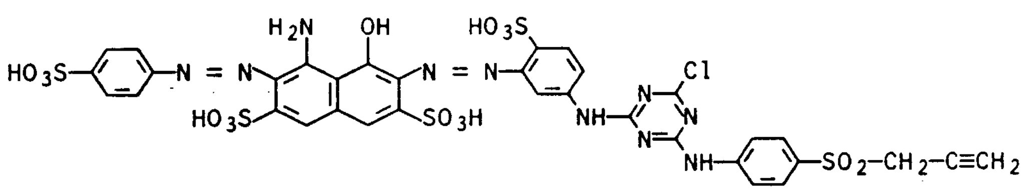

der Baumwolle in echtem, marineblauen Ton färbt.

Beispiel 425

Man ersetzte in Bsp. 424 1-Amino-8-hydroxynaphthalin-3,6-disulfonsäure durch 1-Amino-8-hydroxynaphthalin-4,6-disulfonsäure und erhielt einen Farbstoff mit ähnlichen Eigenschaften.

Tabelle 20 enthält weitere Farbstoffbeispiele, die analog Beispiel 424 erhalten werden.

Tabelle 20

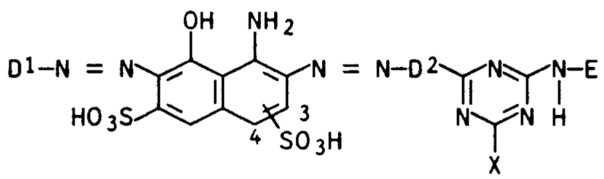

| Bsp.-Nr. | $D^1$ | Stellung 3/4 | $D^2$ | X | E | Farbton auf Baumwolle |
|---|---|---|---|---|---|---|
| 426 | 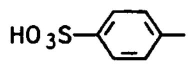 | 3 | 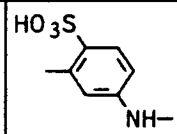 | F | E-6 | marineblau |
| 427 | 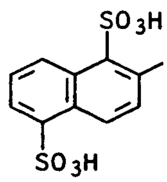 | 3 | 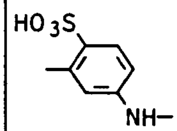 | Cl | E-6 | marineblau |
| 428 | 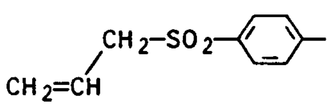 | 4 | 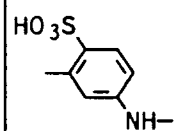 | Cl | E-6 | marineblau |
| 429 | 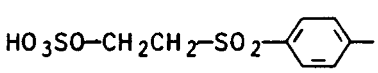 | 3 | 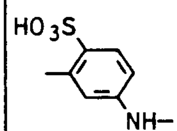 | Cl | E-7 | marineblau |
| 430 | 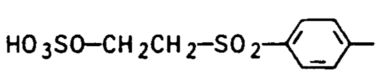 | 3 | 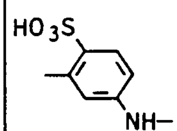 | Cl | E-9 | marineblau |
| 431 | 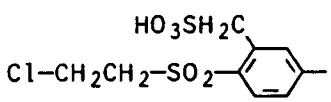 | 3 | 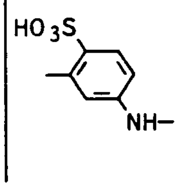 | Cl | E-6 | marineblau |

Fortsetzung - Tabelle 20

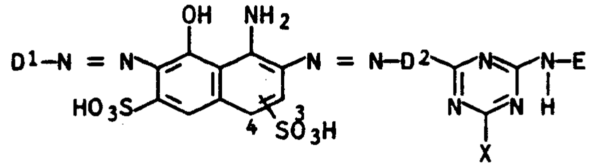

| Bsp.-Nr. | D1 | Stellung 3/4 | D2 | X | E | Farbton auf Baumwolle |
|---|---|---|---|---|---|---|
| 432 | 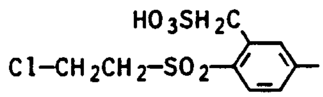 | 3 | 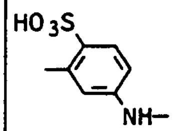 | Cl | E-7 | marineblau |
| 433 | 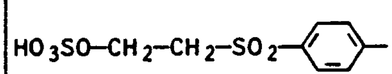 | 3 | 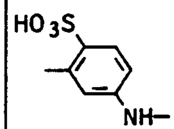 | Cl | E-6 | marineblau |
| 434 | 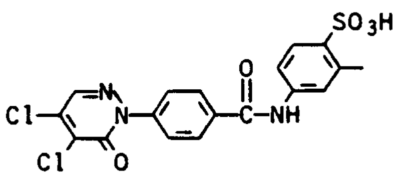 | 3 | 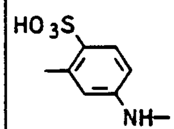 | Cl | E-6 | marineblau |
| 435 | 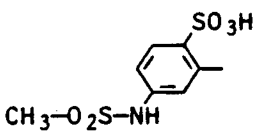 | 3 | 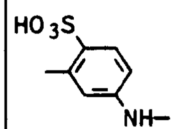 | Cl | E-6 | marineblau |
| 436 | 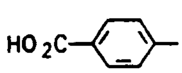 | 3 | 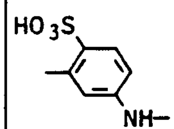 | Cl | E-6 | marineblau |
| 437 | 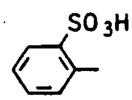 | 3 | 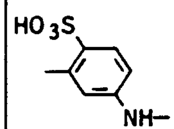 | Cl | E-6 | marineblau |
| 438 | 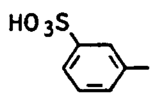 | 3 | 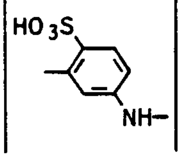 | Cl | E-6 | marineblau |

Beispiel 439

Zu der Lösung von 24,7 g des diazotierten sekundären Kondensationsproduktes von 1,3-Phenylendiamin-4-sulfonsäure, Cyanurchlorid und 4-(Prop-2-inylsulfonyl)anilin in 750 ml Wasser wurden bei 0 bis 5 °C

15,9 g 1-Amino-8-hydroxynaphthalin-3,6-disulfonsäure, suspendiert in 100 ml Wasser gegeben. Mit Natriumformiat wurde ein pH-Wert von 2,5 bis 3 gehalten. Man ließ 12 Stunden bei Raumtemperatur rühren, gab dann bei 10 °C 8,7 g salzsauer diazotierte Anilin-4-sulfonsäure, in 200 ml Wasser gelöst, hinzu und hielt den pH-Wert mit Natriumbicarbonat bei 6 bis 6,5. Nach dem Aussalzen mit Natriumchlorid erhielt man einen Farbstoff der Formel

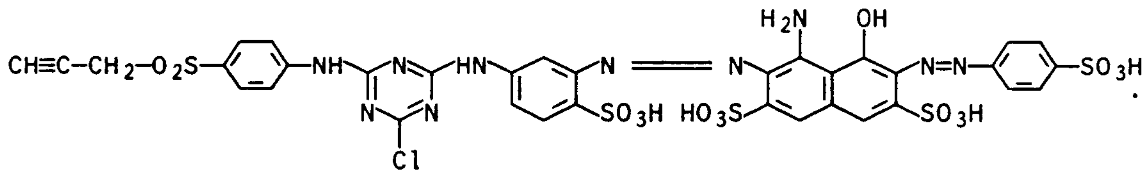

Die in Tabelle 21 aufgeführten Farbstoffe werden in analoger Weise erhalten.

Tabelle 21

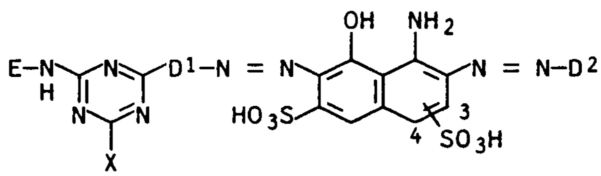

| Bsp.-Nr. | E | X | D1 | Stellung 3/4 | D2 | Farbton auf Baumwolle |
|---|---|---|---|---|---|---|
| 440 | E-6 | Cl | 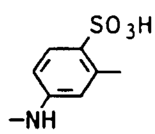 | 3 | 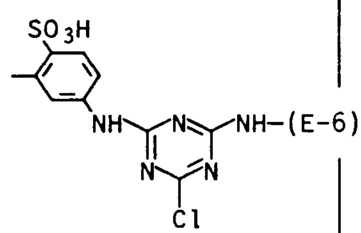 | marineblau |
| 441 | E-6 | Cl | 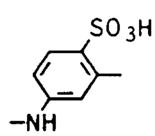 | 3 | 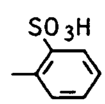 | marineblau |

Fortsetzung - Tabelle 21

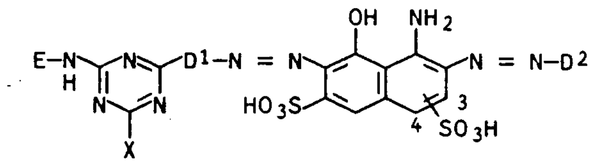

| Bsp.-Nr. | E | X | D1 | Stellung 3/4 | D2 | Farbton auf Baumwolle |
|---|---|---|---|---|---|---|
| 442 | E-11 | Cl | 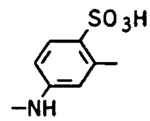 | 3 | 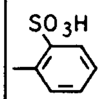 | marineblau |
| 443 | E-6 | Cl | 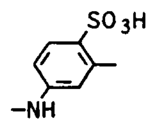 | 4 | 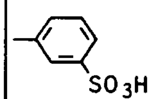 | marineblau |
| 444 | E-7 | Cl | 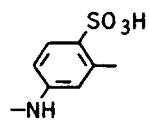 | 3 | 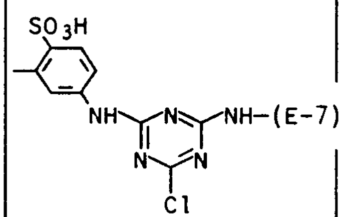 | marineblau |
| 445 | E-6 | Cl | 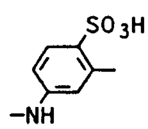 | 3 | 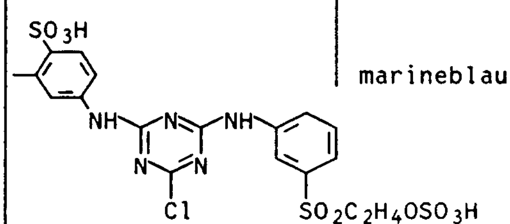 | marineblau |
| 446 | E-6 | Cl | 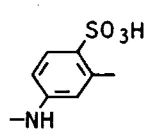 | 4 | 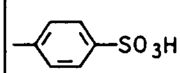 | marineblau |
| 447 | E-6 | Cl | 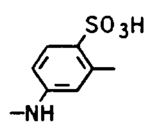 | 3 | 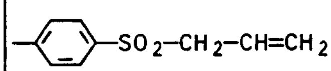 | marineblau |

Fortsetzung - Tabelle 21

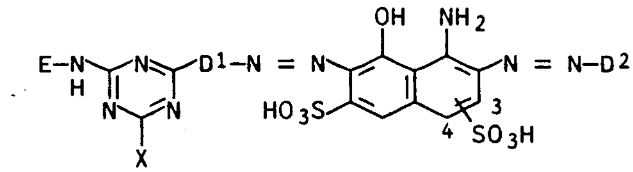

| Bsp.-Nr. | E | X | D1 | Stellung 3/4 | D2 | Farbton auf Baumwolle |
|---|---|---|---|---|---|---|
| 448 | E-6 | Cl | 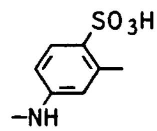 | 4 | 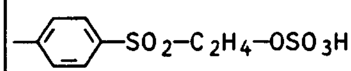 | marineblau |
| 449 | E-6 | Cl | 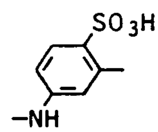 | 3 | 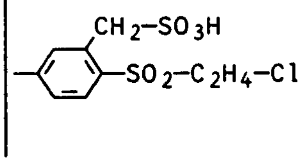 | marineblau |

Beispiel 450

38,6 g des bekannten Farbstoffs der Formel

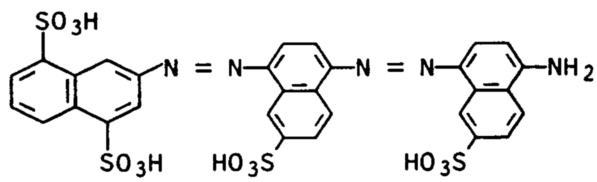

wurden bei einem pH-Wert von 7 in 400 ml Wasser bei 40 °C vorgelegt und mit 15,4 g des wie in Beispiel 308 hergestellten primären Kondensationsproduktes aus Cyanurchlorid und 4-(Prop-2-inylsulfonyl)anilin-hydrochlorid in 500 ml Wasser versetzt. Man rührte bei 40 °C und einem pH-Wert von 5 bis 6 bis dünnschichtchromatographisch keine freien Aminogruppen mehr nachweisbar waren. Der nach Aussalzen mit Kaliumchlorid erhaltene Farbstoff entspricht der Formel

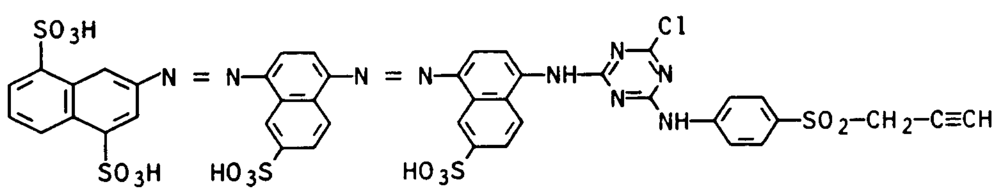

und färbt Baumwolle in rotbraunem Ton.

Tabelle 22 enthält Farbstoffe, die auf analoge Weise erhalten werden.

Tabelle 22

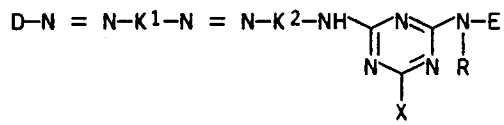

| Bsp.-Nr. | D | $K^1$ | $K^2$ | R | X | E | Farbton auf Baumwolle |
|---|---|---|---|---|---|---|---|
| 451 | 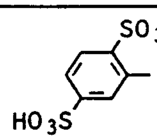 | 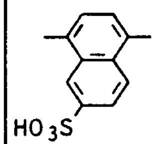 | 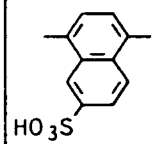 | H | Cl | E-6 | rotstichig braun |
| 452 | 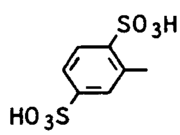 | 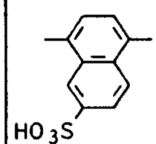 | 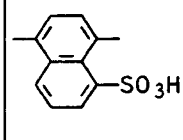 | H | Cl | E-6 | rotstichig braun |
| 453 | 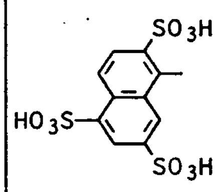 | 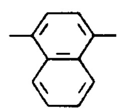 | 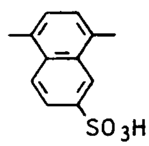 | H | Cl | E-6 | rotstichig braun |
| 454 | 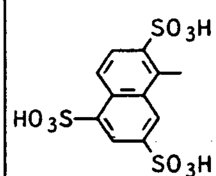 | 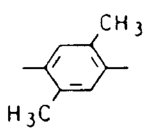 | 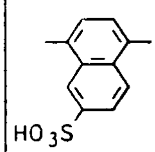 | H | Cl | E-6 | gelbstichig braun |
| 455 | 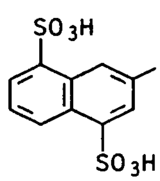 | 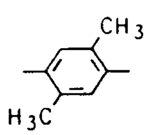 | 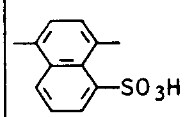 | H | Cl | E-7 | gelbstichig braun |

Fortsetzung - Tabelle 22

| Bsp.-Nr. | D | $K^1$ | $K^2$ | R | X | E | Farbton auf Baumwolle |
|---|---|---|---|---|---|---|---|
| 456 | 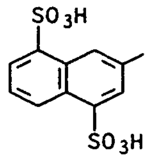 | 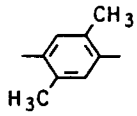 | 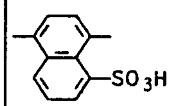 | $CH_3$ | Cl | E-6 | gelbstichig braun |
| 457 | 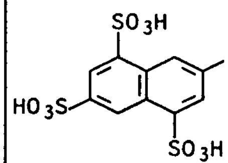 | 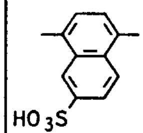 | 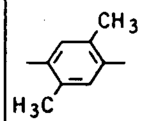 | H | F | E-6 | gelbstichig braun |
| 458 | 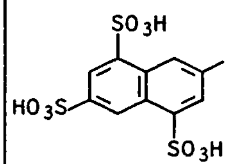 | 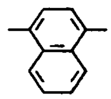 | 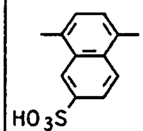 | H | Cl | E-6 | rotstichig braun |
| 459 | E-6 | 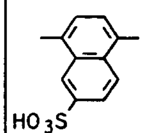 | 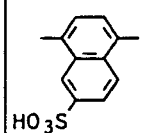 | H | Cl | 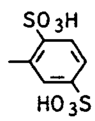 | rotbraun |
| 460 | 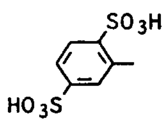 | 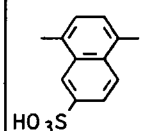 | 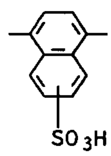 | H | Cl | E-6 | rotbraun |
| 461 | 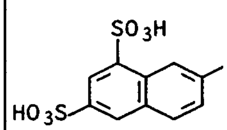 | 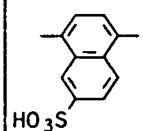 | 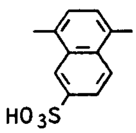 | H | Cl | E-6 | rotbraun |
| 462 | 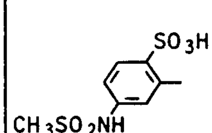 | 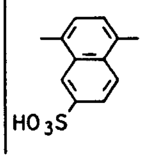 | 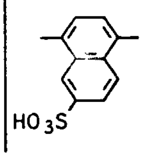 | H | Cl | E-6 | rotbraun |

Beispiel 463

43,4 g 88 %ige 1-Amino-4-bromanthrachinon-2-sulfonsäure, 23,2 g des Hydrochlorids der Formel

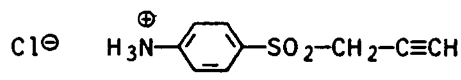

1,5 g Cu-Pulver, 0,75 g Cu-II-Sulfat und 50,4 g Natriumhydrogencarbonat wurden 48 Stunden auf 65 bis 70 °C erhitzt. Nach vollständigem Umsatz (Dünnschichtchromatographie) wurde heiß filtriert und das Filtrat mit konz. Salzsäure auf einen pH-Wert von 1 gestellt. Der ölige Rückstand wurde bei 0 bis 5 °C durch Ausrühren mit 100 ml Ethanol kristallisiert, das kristalline Produkt isoliert, mit Ethanol gewaschen und getrocknet. Man erhielt eine Verbindung der Formel

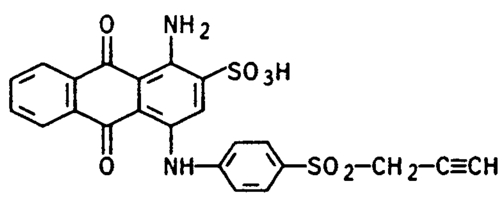

In analoger Weise werden die in Tabelle 23 aufgeführten Verbindungen der Formel

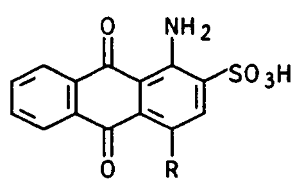

erhalten.

Tabelle 23

| Bsp.-Nr. | R |
|---|---|
| 464 | 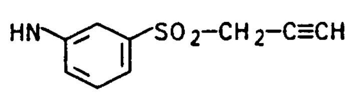 |
| 465 | 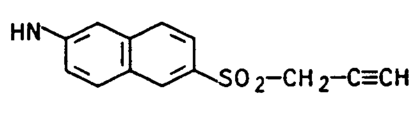 |

Beispiel 466

24,1 g 1-Amino-4-(3-amino-4-hydroxysulfonylphenylamino)-2-hydroxysulfonylanthrachinon wurden in 1000 ml Wasser eingerührt, wobei mit Natronlauge ein pH-Wert von 6,5 eingestellt wurde. In diese Lösung wurde bei 0 bis 5 °C eine Suspension aus 9,2 g Cyanurchlorid in 100 g Eiswasser eingetragen. Unter Aufrechterhaltung von pH 6 wurde bei 0 bis 5 °C gerührt bis die Umsetzung beendet war, was etwa 2 Stunden in Anspruch nahm.

Nach der Zugabe von 11,6 g 3-(Prop-2-inylsulfonyl)anilin-hydrochlorid in 50 ml Wasser wurde die Temperatur auf 40 ° C erhöht und 2 Stunden bei dieser Temperatur gerührt.

Nach dem Abkühlen auf Raumtemperatur wurde mit 150 g Kochsalz ausgesalzen, der ausgefallene Farbstoff abgesaugt und getrocknet.

Er färbt Baumwolle in blauem Ton mit guten Echtheiten und entspricht der Formel

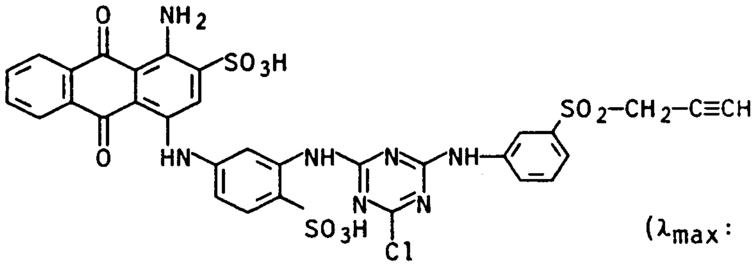

($\lambda_{max}$: 604 nm)

Beispiel 467

Einen weiteren Farbstoff mit ähnlichen Eigenschaften erhielt man, als man anstelle von 3-(Prop-2-inylsulfonyl)anilin-hydrochlorid 11,6 g 4-(Prop-2-inylsulfonyl)anilin-hydrochlorid verwendete.

Er entspricht der Formel

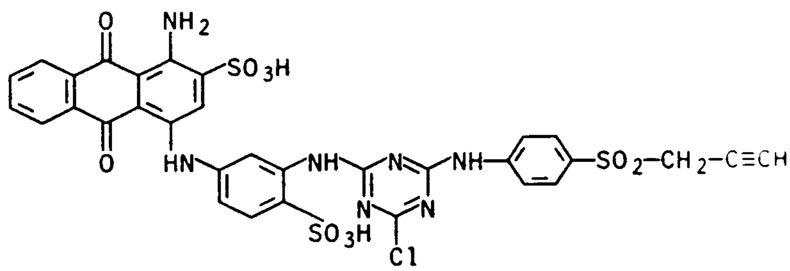

In analoger Weise werden die in der folgenden Tabelle 24 aufgeführten Verbindungen der Formel

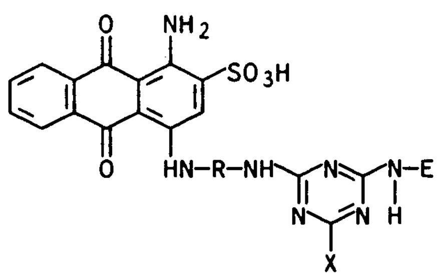

erhalten.

Tabelle 24

| Bsp.-Nr. | R | X | E |
|---|---|---|---|
| 468 | 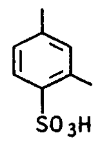 | Cl | E-7 |
| 469 | 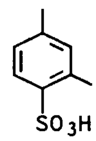 | F | E-6 |
| 470 | 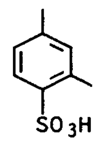 | F | E-8 |
| 471 | 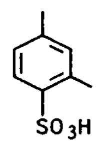 | Cl | E-9 |
| 472 | 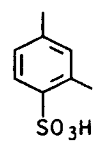 | Cl | E-10 |
| 473 | 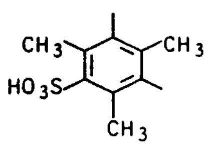 | Cl | E-6 |
| 474 | 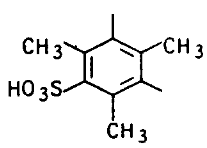 | Cl | E-11 |
| 475 | 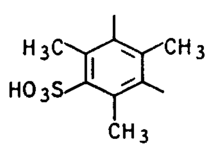 | F | E-8 |
| 476 | 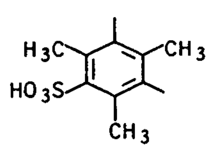 | Cl | E-7 |

Beispiel 477

64,8 g des bekannten Chromophors der Formel

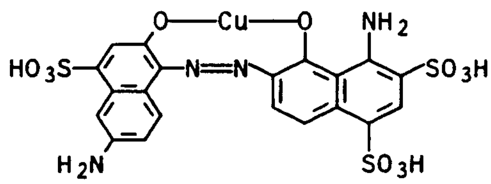

wurden in 700 ml Wasser angerührt. Bei einem pH-Wert von 5,5 bis 6 und 40 °C setzte man über 2 Stunden 30,7 g des in Beispiel 308 beschriebenen primären Kondensationsproduktes aus Cyanurchlorid und 4-(Prop-2-inylsulfonyl)anilin-hydrochlorid, gelöst in 600 ml Wasser und 200 ml Aceton, hinzu und hielt weitere 30 Minuten bei einem pH-Wert von 5,5 bis 6 und 40 bis 45 °C. Nach beendeter Umsetzung wurde mit Natriumchlorid ausgesalzen, abfiltriert und unter vermindertem Druck getrocknet. Der resultierende Farbstoff entspricht der Formel

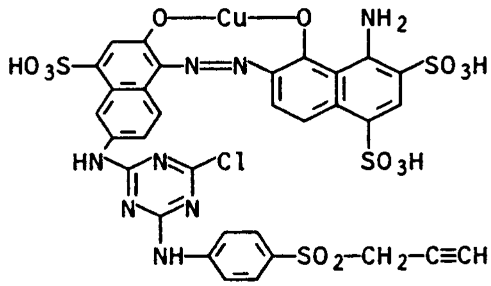

und färbt Baumwolle in echtem blauen Ton.

Analog Beispiel 477 können, ausgehend von bekannten Chromophoren, die folgenden Kupfer- und Nickel-Phthalocyanin- und Kupfer-Formazanfarbstoffe synthetisiert werden.

Tabelle 25

| Bsp. Nr. | Farbstoff | Farbe auf Baumwolle |
|---|---|---|
| 478 | 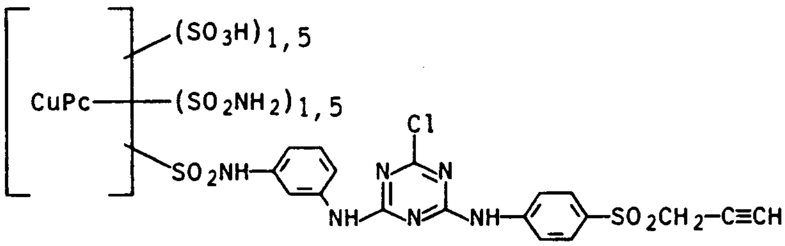 | türkis |
| 479 | 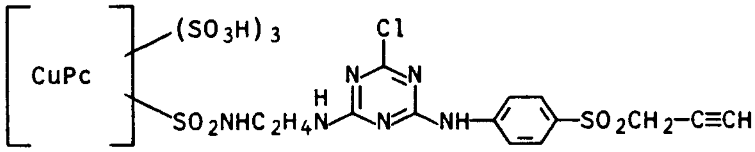 | türkis |
| 480 | 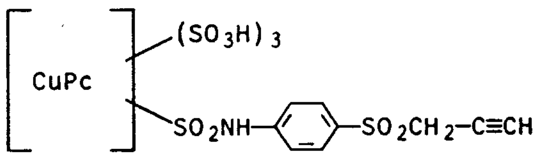 | türkis |

Fortsetzung - Tabelle 25

| Bsp. Nr. | Farbstoff | Farbe auf Baumwolle |
| --- | --- | --- |
| 481 | 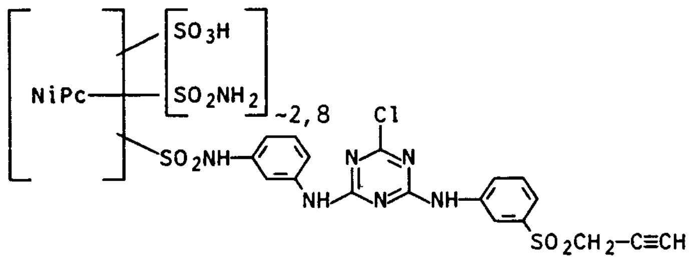 | grünstichig türkis |
| 482 | 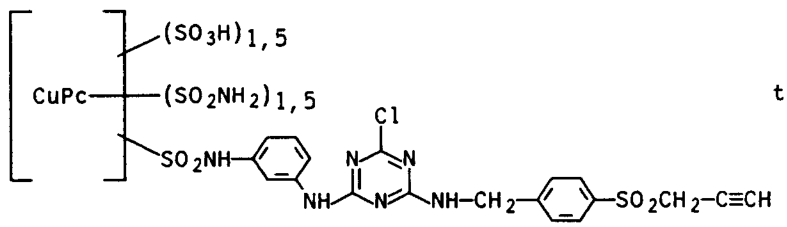 | türkis |
| 483 | 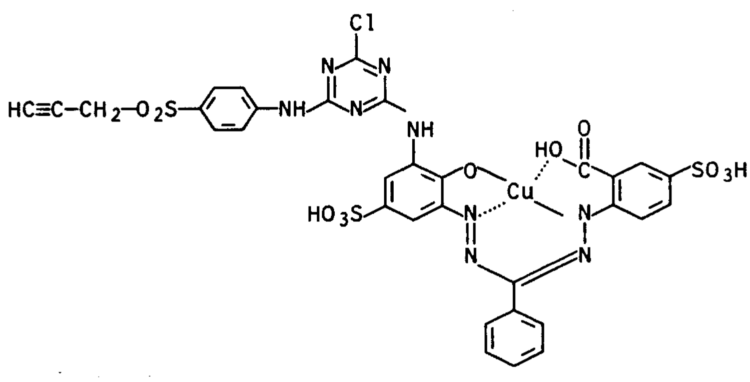 | blau |
| 484 | 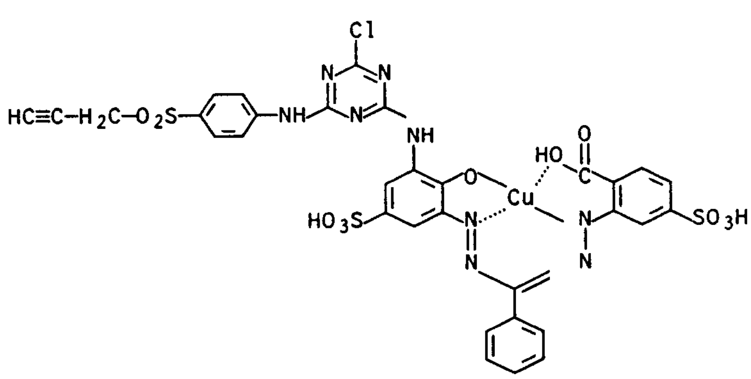 | blau |

Fortsetzung - Tabelle 25

| Bsp. Nr. | Farbstoff | Farbe auf Baumwolle |
|---|---|---|
| 485 | 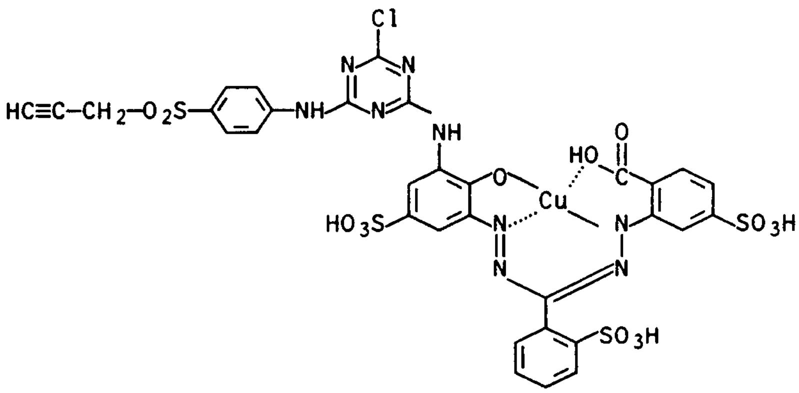 | blau |
| 486 | 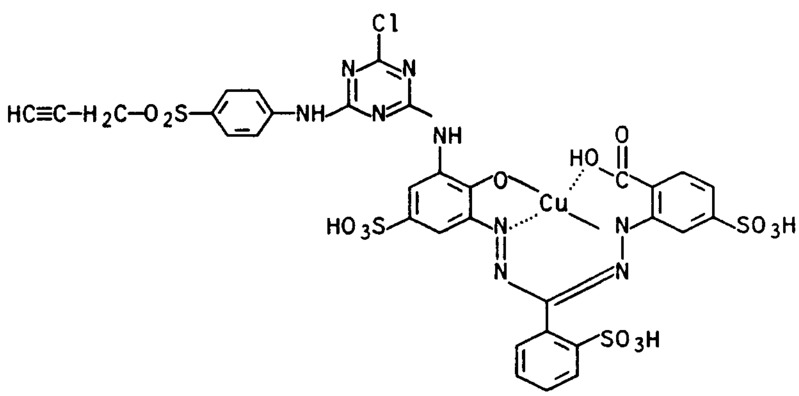 | blau |

Beispiel 487

19,1 g der Verbindung der Formel

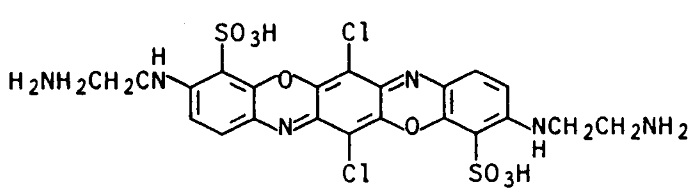

wurden in 1000 g Wasser eingerührt, wobei mit Natronlauge ein pH-Wert von 10 eingestellt wurde. Diese Lösung wurde in eine 40 bis 50 °C warme, auf pH 6 bis 8 gestellte Lösung des Kondensationsproduktes aus 11,1 g Cyanurchlorid mit 13,9 g 3-(Prop-2-inylsulfonyl)anilin-hydrochlorid getropft. Unter Aufrechterhaltung eines pH-Wertes von 6,5 bis 7 wurde bei 60 °C gerührt bis die Umsetzung beendet war, was etwa 2 Stunden in Anspruch nahm. Nach dem Abkühlen auf Raumtemperatur wurde mit 500 g Kochsalz ausgesalzen, der ausgefallene Farbstoff abgesaugt und getrocknet. Er färbt Baumwolle in brillantem blauen Ton mit guten Echtheiten und entspricht der Formel

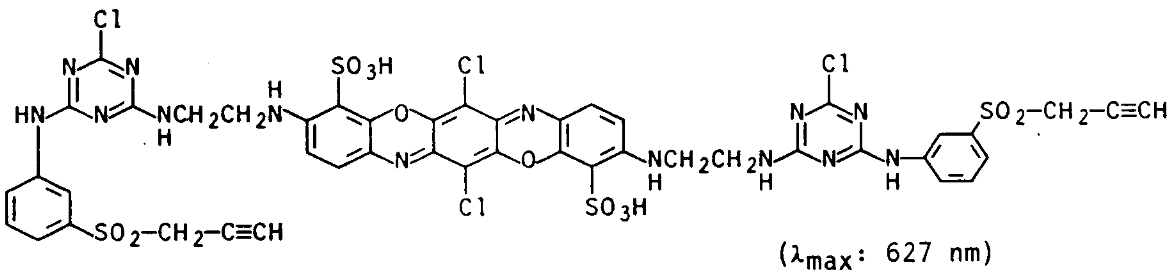

($\lambda_{max}$: 627 nm)

Weitere Farbstoffe, die in analoger Weise erhalten werden, sind in Tabelle 26 aufgeführt.

Tabelle 26

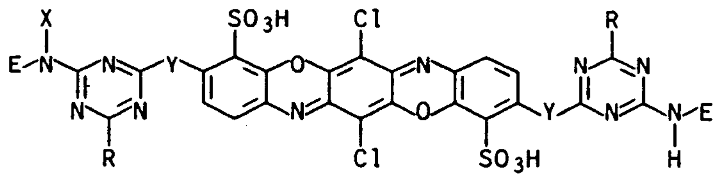

| Bsp.-Nr. | Y | R | E | Farbton auf Baumwolle |
|---|---|---|---|---|
| 488 | 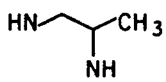 | Cl | E-6 | blau |
| 489 | 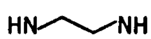 | F | E-6 | blau |
| 490 | 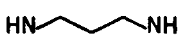 | Cl | E-6 | blau |
| 491 | 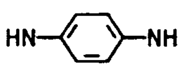 | Cl | E-6 | blau |
| 492 | 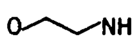 | Cl | E-6 | rot |
| 493 | 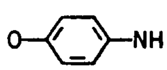 | Cl | E-6 | rot |
| 494 | 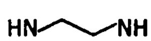 | Cl | E-7 | blau |
| 495 | 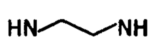 | F | E-6 | blau |
| 496 | 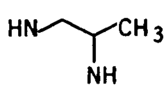 | Cl | E-7 | blau |

Fortsetzung - Tabelle 26

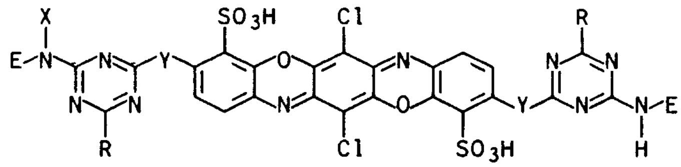

| Bsp.-Nr. | Y | R | E | Farbton auf Baumwolle |
|---|---|---|---|---|
| 497 | 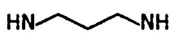 | Cl | E-7 | blau |
| 498 | 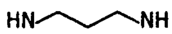 | Cl | E-11 | blau |
| 499 | 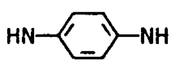 | Cl | E-7 | blau |
| 500 | 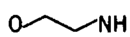 | Cl | E-7 | rot |
| 501 | 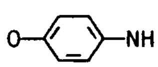 | Cl | E-7 | rot |
| 502 | 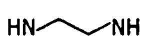 | Cl | E-8 | blau |
| 503 | 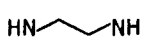 | F | E-8 | blau |
| 504 | 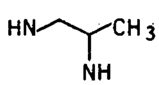 | Cl | E-8 | blau |
| 505 | 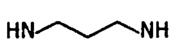 | Cl | E-8 | blau |
| 506 | 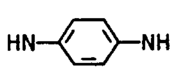 | Cl | E-8 | blau |

## Patentansprüche

1. Reaktivfarbstoffe der Formel I

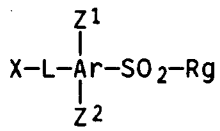

(I),

in der

| | |
|---|---|
| Rg | die Bedeutung eines Restes der Formel |

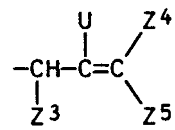

oder

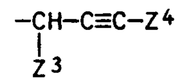

| | |
|---|---|
| | besitzt und |
| Ar | den Rest eines Benzol- oder Naphthalinringes, |
| $Z^1$ und $Z^2$ | gleich oder verschieden sind und unabhängig voneinander jeweils Wasserstoff, gegebenenfalls durch Amino oder $C_1$-$C_4$-Alkanoylamino substituiertes $C_1$-$C_4$-Alkyl, gegebenenfalls substituiertes Phenyl, $C_1$-$C_4$-Alkoxy, Carboxyl, $C_1$-$C_4$-Alkoxycarbonyl, Cyano, Halogen oder Hydroxysulfonyl, |
| $Z^3$, $Z^4$ und $Z^5$ | gleich oder verschieden sind und unabhängig voneinander jeweils Wasserstoff, gegebenenfalls durch Hydroxy oder $C_1$-$C_4$-Alkoxy substituiertes $C_1$-$C_4$-Alkyl oder gegebenenfalls substituiertes Phenyl, |
| U | eine unter alkalischen Reaktionsbedingungen abspaltbare Gruppe, |
| X | im Fall a) den Rest eines Chromophors, der gegebenenfalls weitere reaktive Gruppen aufweist und der sich von einem gegebenenfalls metallisierten Mono- oder Disazofarbstoff, einem Triphendioxazin, einem Anthrachinon, einem metallisierten Formazan oder einem metallisierten Phthalocyanin ableitet, oder im Fall b) den Rest einer Kupplungskomponente, an den gegebenenfalls zusätzlich der Rest einer Diazokomponente über eine Azobrücke gebunden ist und der gegebenenfalls zusätzliche reaktive Gruppen aufweist, und |
| L | im Fall a) ein Brückenglied der Formel |

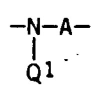

oder

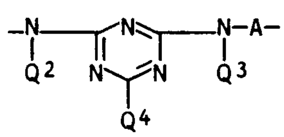

,

worin $Q^1$ für Wasserstoff oder $C_1$-$C_4$-Alkyl, $Q^2$ und $Q^3$ gleich oder verschieden sind und unabhängig voneinander jeweils für Wasserstoff oder $C_1$-$C_4$-Alkyl, $Q^4$ für eine Austrittsgruppe und A für eine chemische Bindung oder $C_1$-$C_4$-Alkylen stehen, oder

im Fall b) eine Azobrücke bedeuten.

2. Reaktivfarbstoffe nach Anspruch 1, die der Formel Ia

X-L-$E^1$ (Ia)

entsprechen, in der X und L jeweils die in Anspruch 1 genannte Bedeutung besitzen und $E^1$ für einen Rest der Formel IIa

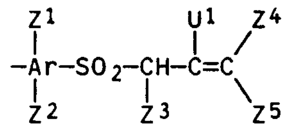

(IIa)

steht, in der $U^1$ Halogen bedeutet und Ar, $Z^1$, $Z^2$, $Z^3$, $Z^4$ und $Z^5$ jeweils die in Anspruch 1 genannte Bedeutung besitzen.

3. Reaktivfarbstoffe nach Anspruch 1, die der Formel Ia

X-L-$E^1$ (Ia)

entsprechen, in der X und L jeweils die in Anspruch 1 genannte Bedeutung besitzen und $E^1$ für einen Rest der Formel IIb

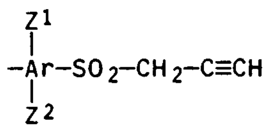

(IIb)

steht, in der Ar, $Z^1$ und $Z^2$ jeweils die in Anspruch 1 genannte Bedeutung besitzen.

4. Reaktivfarbstoffe nach Anspruch 1, die der Formel Ia

X-L-$E^1$ (Ia)

entsprechen, in der X und L jeweils die in Anspruch 1 genannte Bedeutung besitzen und $E^1$ für einen Rest der Formel IIc

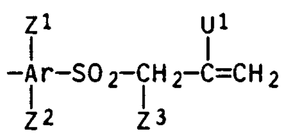

(IIc)

steht, in der $U^1$ Halogen bedeutet und Ar, $Z^1$, $Z^2$ und $Z^3$ jeweils die in Anspruch 1 genannte Bedeutung besitzen.

5. Verwendung der Reaktivfarbstoffe gemäß Anspruch 1 zum Färben oder Bedrucken von Hydroxygruppen oder Stickstoff enthaltenden Substraten.

**Claims**

1. A reactive dye of the formula I

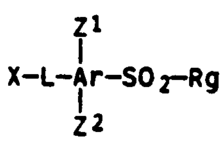

(I)

where

Rg is a radical of the formula

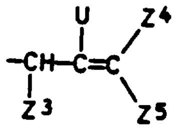 or 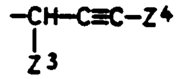 ,

Ar is the radical of a benzene or naphthalene ring,

$Z^1$ and $Z^2$ are identical or different and each is independently of the other hydrogen, unsubstituted or amino- or $C_1$-$C_4$-alkanoylamino-substituted $C_1$-$C_4$-alkyl, substituted or unsubstituted phenyl, $C_1$-$C_4$-alkoxy, carboxyl, $C_1$-$C_4$-alkoxycarbonyl, cyano, halogen or hydroxysulfonyl,

$Z^3$, $Z^4$ and $Z^5$ are identical or different and each is independently of the others hydrogen, unsubstituted or hydroxyl- or $C_1$-$C_4$-alkoxy-substituted $C_1$-$C_4$-alkyl or substituted or unsubstituted phenyl,

U is a group which is detachable under alkaline reaction conditions,

X is in case a) the radical of a chromophore with or without further reactive groups which is derived from a metallized or nonmetallized monoazo or disazo dye, a triphendioxazine, an anthraquinone, a metallized formazan or a metallized phthalocyanine, or in case b) the radical of a coupling component to which may additionally be attached, via an azo bridge, the radical of a diazo component and which may have additional reactive groups, and

L is in case a) a bridge member of the formula

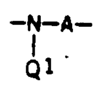 or 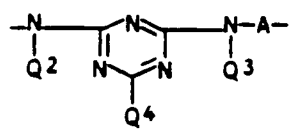 ,

where $Q^1$ is hydrogen or $C_1$-$C_4$-alkyl, $Q^2$ and $Q^3$ are identical or different and each is independently of the other hydrogen or $C_1$-$C_4$-alkyl, $Q^4$ is a leaving group, and A is a chemical bond or $C_1$-$C_4$-alkylene, or in case b) an azo bridge.

**2.** A reactive dye as claimed in claim 1 of the formula Ia

X-L-$E^1$ (Ia)

where X and L are each as defined in claim 1 and $E^1$ is a radical of the formula IIa

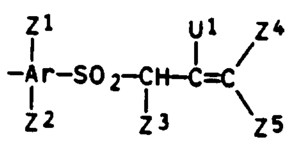 (IIa)

where $U^1$ is halogen and Ar, $Z^1$, $Z^2$, $Z^3$, $Z^4$ and $Z^5$ are each as defined in claim 1.

**3.** A reactive dye as claimed in claim 1 of the formula Ia

X-L-$E^1$ (Ia)

where X and L are each as defined in claim 1 and $E^1$ is a radical of the formula IIb

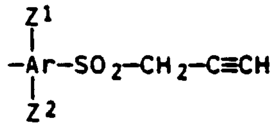

(IIb)

where Ar, $Z^1$ and $Z^2$ are each as defined in claim 1.

**4.** A reactive dye as claimed in claim 1 which conforms to the formula Ia

X-L-$E^1$ (Ia)

where X and L are each as defined in claim 1 and $E^1$ is a radical of the formula IIc

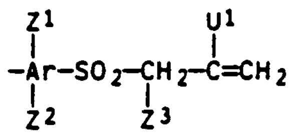

(IIc)

where $U^1$ is halogen and Ar, $Z^1$, $Z^2$ and $Z^3$ are each as defined in claim 1.

**5.** The use of a reactive dye as claimed in claim 1 for dyeing or printing hydroxyl- or nitrogen-containing substrates.

**Revendications**

**1.** Colorants reactifs de formule I

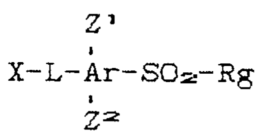

(I)

dans laquelle

| | |
|---|---|
| Rg | represente un reste de formule |

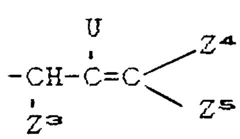

ou

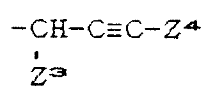

| | |
|---|---|
| | et |
| Ar | représente le reste d'un noyau benzénique ou naphtalénique, |
| $Z^1$ et $Z^2$ | sont identiques ou différents et représentent chacun, indépendamment l'un de l'autre, un atome d'hydrogène, un reste alkyle en $C_1$-$C_4$ eventuellement substitué par un groupement amino ou (alcanoyl en $C_1$-$C_4$)amino, un reste phényle éventuellement substitué, alcoxy en $C_1$-$C_4$, carboxyle, (alcoxy en $C_1$-$C_4$)carbonyle, cyano, un atome d'halogène ou un reste hydroxysulfonyle, |
| $Z^3$, $Z^4$ et $Z^5$ | sont identiques ou différents et représentent chacun, indépendamment les uns des autres, un atome d'hydrogène, un reste alkyle en $C_1$-$C_4$ éventuellement substitué par un groupement hydroxy ou alcoxy en $C_1$-$C_4$, ou un reste phényle éventuellement substitué, |

U représente un groupement éliminable dans des conditions réactionnelles alcalines,

X représente, dans le cas a), le reste d'un chromophore qui comporte éventuellement d'autres groupements réactifs et qui dérive d'un colorant mono- ou disazoïque éventuellement métallisé, d'une triphénodioxazine, d'une anthraquinone, d'un formazan métallisé ou d'une phtalocyanine métallisée, ou dans le cas b), le reste d'un composant de copulation auquel est éventuellement fixé en plus, par un pont azoïque, le reste d'un composant de diazoïque et qui comporte éventuellement des groupements réactifs supplémentaires, et

L représente, dans le cas a), un chaînon de pontage de formule

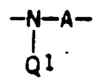 ou 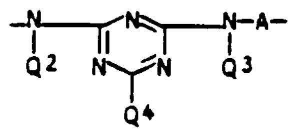 ,

dans laquelle $Q^1$ est mis pour un atome d'hydrogène ou un reste alkyle en $C_1$-$C_4$, $Q^2$ et $Q^3$ sont identiques ou différents et sont mis chacun, indépendamment l'un de l'autre, pour un atome d'hydrogéne ou un reste alkyle en $C_1$-$C_4$, $Q^4$ est mis pour un groupement éliminable et A est mis pour une liaison chimique ou pour un reste alkylène en $C_1$-$C_4$, ou dans le cas b), un pont azoïque.

**2.** Colorants réactifs selon la revendication 1, qui répondent à la formule Ia

$X$-$L$-$E^1$ (Ia)

dans laquelle X et L ont chacun la même signification que dans la revendication 1 et $E^1$ est mis pour un reste de formule IIa

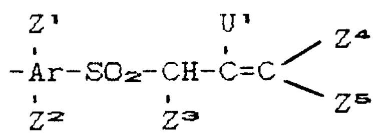 (IIa)

dans laquelle $U^1$ représente un atome d'halogène et Ar, $Z^1$, $Z^2$, $Z^3$, $Z^4$ et $Z^5$ ont chacun la même signification que dans la revendication 1.

**3.** Colorants réactifs selon la revendication 1, qui répondent à la formule Ia

$X$-$L$-$E^1$ (Ia)

dans laquelle X et L ont chacun la même signification que dans la revendication 1 et $E^1$ est mis pour un reste de formule IIb

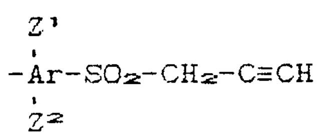 (IIb)

dans laquelle Ar, $Z^1$ et $Z^2$ ont chacun la même signification que dans la revendication 1.

**4.** Colorants réactifs selon la revendication 1, qui répondent à la formule Ia

$X$-$L$-$E^1$ (Ia)

dans laquelle X et L ont chacun la même signification que dans la revendication 1 et $E^1$ est mis pour un reste de formule IIc

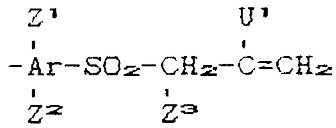

(IIc)

dans laquelle $U^1$ représente un atome d'halogène et Ar, $Z^1$, $Z^2$ et $Z^3$ ont chacun la même signification que dans la revendicaton 1.

**5.** Utilisation des colorants réactifs selon la revendication 1 pour la teinture ou l'impression de substrats contenant des groupements hydroxy ou de l'azote.